# EUROPÄISCHE PATENTSCHRIFT

(11) **EP 4 548 329 B1**
(45) Veröffentlichungstag und Bekanntmachung des Hinweises auf die Patenterteilung: **28.10.2026**
(21) Anmeldenummer: 23741591.4
(22) Anmeldetag: 26.06.2023
(51) Int. Cl.: G09B 9/00, G09B 9/06, G09B 9/14

(54) **SIMULATIONSSYSTEM ZUM TRAINIEREN VON BESATZUNGSMITGLIEDERN EINES MILITÄRISCHEN WASSERFAHRZEUGS**
SIMULATION SYSTEM FOR CREW TRAINING OF MILITARY WATERCRAFT
SYSTÈME DE SIMULATION POUR L'ENTRAÎNEMENT DE MEMBRES DE L'ÉQUIPAGE D'UN NAVIRE MILITAIRE

(30) Priorität: 28.06.2022 DE 102022206536
(43) Veröffentlichungstag der Anmeldung: 07.05.2025
(73) Patentinhaber: TKMS GmbH, 24143 Kiel (DE); thyssenkrupp AG, 45143 Essen (DE)
(72) Erfinder: SCHLENGER, Johannes, 25337 Kölln-Reisiek (DE); BRASS, Stephan, 51515 Kürten (DE); MATTHIESEN, Jan, 22297 Hamburg (DE)
(74) Vertreter: thyssenkrupp Intellectual Property GmbH
(86) Internationale Anmeldenummer: PCT/EP2023/067227
(87) Internationale Veröffentlichungsnummer: WO 2024/002926

(56) Entgegenhaltungen:
- EP-A1- 3 543 986
- DE-A1- 102019 218 109
- DE-A1- 102019 218 110

## Beschreibung

Die Erfindung betrifft ein Simulationssystem zum zeitgleichen Trainieren einer Mehrzahl von Besatzungsmitgliedern eines militärischen Wasserfahrzeugs. Ferner betrifft die Erfindung ein Verfahren zum Betrieb eines Simulationssystems zum zeitgleichen Trainieren einer Mehrzahl von Besatzungsmitgliedern eines militärischen Wasserfahrzeugs.

Der Betrieb eines militärischen Wasserfahrzeugs stellt hohe Anforderungen an die das militärische Wasserfahrzeug bedienenden Besatzungsmitgliedern. Neben dem grundlegenden Wissen und den Fähigkeiten zum Betrieb des Wasserfahrzeugs ist es zusätzlich erforderlich, dass die Besatzungsmitglieder dieses Wissen und diese Fähigkeiten insbesondere auch unter Stresssituationen anzuwenden verstehen. Hierzu ist erforderlich, dass das entsprechende Wissen sowie die entsprechenden Fähigkeiten unter möglichst realistischen sowie stressigen Situationen trainiert werden. Grundsätzlich kann ein entsprechendes Training unter Verwendung eines realen militärischen Wasserfahrzeugs erfolgen. Allerdings bringt ein Training unter Verwendung eines realen militärischen Wasserfahrzeugs auch Nachteile mit sich: Zum einen stehen militärische Wasserfahrzeuge, welche zu Trainingszwecken genutzt werden, nicht für Einsätze zur Verfügung, was insbesondere bei einer beschränkten Anzahl an zur Verfügung stehenden militärischen Wasserfahrzeugen zu Problemen führen kann eine benötigte Einsatzbereitschaft aufrecht zu halten. Ferner sind mögliche Trainingsszenarien, insbesondere Gefahrensituationen, welche mit einem realen militärischen Wasserfahrzeug trainiert werden können, begrenzt. Insbesondere Fehlfunktionen und/oder Ausfälle von Systemkomponenten lassen sich nur in beschränktem Maße unter realistischen Bedingungen an Bord eines militärischen Wasserfahrzeugs trainieren, ohne das Fahrzeug selbst oder die Besatzung in Gefahr zu bringen. Schließlich birgt das Training unter hohem Stress auf einem tatsächlichen Wasserfahrzeug die Gefahr, dass es infolge von stressbedingten Fehlbedienungen zu tatsächlichen Risiken und Komplikationen für das Wasserfahrzeug und Besatzungsmitglieder an Bord des Wasserfahrzeugs kommen kann. So kann beispielsweise die Gefahr von Unfällen bis hin zu einem Sinken des Wasserfahrzeugs nicht grundsätzlich ausgeschlossen werden. Es besteht daher ein Bedarf für ein Simulationssystem zum Trainieren von Besatzungsmitgliedern eines militärischen Wasserfahrzeugs unter möglichst realistischen Bedingungen, mit welchem die vorgenannten Nachteile vermieden werde können.

Die DE 10 2019 218110 A1 beschreibt ein Verfahren zum Training einer Schiffsbesatzung, wobei zum Training zum Ersten das Schiff verwendet wird, auf welches die Besatzung trainiert werden soll, wobei zum Zweiten ein Simulator verwendet wird, wobei der Simulator zur Erzeugung einer virtuellen Realität des verwendeten Schiffes ausgebildet ist, wobei sich das Schiff an einem ersten Ort und der Simulator an einem zweiten Ort befinden, wobei der erste Ort von dem zweiten Ort verschieden ist, wobei eine erste datentechnische Übertragungsverbindung zwischen dem Simulator und dem Schiff besteht, wobei wenigstens eine erste Person an Bord des Schiffes trainiert, wobei wenigstens eine zweite Person im Simulator trainiert, wobei die erste Person eine erste Datenbrille verwendet, wobei eine Datenverbindung zwischen der ersten Datenbrille und dem Simulator besteht und Daten zwischen dem Simulator und der ersten Datenbrille derart ausgetauscht werden, dass die erste Person und die zweite Person in der virtuellen Realität wiedergegeben werden, wobei die erste Person Handlungen nicht an realen mechanischen Betätigungselementen des Schiffes vornimmt, sondern an virtuellen Betätigungselementen in der virtuellen Realität vornimmt, wobei die Handlungen an den virtuellen Betätigungselementen am Ort der realen Betätigungselemente im realen Schiff vorgenommen werden, wobei der Simulator die Reaktionen des virtuellen Schiffes auf die Handlungen der ersten Person und der zweiten Person simuliert und die Ergebnisse in der virtuellen Realität wiedergibt.

Die DE 10 2019 218109 A1 beschreibt einen Simulator zum Training von Besatzungen von Unterseebooten, wobei der Simulator eine erste Simulationsumgebung aufweist, wobei die erste Simulationsumgebung eine physische Wiedergabe des Unterseeboots ist, durch welche sich die Personen während des Trainings bewegen können, wobei der Simulator eine zweite Simulationsumgebung aufweist, wobei die zweite Simulationsumgebung eine virtuelle Realität des Unterseeboots ist, wobei der Simulator personengetragene Projektionsvorrichtungen zur Projektion der virtuellen Realität in die physische Wiedergabe des Unterseeboots der ersten Simulationsumgebung aufweist, wobei die erste Simulationsumgebung wenigstens eine erste Ebenen und eine zweite Ebene aufweist, wobei die erste Ebene und die zweite Ebene durch wenigstens einen ersten Niedergang verbunden sind.

Der Erfindung liegt die Aufgabe zugrunde, ein Simulationssystem zum Trainieren einer Mehrzahl von Besatzungsmitgliedern eines militärischen Wasserfahrzeugs zu schaffen.

Die Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Simulationssystem zum zeitgleichen Trainieren einer Mehrzahl von Besatzungsmitgliedern eines militärischen Wasserfahrzeugs. Das Simulationssystem umfasst eine erste Simulationsumgebung mit einem physischen Leitstand des Wasserfahrzeugs zum Trainieren einer ersten Gruppe von Besatzungsmitgliedern.

Die erste Simulationsumgebung umfasst ein oder mehrere erste physische Steuerelemente des Wasserfahrzeugs. Die ersten physischen Steuerelemente sind jeweils dazu konfiguriert, einen oder mehrere Steuerparameter für den Betrieb des Wasserfahrzeugs einzustellen. Der Leitstand ist dazu konfiguriert, mittels der ersten physischen Steuerelemente eingestellte Steuerparameter zu erfassen und an eine Simulationsschnittstelle des Simulationssystems zu kommunizieren.

Das Simulationssystem umfasst ferner eine von der ersten Simulationsumgebung räumlich getrennte zweite Simulationsumgebung zum Trainieren einer zweiten Gruppe von Besatzungsmitgliedern. Die zweite Simulationsumgebung umfasst technische Mittel, welche dazu konfiguriert sind, eine visuelle Simulation bereitzustellen, welche ein oder mehrere zumindest teilweise virtuelle Kopien ein oder mehrerer zweiter physischer Steuerelemente des Wasserfahrzeugs zum Einstellen der Steuerparameter umfasst. Die technischen Mittel sind ferner dazu konfiguriert, mittels der Kopien eingestellte Steuerparameter zu erfassen und an die Simulationsschnittstelle des Simulationssystems zu kommunizieren.

Bei ein oder mehreren der ersten und zweiten Steuerelemente kann es sich beispielsweise jeweils paarweise um dieselben Steuerelemente handeln. Beispielswiese kann es sich bei allen ersten und zweiten Steuerelemente jeweils paarweise um dieselben Steuerelemente handeln. Beispielswiese kann es sich bei ein oder mehreren der ersten und zweiten Steuerelemente jeweils um unterschiedliche Steuerelemente handeln, welche dazu konfiguriert sind denselben Steuerparameter für den Betrieb des Wasserfahrzeugs einzustellen. Beispielsweise handelt es sich bei einem entsprechenden ersten Steuerelement um ein Steuerelement des Leitstands des Wasserfahrzeugs zur Einstellung eines Steuerparameters vom Leitstand aus, d.h. aus der Entfernung, wie etwa einen Öffnungsgrad eines über den Leitstand ansteuerbaren, elektrisch aus der Entfernung betätigbaren Ventils. Beispielsweise handelt es sich bei einem Steuerelement des Leitstands, etwa einer Konsole mit einer benutzerschnittstelle zur Steuerung des elektrisch aus der Entfernung betätigbaren Ventils, um das entsprechende erste Steuerelement. Beispielsweise handelt es sich bei einem entsprechenden zweiten Steuerelement um ein Steuerelement zur lokalen Einstellung desselben Steuerparameters vor Ort. Beispielsweise handelt es sich bei dem entsprechenden zweiten Steuerelement um dasselbe Ventil, welches zusätzlich dazu konfiguriert ist vor Ort per Hand zu betätigt zu werden, um den Öffnungsgrad des Ventils einzustellen. Beispielswiese kann es sich bei allen ersten und zweiten Steuerelemente jeweils um unterschiedliche Steuerelemente handeln, welche dazu konfiguriert sind denselben Steuerparameter für den Betrieb des Wasserfahrzeugs einzustellen.

Die technischen Mittel umfassen beispielsweise Anzeigevorrichtungen zur visuellen Wiedergabe der visuellen Simulation. Hierbei kann es sich beispielsweise um einen Bildschirm eines Desktop-PCs oder ein Display eines mobilen tragbaren Endgeräts handeln. Beispielsweise kann es um eine Datenbrille zur Wiedergabe einer virtuellen Realität, d.h. eine VR-Brille handeln. Beispielsweise kann es sich ein Augmented-Reality-Gerät, d.h. eine Projektionsvorrichtung, insbesondere personengetragene Projektionsvorrichtungen, zur Projektion von virtuellen Elementen in die physische Realität oder eine digitale Wiedergabe der physischen Realität handeln, z.B. einen teilweisen physischen Nachbau bzw. eine teilweise physische Wiedergabe des realen Wasserfahrzeugs. Beispielsweise umfasst eine entsprechende physische Wiedergabe ein oder mehrere taktile Elemente. Beispielsweise sind die personengetragenen Projektionsvorrichtungen Datenbrillen zur Wiedergabe von virtuellen Elementen zur Erweiterung der physischen Realität, d.h. eine Augmented Reality- Brille, im folgenden AR-Brille genannt. Diese AR-Brillen erzeugen eine gemischte Realität, sodass die Besatzungsmitglieder sowohl die tatsächliche Umgebung, beispielsweise die taktilen Elemente, als auch die eingeblendeten virtuellen Elemente der virtuellen Realität sehen. Dies hat beispielsweise den Vorteil, dass eine sichere und unfallfreie Bewegung in der zweiten Simulationsumgebung erleichtert werden kann.

Bei dem simulierten Wasserfahrzeug kann es sich beispielsweise um eine Simulation eines generischen militärischen Wasserfahrzeugs handeln, etwa um ein militärisches Wasserfahrzeug, welches generisch für einen bestimmten Typ oder ein bestimmtes Los ist. Bei dem simulierten Wasserfahrzeug kann es sich beispielsweise um eine Simulation ein individuelles militärisches Wasserfahrzeug handeln, d.h. eine Simulation eines konkreten realen Wasserfahrzeugs. Dies kann vorteilhaft sein, wenn ein Betrieb eines militärischen Wasserfahrzeugs simuliert werden soll, welches praktisch als Unikate hergestellt wurde. In diesem Fall können selbst bei Wasserfahrzeugen des gleichen Loses eines identischen Wasserfahrzeug-Typs Unterschiede der Art auftreten, dass für das Training die Wasserfahrzeuge als Unikate anzusehen sind.

Die Integrationsdichte technischer Komponenten ist in einem militärischen Wasserfahrzeug sehr hoch, während gleichzeitig der verfügbare Platz gering ist. Es kann daher notwendig sein, dass gerade die konkrete Umgebungssituation der Besatzung vertraut ist, um im Notfall schnell die notwendigen Handlungen vornehmen zu können. Daher kann es insbesondere wichtig sein, dass das Training der Besatzung unter realistischen Bedingungen erfolgt. Daher wird bisher die Besatzung hauptsächlich an Bord des Wasserfahrzeugs trainiert, was jedoch die oben genannten Nachteile mit sich bringt. Ein Simulationssystem, welches im Zuge des Trainings eine visuelle Simulation von Teilen oder dem gesamten militärischen Wasserfahrzeug verwendet, kann zu einem Training der Besatzung unter realistischen Bedingungen beitragen, ohne hierfür beispielsweise das reale Militärfahrzeug selbst verwenden zu müssen oder dieses für Trainingszwecke komplett Nachbauen zu müssen.

Die visuelle Simulation kann beispielsweise eine virtuelle Realität, d.h. ein virtuelle 3D-Umgebung in Form eines virtuellen 3D-Modells des militärischen Wasserfahrzeugs, bereitstellen. Die Verwendung einer virtuellen Realität hat den Vorteil, dass für ein realitätsnahes Training von Besatzungsmitgliedern auf einer Mehrzahl unterschiedlicher Stationen des Wasserfahrzeugs, d.h. in einer Mehrzahl von unterschiedlichen Bereichen des Wasserfahrzeugs, nicht das realen Wasserfahrzeugen benötigt wird. Mithin können Ausfälle des realen militärischen Wasserfahrzeugs für Einsätze während der Trainingszeit vermieden werden. Zudem können Schäden an dem realen militärischen Wasserfahrzeug sowie reale Gefahren für die Besatzungsmitglieder im Zuge des Trainings, selbst von Gefahrensituation, vermieden werden.

Die virtuelle Realität dient beispielsweise dazu, ein militärisches Wasserfahrzeug, beispielsweise ein generisches oder ein individuelles Wasserfahrzeug, auf welches die Besatzung trainiert werden soll, möglichst exakt wiederzugeben. Ferner dient die virtuelle Realität beispielsweise dazu, alle Handlungen, welche von der Besatzung vorgenommen werden, sowie alle Simulationsvorgaben zusammen zu nehmen und dadurch das reale Verhalten, welches ein reales Wasserfahrzeug unter identischen Bedingungen aufzeigen würde, zu simulieren und an die zu trainierende Besatzungsmitglieder wiederzugeben.

Beispielsweise kann die virtuelle Realität aus CAD-Daten des militärischen Wasserfahrzeugs und/oder aus Fotos des militärischen Wasserfahrzeugs gebildet werden. Gerade in militärischen Wasserfahrzeugen mit ihrer extrem hohen Integrationsdichte an elektronischen Komponenten führen können selbst kleine Abweichungen innerhalb eines Loses einer Klasse von Wasserfahrzeugen dazu führen, dass identische Komponenten auf den verschiedenen militärischen Wasserfahrzeugen gegebenenfalls an verschiedenen Ort angeordnet sind. Um einen guten Trainingserfolg erzielen zu können und eine Übereinstimmung zwischen der virtuellen Realität und dem realen militärischen Wasserfahrzeug zu ermöglichen, ist es wichtig, eine möglichst exakte Abbildung des militärischen Wasserfahrzeugs in der virtuellen Realität zu ermöglichen. CAD-Daten, Fotos und 3D-Scans können hierfür effektiv maschinell verarbeitbare Grundlagen bilden.

Die technischen Mittel der zweiten Simulationsumgebung umfassen beispielsweise eine Mehrzahl von Geräten zur Erzeugung und Darstellung einer virtuellen Realität oder von Komponenten einer virtuellen Realität zum Bereitstellen der visuellen Simulation. Die entsprechenden Geräte dienen beispielsweise als Zugangsvorrichtungen für die Besatzungsmitglieder der zweiten Gruppe von Besatzungsmitgliedern zum Eintritt in die virtuelle Realität.

Unter einer virtuellen Realität wird hier ein dreidimensionales virtuelles Computermodel verstanden, welches zum einen die Umgebung, d.h. das militärischen Wasserfahrzeugs, wiedergibt. Zum anderen umfasst die virtuelle Realität auch die Möglichkeit mit dieser Umgebung zu interagieren, beispielsweise virtuelle Kopien der zweiten Steuerelemente zu betätigen. Das Betätigen der virtuellen Kopien der zweiten Steuerelemente umfasst beispielsweise ein Bedienen von mechanischen Schaltelementen, ein Öffnen oder Schließen von Ventilen, etwa von Ventilen von Hydraulikleitungen, und/oder ein Betätigen anderer mechanische Vorrichtungen zum Steuern von Funktionalitäten des militärischen Wasserfahrzeugs. Des Weiteren umfasst die virtuelle Realität die Berechnung der Auswirkungen dieser Interaktionen gegebenenfalls zuzüglich äußerer Einflussgrößen, welche durch das in der Simulation des Betriebs des militärischen Wasserfahrzeugs gegebene Szenario vorgegeben werden, beispielsweise simulierte Systemausfälle, Beschädigungen und dergleichen. Als Ergebnis dieser Berechnungen werden beispielsweise Zustandswerte bereitgestellt, welche einen aktuellen simulierten Zustand des militärischen Wasserfahrzeugs definieren.

Das bedeutet, dass in der virtuellen Realität exakt die gleiche Umgebung zum Training der Besatzungsmitglieder bereitgestellt werden kann, wie diese auch vor Ort auf dem realen militärischen Wasserfahrzeug bestehen würde, wenn das Training auf dem realen militärischen Wasserfahrzeug anstatt unter Verwendung des Simulationssystems erfolgen würde. Zwar ist natürlich ein Unterschied zwischen einer realen Existenz und einer virtuellen Umgebung gegeben, die exakte Übereinstimmung bezieht sich aber auf die technischen Besonderheiten des militärischen Wasserfahrzeugs. Beispielsweise befinden sich Türen und Gänge an den gleichen Stellen, ebenso Computerkonsolen, Schalter, Hebel oder andere Steuerelemente. Dies kann vorteilhaft sein, da gerade auch das schnelle Auffinden gewisser Vorrichtungen ein Teil des Trainings ist, um im Notfall die notwendigen Handlungen ohne Zeitverlust, beispielsweise durch Suchen, vornehmen zu können. Hierbei ist zu beachten, dass scheinbar baugleiche militärischen Wasserfahrzeuge, etwa einer identischen Klasse von militärischen Wasserfahrzeugen, auch innerhalb eines Loses, durchaus deutliche Abweichungen voneinander aufweisen können. Daher kann eine exakte Wiedergabe eines individuellen militärischen Wasserfahrzeugs in der virtuellen Realität vorteilhaft für den Trainingserfolg sein.

Das Training im Zuge des Normalbetriebs des militärischen Wasserfahrzeugs kann beispielsweise normale Routinen zum Betrieb des militärischen Wasserfahrzeugs umfassen, also beispielsweise übliche Wartungs- und Kontrollaufgaben. Es kann sich bei dem Training auch um ein Training von Abweichung von dem Normalbetrieb etwa im Zuge einer Simulation von Fehlfunktionen, beispielsweise in Form von Gefahrensituationen oder Gefahrenabwehr, handeln, also beispielsweise eines Ausfalls eines oder mehrerer Geräte, eines Wassereinbruchs, eines Brands oder auch einer Gefechtssituation. Bei diesem Training sollen die teilnehmenden Besatzungsmitglieder die Handgriffe erlernen und eintrainieren, welche diese in einer analogen realen Situation dann erleichtert ausführen können.

Beispielsweise umfasst die virtuelle Realität zudem Wiedergaben der am Training beteiligten Besatzungsmitgliedern in Form von Avataren. Ein in der virtuellen Realität wiedergegebener Avatar muss hierbei nicht eine bestimmte Person wiedergeben bzw. repräsentieren, insbesondere nicht das Aussehen der repräsentierten Person. Zur Vereinfachung wird beispielsweise mit generischen Avataren gearbeitet. Ebenso ist es möglich individualisierte oder generische Avatare mit bestimmten charakteristischen Gemeinsamkeiten zu implementieren. Bei den entsprechenden charakteristischen Gemeinsamkeiten kann es sich beispielsweise um körperliche Merkmale, wie etwa Hautfarbe, Haarfarbe, Augenfarbe, Physiognomie etc. handeln. Zur Individualisierung von Avataren können beispielsweise 3D-Scans der Gesichter der Besatzungsmitglieder des Wasserfahrzeugs erstellt werden, sodass jedem der Besatzungsmitglieder jeweils ein individueller Avatar mit den nachmodellierten Gesichtszügen des entsprechenden Besatzungsmitglieds zugeordnet werden kann. Aufgrund der räumlichen Enge in einem Wasserfahrzeug kann gerade die Interaktion zwischen beteiligten Besatzungsmitgliedern wichtig sein. Damit ein Besatzungsmitglied schnell zu einem Ort einer Handlung gelangen kann ist regelmäßig das Passieren weiterer Besatzungsmitglieder notwendig. Um somit ein positives Trainingsergebnis zu erreichen, kann eine virtuelle Simulation bzw. Wiedergabe aller Besatzungsmitglieder, welche sich in der virtuellen Realität befinden, zweckdienlich sein.

Eine Zugangsvorrichtung zum Eintritt in die virtuelle Realität dient hierbei zur Darstellung der in der virtuellen Realität erzeugten Bereiche des militärischen Wasserfahrzeuges und verfügt über Eingabevorrichtung zur Manipulation von Elementen der in der virtuellen Realität erzeugten Bereiche des militärischen Wasserfahrzeuges. Beispielsweise kann die Darstellung der virtuellen Realität über einen Bildschirm, etwa einer Computerkonsole oder eines mobilen tragbaren Endgeräts oder eine entsprechende Datenbrille erfolgen. Beispielsweise kann es sich bei einer solchen Datenbrille um eine VR-Brille mit Headset sowie Motion-Capture-System und/oder Controller handeln. Beispielsweise kann es sich bei einer solchen Datenbrille um eine AR-Brille mit Headset sowie Motion-Capture-System und/oder Controller handeln. Eingaben zur Manipulation der virtuellen Realität können beispielsweise per Tastatur, Maus, Joystick, Controller, Gestenerkennungsvorrichtung, Spracherkennungsvorrichtung oder Motion-Capture-Vorrichtung erfolgen. Eine entsprechende Zugangsvorrichtung umfasst beispielsweise wenigstens eine Wiedergabevorrichtung und eine Eingabevorrichtung. Beispielsweise weist eine Zugangsvorrichtung zusätzlich eine akustische Kommunikationsvorrichtung auf, welche beispielsweise ein Mikrophon und ein oder mehrere Kopfhörer umfasst. Eine entsprechende akustische Kommunikationsvorrichtung ermöglicht es den Besatzungsmitgliedern, welche die Zugangsvorrichtungen nutzen, untereinander und mit anderen an dem Training teilnehmenden Besatzungsmitgliedern in anderen Simulationsumgebungen des Simulationssystems, etwa der ersten Gruppe von Besatzungsmitgliedern, zu kommunizieren.

Unter Eintritt in die virtuelle Realität wird hier das Benutzen einer entsprechenden Zugangsvorrichtung verstanden. Im einfachsten Fall kann der Eintritt in die virtuelle Realität beispielsweise durch das Aufsetzen und Aktivieren einer entsprechenden Datenbrille, dem Aufsetzen und Aktivieren eines entsprechenden Headsets, einem Aufnehmen und Aktivieren eines entsprechenden mobilen Endgeräts und/oder einem Aufrufen einer visuellen Wiedergabe der virtuellen Realität an einem Desktop-PC oder einer entsprechenden Computerkonsole erfolgen.

Die Simulationsschnittstelle des Simulationssystems umfasst einen Speicher. In dem Speicher ist eine Datenbank mit Definitionen der ein oder mehreren ersten Steuerelemente und der ein oder mehrere Kopien der ein oder mehreren zweiten Steuerelemente gespeichert. Die Definitionen für die definierten ersten Steuerelemente und Kopien der zweiten Steuerelemente legen jeweils eine Erstpriorisierung für einen simulierten Normalbetrieb des Wasserfahrzeugs fest, in welcher die Einstellungen der Steuerparameter gemäß den ersten physischen Steuerelementen gegenüber den Einstellungen gemäß den Kopien der zweiten Steuerelemente als für die Simulation des Wasserfahrzeugs ausschließlich gültige Einstellungen der Steuerparameter priorisiert werden. Die Simulationsschnittstelle des Simulationssystems ist ferner dazu konfiguriert, auf eine simulierte Abweichung von dem Normalbetrieb des Wasserfahrzeugs hin, von ein oder mehreren der Erstpriorisierungen zu ein oder mehrere Zweitpriorisierungen zu wechseln. Die ein oder mehreren Zweitpriorisierungen priorisieren für die simulierte Abweichung von dem Normalbetrieb Einstellungen ein oder mehrerer der Steuerparameter gemäß ein oder mehreren den Zweitpriorisierungen zugeordneten Kopien der zweiten Steuerelemente gegenüber Einstellungen gemäß ein oder mehreren den Zweitpriorisierungen zugeordneten ersten physischen Steuerelemente als für die Simulation des Wasserfahrzeugs ausschließlich gültige Einstellungen der entsprechenden Steuerparameter.

Ausführungsformen können den Vorteil haben, dass ein Simulationssystem zum zeitgleichen Trainieren einer Mehrzahl von Besatzungsmitgliedern eines militärischen Wasserfahrzeugs, beispielsweise unter möglichst realistischen Bedingungen, zur Verfügung gestellt wird. Dabei werden insbesondere nicht nur einzelne Besatzungsmitglieder, sondern das Zusammenwirken der Mehrzahl von Besatzungsmitgliedern trainiert. Bei dieser Mehrzahl von Besatzungsmitgliedern kann es sich insbesondere um Besatzungsmitglieder handeln, welche in verschiedenen Bereichen des militärischen Wasserfahrzeugs eingesetzt werden.

Das Simulationssystem umfasst eine erste Simulationsumgebung zum Trainieren einer ersten Gruppe von Besatzungsmitgliedern sowie eine zweite Simulationsumgebung zum Trainieren einer zweiten Gruppe von Besatzungsmitgliedern. Die erste Simulationsumgebung umfasst einen physischen Leitstand des Wasserfahrzeugs. Bei dem Leitstand handelt es sich um eine technische Einrichtung zum Betrieb des militärischen Wasserfahrzeugs. Der Leitstand umfasst beispielsweise den Steuerstand, über welchen sich für den Betrieb des Wasserfahrzeugs wesentliche Funktionen steuern und regeln lassen. Beispielsweise umfasst der Steuerstand eine Mehrzahl an navigatorischen Instrumenten, technischen Bedienelementen und/oder Komponenten. Hierüber kann das militärische Wasserfahrzeug beispielsweise manövriert und sein Betrieb gesteuert werden. Zudem umfasst der Leitstand beispielsweise taktische Einrichtungen zur Steuerung von Waffensystemen des militärischen Wasserfahrzeugs.

Nach Ausführungsformen kann die erste Simulationsumgebung auf einer beweglich gelagerten Plattform angeordnet sein. An der Plattform ist beispielsweise ein eine Mehrzahl von hydraulischen, pneumatischen und/oder elektrischen Aktoren angeordnet ist, welche von einer Bewegungssteuerung der Plattform angesteuert werden, um Bewegungen des Wasserfahrzeugs im Zuge des simulierten Betriebs nachzuahmen.

Ausführungsformen können den Vorteil haben, dass unter Verwendung der beweglich gelagerten Plattform innerhalb der ersten Simulationsumgebung Bewegungen des Wasserfahrzeugs im Zuge des simulierten Betriebs nachgeahmt werden können. Die erste Simulationsumgebung, etwa ein erster Simulationsraum, ist hierzu auf einer beweglich gelagerten Plattform angeordnet. An der beweglich gelagerten Plattform ist beispielsweise eine Mehrzahl von Aktoren angeordnet. Bei den Aktoren handelt es sich beispielsweise um hydraulische, pneumatische und/oder elektrische Aktoren, welche dazu konfiguriert sind, Neigungswinkel der beweglich gelagerten Plattform und damit der ersten Simulationsumgebung in unterschiedliche Richtungen anzupassen. Hierzu werden die Aktoren von einer Bewegungssteuerung der Plattform angesteuert, um Bewegungen des Wasserfahrzeugs im Zuge eines simulierten Betriebs des Wasserfahrzeugs nachzuahmen. Die entsprechenden Bewegungen des Wasserfahrzeugs werden durch identische Bewegungen der Plattform angetrieben durch die Aktoren nachgeahmt, etwa durch entsprechende Neigungen der beweglich gelagerten Plattform. Bei der nachgeahmten Bewegung des Wasserfahrzeugs kann es sich beispielsweise um Bewegungen des Wasserfahrzeugs aufgrund der natürlichen Umgebung, etwa des Wellengangs, und/oder aufgrund von Steuermanövern des Wasserfahrzeugs handeln. Im Falle eines Unterseeboots umfassen entsprechende Steuermanöver beispielsweise Auf- und/oder Abtauchmanöver. Beispielsweise kann die erste Simulationsumgebung, etwa ein erster Simulationsraum, entsprechend der simulierten Lage des Wasserfahrzeugs im Raum geneigt und/oder gekippt werden, sodass die Bewegungen des simulierten Wasserfahrzeugs direkt wiedergegeben werden und somit für trainierende Besatzungsmitglieder in dem ersten Simulationsraum spürbar sein.

Die erste Simulationsumgebung umfasst ein oder mehrere erste physische Steuerelemente des Wasserfahrzeugs, welche jeweils dazu konfiguriert sind, einen Steuerparameter für den Betrieb des Wasserfahrzeugs einzustellen. Bei entsprechenden ersten physischen Steuerelementen handelt es sich beispielsweise um Ventile oder Schalter. Die ersten Steuerelemente umfassen dabei beispielsweise mechanische Komponenten, welche mechanische Einstellungen der entsprechenden ersten Steuerelemente ermöglichen. Aus den Einstellungen der entsprechenden ersten Steuerelemente ergibt sich damit ein physischer Zustand derselben, welcher der Einstellung entspricht. Beispielsweise sind ein oder mehrere der ersten Steuerelemente so konfiguriert, dass die mechanischen Komponenten sowohl elektrisch, etwa unter Ansteuerung eines elektrischen Motors, als auch händisch bedient werden können. Dies hat in realen militärischen Wasserfahrzeugen den Vorteil, dass einerseits eine effektive zentrale elektronische Ansteuerung der entsprechenden ersten Steuerelemente ermöglicht wird und andererseits selbst bei einer elektrischen Störung stets weiterhin eine manuelle Betätigung der entsprechenden mechanischen Komponenten möglich ist. Beispielsweise umfasst der Leitstand in der ersten Simulationsumgebung als erstes Steuerelement ein Bedienelement zur Ansteuerung der entsprechenden elektrisch bedienbaren Komponente. Bei entsprechenden ersten physischen Steuerelementen handelt es sich beispielsweise um Bedienelemente einer Konsole des Leitstands, wie etwa ein Touch-Display, einen Trackball und/oder ein oder mehrere Tasten. Bei einem zweiten Steuerelement kann es sich beispielsweise um eine entsprechende mechanisch bedienbare Komponente handeln.

Der Leitstand ist dazu konfiguriert, mittels der ersten physischen Steuerelemente eingestellte Steuerparameter zu erfassen und an eine Simulationsschnittstelle des Simulationssystems zu kommunizieren. Die entsprechend eingestellten Steuerparameter erlauben eine Simulation des Betriebs des Wasserfahrzeugs basierend auf den entsprechenden Steuerparametern. Beispielsweise kann ein Simulationscomputersystem, welches Zugriff auf die Simulationsschnittstelle besitzt oder die Simulationsschnittstelle umfasst, einen aktuellen Zustand des Wasserfahrzeugs berechnen unter Verwendung eines Zustandssimulationsprogramms, eines digitalen Modells des Wasserfahrzeugs und der eingestellten Steuerparameter.

Einstellungen der ersten physischen Steuerelemente in der ersten Simulationsumgebung werden beispielsweise erfasst bzw. eingelesen, damit deren Effekt auf den Zustand des militärischen Wasserfahrzeugs simuliert und beispielsweise in der virtuellen Realität wiedergegeben werden kann.

Ferner umfasst das Simulationssystem eine von der ersten Simulationsumgebung räumlich getrennte zweite Simulationsumgebung zum Trainieren einer zweiten Gruppe von Besatzungsmitgliedern. Die zweite Gruppe von Besatzungsmitgliedern wird beispielsweise für den Einsatz in anderen Bereichen des militärischen Wasserfahrzeugs als dem Leitstand trainiert. Hierbei kann es sich beispielsweise um einen Maschinenraum, Elektronikgeräteraum, Batterieraum, Torpedoraum, Kombüse, Wohnbereich, und/oder andere Bereiche des Wasserfahrzeugs handeln. Für das entsprechende Training umfasst die zweite Simulationsumgebung technische Mittel, welche dazu konfiguriert sind, eine visuelle Simulation bereitzustellen, welche ein oder mehrere zumindest teilweise virtuelle Kopien zweiter Steuerelemente zum Einstellen von Steuerparametern umfasst. Bei der visuellen Simulation kann es sich beispielsweise um eine Simulation handeln, welche neben den anderen Bereichen des militärischen Wasserfahrzeugs auch den Leitstand umfasst. Beispielsweise umfasst die virtuelle Simulation das gesamte militärische Wasserfahrzeug.

Da es technisch beispielsweise schwierig ist, ein vollständiges militärisches Wasserfahrzeug, wie etwa ein Unterseeboot, für Trainingszwecke auf einer beweglich gelagerten Plattform bereitzustellen, ermöglicht es eine Verwendung einer ersten Simulationsumgebung, welche auf einer entsprechend beweglich gelagerten Plattform angeordnet ist, sowie einer von der ersten Simulationsumgebung unabhängig angeordneten zweiten Simulationsumgebung, dass zumindest ausgewählte Bereiche des militärischen Wasserfahrzeugs auf einer beweglich gelagerten Plattform bereitgestellt werden können, welche Bewegungen des militärischen Wasserfahrzeugs im Zuge des simulierten Betriebs nachahmt.

Die zweite Simulationsumgebung ist beispielsweise nicht auf einer beweglich gelagerten Plattform angeordnet. Alternativerweise kann die zweite Simulationsumgebung beispielsweise ebenfalls auf einer zweiten beweglich gelagerten Plattform angeordnet sein, wobei an der zweiten Plattform eine Mehrzahl von hydraulischen, pneumatischen oder elektrischen Aktoren angeordnet sind. Eine Bewegungssteuerung der zweiten Plattform kann die Aktoren ansteuern, um Bewegungen des Wasserfahrzeugs im Zuge des simulierten Betriebs nachzuahmen.

Beispielsweise ermöglicht es die visuelle Simulation den Besatzungsmitgliedern der zweiten Gruppe Tätigkeiten in ein oder mehreren Bereichen des Wasserfahrzeugs zu trainieren. Bei der entsprechenden visuellen Simulation kann es sich beispielsweise um eine vollständige virtuelle Simulation handeln, bei welcher das trainierende Besatzungsmitglied einen Avatar in der virtuellen Umgebung des Wasserfahrzeugs steuert. Beispielsweise handelt es sich bei der visuellen Simulation um eine Mischung aus virtueller Simulation und realen Gegebenheiten. Hierzu umfassen die technischen Mittel beispielsweise Augmented-Reality-Geräte. Beispielsweise sind physische Komponenten und/oder physische Nachbildungen und/oder physische Attrappen von Komponenten des Wasserfahrzeugs in der zweiten Simulationsumgebung angeordnet, welche mit virtuellen Elementen ergänzt werden, sodass sich für das trainierende Besatzungsmitglied aus der Kombination von physisch vorhandenen Komponenten und virtuellen Ergänzungen ein Gesamtbild, d.h. eine visuelle Simulation, ergibt, welche mit den jeweiligen Bereichen des Wasserfahrzeugs übereinstimmt, in welchem das entsprechende Besatzungsmitglied seine Fähigkeiten trainieren soll.

Bei einem militärischen Wasserfahrzeug kann sich für die zu trainierenden Besatzungsmitglieder die Notwendigkeit ergeben, nicht nur an einer Station des Wasserfahrzeugs, d.h. in einem Bereich des Wasserfahrzeugs, zu trainieren. Insbesondere im Falle von Abweichung von dem Normalbetrieb, etwa bei Fehlfunktionen des Wasserfahrzeuges, wie beispielsweise in Gefahren und/oder Notsituationen, kann ein Einsatz von Besatzungsmitgliedern auch an Orten außerhalb ihres eigentlichen Arbeitsbereichs erforderlich werden. Hierzu müssen die Besatzungsmitglieder im Zuge des Trainings üblicherweise an mehrere Orte des Wasserfahrzeugs gelangen können. Im Falle eines Trainings unter Verwendung einer Mehrzahl von räumlich getrennten Simulationsumgebungen, kann sich ein physischer Wechsel von einer Simulationsumgebung in die andere für die Besatzungsmittglieder während des Simulationsbetriebs als umständlich, schwierig oder gar unmöglich erweisen.

Beispielsweise im Falle eines Trainings unter Verwendung einer Mehrzahl von räumlich getrennten Simulationsumgebungen, bei welcher zumindest eine der Simulationsumgebungen auf einer beweglich gelagerten Plattform angeordnet ist, kann sich ein physischer Wechsel von einer Simulationsumgebung in die andere für die Besatzungsmittglieder als schwierig bis unmöglich erweisen. Dies gilt insbesondere während einer laufenden Trainingssimulation. Ein Einstieg in eine auf einer beweglichen Plattform gelagerten Simulationsumgebung kann sich schwierig gestalten. Dies gilt insbesondere, wenn die Plattform, etwa als freistehenden Plattform, in einem nicht zu vernachlässigenden Abstand über den Boden angeordnet ist, um ausreichend Bewegungsfreiraum für die Plattform über dem Boden zu gewährleisten. Solange die Simulation läuft, und gegebenenfalls Bewegungen der Plattform noch nicht beendet sind und/oder gerade beendet werden, kann ein Einstieg aus Sicherheitsgründen nicht möglich sein.

Beispielsweise sind ein oder mehreren der zweiten Steuerelemente mit einem der ersten Steuerelement identisch, d.h. es handelt sich bei ein oder mehreren der Kopien zweiter Steuerelemente um Kopien der entsprechenden ersten Steuerelemente. Tritt nun im Zuge der Simulation eine simulierte Abweichung vom Normalbetrieb auf, welcher es erforderlich macht, dass ein Besatzungsmitglied der zweiten Gruppe etwa ein erstes Steuerelement betätigt, welches die erste Simulationsumgebung in physischer Form umfasst, so kann es dem entsprechenden Besatzungsmitglied aufgrund der räumlichen Trennung und/oder der Anordnung der ersten Simulationsumgebung auf einer beweglich gelagerten Plattform jedoch verwehrt sein, zu dem entsprechenden ersten physischen Steuerelement zu gelangen. Vielmehr muss das entsprechende Besatzungsmitglied zur Betätigung des entsprechenden ersten Steuerelements auf eine zumindest teilweise virtuelle Kopie des entsprechenden ersten Steuerelements innerhalb der zweiten Simulationsumgebung zurückgreifen.

Beispielsweise kann sich im Zuge einer Abweichung von dem Normalbetrieb des Wasserfahrzeugs für die zu trainierenden Besatzungsmitglieder die Notwendigkeit ergeben, einen Steuerparameter für den Betrieb des Wasserfahrzeugs, welcher im Normalbetrieb eigentlich von dem Leitstand aus der Entfernung eingestellt wird, vor Ort einzustellen. Hierzu ist beispielswiese ein Ventil oder ein Schalter manuell vor Ort zu betätigen.

Wenn ein Simulationssystem sowohl physische Steuerelemente als auch zumindest teilweise virtuelle Kopien der entsprechenden Steuerelemente umfasst, welche jeweils dazu konfiguriert sind denselben Steuerparameter für den Betrieb des Wasserfahrzeugs einzustellen, stellt sich die Herausforderung Widersprüche und Inkonsistenzen bezüglich der eingestellten Steuerparameter zu vermeiden.

Ein Steuerelement, etwa ein Ventil, welches als physische Komponente in der ersten Simulationsumgebung angeordnet ist, kann beispielsweise nur dort physisch real betätigt und eingestellt werden, da ansonsten der mechanische bzw. physische Zustand des damit eingestellten Steuerparameters nicht mit dem im Zuge der Trainingssimulation verwendeten Steuerparameter übereinstimmt. Eine entsprechende Änderung des physischen Zustands des Steuerelements kann beispielsweise auf die virtuelle Kopie des entsprechenden Steuerelements in der zweiten Trainingsumgebung übertragen werden, sodass die visuelle Simulation denselben Zustand für die Kopie des physischen Steuerelements wiedergibt, den das physische Steuerelement infolge der Einstellung angenommen hat. Besteht nun die Notwendigkeit, einen Steuerparameter mittels der zumindest teilweisen virtuellen Kopie des entsprechenden Steuerelements einzustellen, kann es zu Widersprüchen zwischen der physischen Einstellung des physischen Steuerelements und der virtuellen Einstellungen der virtuellen Kopie des entsprechenden Steuerelements kommen, wodurch sich Komplikationen für die Simulation des Zustands des Wasserfahrzeugs ergeben können. Wird die Einstellung der zumindest teilweisen virtuellen Kopie eines physischen Steuerelements geändert, übertragt sich diese Änderung nicht auf den physischen Zustand des physischen Steuerelements. Der physische Zustand des physischen Steuerelements widerspricht damit der mittels der Kopie vorgenommenen Einstellung. Im Falle eines Ventils kann etwa die virtuelle Kopie des Ventils geschlossen sein, während das physische Ventil nach wie vor offen ist oder umgekehrt. Im Falle eines Schalters kann die virtuelle Kopie des Schalters beispielsweise umgelegt sein, während der physische Schalter dies nicht ist.

In dem Simulationssystem ist eine Simulationsschnittstelle vorgesehen, welche einen Speicher mit einer Datenbank umfasst. Diese Datenbank umfasst Definitionen aller Steuerelemente, welche für die entsprechenden Steuerelemente jeweils eine Betriebspriorisierung festlegen, z.B. eine Erstpriorisierung und/oder eine Zweitpriorisierung. Die entsprechende Erstpriorisierung legt für den simulierten Normalbetrieb des Wasserfahrzeugs fest, dass die Einstellungen der Steuerparameter gemäß den ersten physischen Steuerelementen gegenüber den Einstellungen gemäß den Kopien der zweiten Steuerelemente priorisiert werden. Mithin handelt es sich gemäß der Erstpriorisierung bei den Einstellungen der Steuerelemente gemäß den ersten physischen Steuerelementen um die für die Simulation des Wasserfahrzeugs ausschließlich gültigen Einstellungen.

Eine entsprechende Erstpriorisierung kann beispielsweise dadurch umgesetzt werden, dass im simulierten Normalbetrieb ausschließlich die erste Simulationsumgebung bzw. der Leitstand Schreibrechte für erfasste Einstellungen besitzt, während die zweite Simulationsumgebung keine Schreibrechte bezüglich der Steuerparameter mittels der virtuellen Kopien der zweiten Steuerelemente besitzt. Beispielsweise besitzt die zweite Simulationsumgebung im simulierten Normalbetrieb des Wasserfahrzeugs lediglich Leserechte zum Lesen der durch die ersten physischen Steuerelemente eingestellten Steuerparameter. Basierend auf diesen Leserechten vermag es die zweite Simulationsumgebung bzw. die technischen Mittel der zweiten Simulationsumgebung die aktuell gültigen mittels der ersten physischen Steuerelemente eingestellten Steuerparameter zu lesen und gegebenenfalls einen Zustand virtueller Kopien von zweiten Steuerelemente, welche zur Steuerung derselben Steuerparameter eingestellt sind, entsprechend anzupassen. Beispielsweise ahmen die Zustände Kopien der zweiten Steuerelemente so die Zustände der ersten physischen Steuerelemente nach. Beispielsweise kann die Anpassung des Zustands virtueller Kopien der zweiten Steuerelemente auch zentral erfolgen.

Ferner ist die Simulationsschnittstelle dazu konfiguriert, auf eine simulierte Abweichung von dem Normalbetrieb des Wasserfahrzeugs hin von den Erstpriorisierungen zu ein oder mehreren Zweitpriorisierungen zu wechseln. Eine Zweitpriorisierung legt für die simulierte Abweichung von dem Normalbetrieb fest, dass die Einstellungen der Steuerparameter gemäß den virtuellen Kopien der zweiten Steuerelemente als für die Simulation des Wasserfahrzeugs ausschließlich gültige Einstellungen der Steuerparameter priorisiert werden. Im Falle einer entsprechenden Abweichung vom Normalbetrieb erfolgt die Simulation des Zustands des Wasserfahrzeugs somit nicht mehr basierend auf den mittels die ersten physischen Steuerelemente eingestellten Steuerparameter, sondern vielmehr auf Basis der mittels der virtuellen Kopien der zweiten Steuerelemente eingestellten Steuerparameter.

Ein Wechsel von ein oder mehreren Erstpriorisierungen hin zu entsprechenden Zweitpriorisierungen kann beispielsweise ausgelöst werden durch die Simulation des Zustands des Wasserfahrzeugs, welcher beispielsweise einer Abweichung von dem normalbetrieb entspricht, die eine Einstellung von ein oder mehreren Steuerparametern mittels der Kopien der zweiten Steuerelemente erforderlich macht. Bei den zweiten Steuerelementen kann es sich beispielsweise um Steuerelemente zur lokalen Einstellung von Steuerparametern vor Ort handeln, wie etwa einem Öffnungsgrad eines Ventils, welches vor Ort per Hand zu betätigen ist. Beispielsweise handelt es sich bei dem entsprechenden Ventil um ein entsprechendes zweites Steuerelement. Bei den ersten Steuerelementen kann es sich beispielsweise um Steuerelemente des Leitstands des Wasserfahrzeugs handeln zur Einstellung von Steuerparametern vom Leitstand aus, d.h. aus der Entfernung, wie etwa einen Öffnungsgrad eines über den Leitstand ansteuerbaren, elektrisch aus der Entfernung betätigbaren Ventils. Beispielsweise handelt es sich bei einem Steuerelement des Leitstands, etwa einer Konsole mit einer benutzerschnittstelle zur Steuerung des elektrisch aus der Entfernung betätigbaren Ventils, um ein entsprechendes erstes Steuerelement. Ein Wechsel von ein oder mehreren Erstpriorisierungen hin zu entsprechenden Zweitpriorisierungen kann beispielsweise ausgelöst werden durch eine Aktion und/oder einen Ausfall eines oder mehrerer der Besatzungsmitglieder. Ein Wechsel von ein oder mehreren Erstpriorisierungen hin zu entsprechenden Zweitpriorisierungen kann beispielsweise ausgelöst werden durch eine externe Aktion, etwa eines Trainers, welcher die Simulation leitet und nicht zu den Besatzungsmitgliedern gehört. Ein solcher Trainer kann das Training beispielsweise von einem Kontrollraum aus überwachen und gegebenenfalls eine Abweichung von dem Normalbetreib des Wasserfahrzeugs, d.h. einen Wechsel von der Erstpriorisierung zu der Zweitpriorisierung. Durch eine entsprechende Priorisierung wird es ermöglicht, dass Widersprüche zwischen den Einstellungen der ersten physischen Steuerelemente und der virtuellen Kopien der entsprechenden zweiten Steuerelemente vermieden werden können.

Für diejenigen Steuerelemente, für welche die Normalbetriebs- und Zweitpriorisierungen gelten, wird eindeutig festgelegt, welche Steuerelemente bzw. welche Ausführungsformen der entsprechenden Steuerelemente, d.h. das erste physische Steuerelement oder die zumindest teilweise virtuellen Kopien des zweiten Steuerelements, für die Einstellungen der Steuerparameter und damit für die Simulation des Betriebs des Wasserfahrzeugs Gültigkeit besitzen. Beispielsweise kann eine Zweitpriorisierung dadurch implementiert werden, dass im Falle einer Abweichung vom Normalbetrieb die Lese- und Schreibrechte für die Steuerparameter neu vergeben werden. Im Zuge der Neuvergabe können beispielsweise die Schreibrechte ausschließlich den virtuellen Kopien der entsprechenden zweiten Steuerelemente zugeordnet werden, während für die ersten physischen Steuerelemente keine Schreibberechtigungen bestehen.

Beispielsweise kann die Datenbank der Simulationsschnittstelle sowohl Definitionen der Erstpriorisierungen als auch der Zweitpriorisierungen umfassen. Ein Wechsel zwischen Erstpriorisierung und Zweitpriorisierung kann beispielsweise mittels eines Flags gesteuert werden. Wird beispielsweise ein entsprechender Flag gesetzt, so erfolgt beispielsweise ein Wechsel von Erstpriorisierung zu Zweitpriorisierung. Wird der Flag gelöscht, so gilt beispielsweise wieder die Erstpriorisierung. Hierbei können für unterschiedliche Steuerparameter bzw. Steuerelemente unterschiedliche Priorisierungen bestehen. Es müssen nicht alle Flags für alle Steuerparameter bzw. Steuerelemente gleichgesetzt sein. Beispielsweise können für manche der Steuerparameter bzw. Steuerelemente Erstpriorisierungen gelten, während für andere Zweitpriorisierungen gelten. Ebenso ist es möglich, dass die Flags für alle Steuerparameter bzw. Steuerelemente gleichgesetzt sind, d.h. für alle Steuerparameter bzw. Steuerelemente jeweils Erstpriorisierungen oder dass für alle Steuerparameter bzw. Steuerelemente jeweils Zweitpriorisierungen gelten.

Ein entsprechendes Szenario einer Abweichung vom Normalbetrieb, etwa ein Fehlbetriebsszenario des Wasserfahrzeugs, kann beispielsweise wie folgt aussehen: Ein Fehlbetrieb kann beispielsweise Brandgasentwicklung umfassen, welcher zu einem Ausfall der ersten Gruppe von Besatzungsmitgliedern in der ersten Simulationsumgebung führt. Im Zuge des simulierten Betriebs des Wasserfahrzeugs können diese Besatzungsmitglieder beispielsweise keine weiteren Handlungen mehr ausführen. In diesem Fall müssten Besatzungsmitglieder der zweiten Gruppe von Besatzungsmitgliedern in der zweiten Simulationsumgebung beispielsweise zweite Steuerelemente einstellen, welche eigentlich von den Mitgliedern der ersten Gruppe von Besatzungsmitgliedern einzustellen wären und sich beispielsweise in physischer Form in der ersten Simulationsumgebung befinden. Da ein physischer Wechsel von der zweiten Simulationsumgebung in die erste Simulationsumgebung etwa schwierig oder unmöglich ist, können die Mitglieder der zweiten Besatzungsmitglieder beispielsweise mittels der visuellen Simulation in den im Bereich des Wasserfahrzeugs virtuell gelangen, welcher von der ersten Simulationsumgebung physisch bereitgestellt wird. In dieser virtuellen Umgebung können die Mitglieder der zweiten Gruppe von Besatzungsmitgliedern beispielsweise die virtuellen Kopien der zweiten Steuerelemente betätigen und die entsprechenden Steuerparameter einstellen. Da im Falle der Abweichung vom Normalbetrieb die Zweitpriorisierungen gelten, werden die entsprechend eingestellten Steuerparameter nun im Zuge der simulierten Abweichung von dem Normalbetrieb zum Berechnen des Zustands des Wasserfahrzeugs anstelle der Einstellungen der ersten physischen Steuerelemente verwendet. Somit wird eine realistische Simulation ermöglicht, selbst wenn die erste Gruppe von Besatzungsmitgliedern ausfällt und keine Einstellung von Steuerparametern mittels der ersten physischen Steuerelemente in der ersten Simulationsumgebung mehr möglich ist.

Ein Szenario einer Abweichung von dem Normalbetrieb kann ferner allgemein jedes Szenario sein, bei welchem es notwendig wird einen im Normalbetrieb mittels des Leitstands des Wasserfahrzeugs bzw. eines von dem Leitstand umfassten ersten Steuerelement eingestellten Steuerparameter vor Ort unter Verwendung eines zweiten Steuerelements einzustellen. Grund hierfür kann beispielsweise sein, dass die Fernbedienung von dem Leitstand aus ausfällt oder es können ein oder mehrere Besatzungsmitglieder an dem Leitstand ausfallen.

Durch die Verwendung von Priorisierungen, wie die hier beschriebenen Erstpriorisierungen und Zweitpriorisierungen, kann beispielsweise verhindert werden, dass sich Einstellungen von Steuerparametern in der realer ersten Simulationsumgebung über erste physische Steuerelemente und Einstellungen in der virtueller Umgebung über die zumindest teilweisen virtuellen Kopien zweiter physischen Steuerelemente zu Inkonsistenzen oder gar einem gegenseitigem Blockieren im Zuge der Simulation des Betriebs des militärischen Wasserfahrzeugs führen können. Diese Gefahr von Inkonsistenzen besteht insbesondere bei mechanischen Einstellungen, bei denen mechanische Komponenten der entsprechenden Steuerelemente betätigt werden. Beispielsweise kann ein mechanisches Ventil, welches in der ersten Simulationsumgebung in physischer Form angeordnet ist, solange die erste Simulationsumgebung aktiv an der Simulation des Betriebs des militärischen Wasserfahrzeugs teilnimmt, nur dort real umgelegt werden. Ansonsten bestünde die Gefahr, dass der mechanische Zustand des physischen Ventils in der ersten Simulationsumgebung nicht dem Zustand entspricht, welcher für die Durchführung der Simulation zugrunde gelegt wird.

Würde der Simulation des Betriebs des militärischen Wasserfahrzeugs beispielsweise eine Einstellung einer virtuellen Kopie eines Ventils zugrunde gelegt werden, dessen virtueller mechanischer Zustand nicht dem physischen mechanischen Ventil in der ersten Simulationsumgebung entspricht, kann diese zu Problemen während der Simulation des Betriebs führen. Ist beispielsweise das physische Ventil geschlossen, die virtuelle Kopie aber offen und ergibt sich im Zuge der Simulation nun die Anforderung an die Besatzungsmitglieder der ersten Gruppe in der ersten Simulationsumgebung das physische Ventil zu schließen, können sie dies nicht tun. Umgekehrt könnte beispielsweise das physische Ventil offen, die virtuelle Kopie aber geschlossen sein. Ergibt sich im Zuge der Simulation nun die Anforderung an die Besatzungsmitglieder der ersten Gruppe in der ersten Simulationsumgebung das physische Ventil zu öffnen, können sie dies ebenfalls nicht tun. Derartige Probleme können mittels der hier beschriebenen Priorisierungen vermieden werden.

Beispielsweise kann eine Änderung der Einstellung des ersten physischen Steuerelements in der ersten Simulationsumgebung in der zweiten Simulationsumgebung durch eine entsprechende Anpassung des Zustands virtueller Komponenten der Kopie des entsprechenden ersten physischen Steuerelements auch in der zweiten Simulationsumgebung dargestellt werden.

Für rein elektronischer Einstellungen von Steuerparameter, wie etwa an EDV-Systemen dargestellte Informationen, können Inkonsistenzen beispielsweise vermieden werden, da die entsprechenden Einstellungen in beiden Simulationsumgebung angepasst werden können, ohne dass es zu Abweichungen von physischen Zuständen mechanischer Komponenten von den der Simulation zugrunde gelegten Zuständen in der ersten Simulationsumgebung kommt.

Rückmeldungen aus einem Zustandssimulationsprogramm, d.h. unter Verwendung der eingestellten Steuerparameter berechnete bzw. simulierte Zustandswerte des militärischen Wasserfahrzeugs können beispielsweise in beiden Simulationsumgebungen dargestellt werden. Beispielsweise kann ein Wert für einen Tankfüllstand eines Tanks des militärischen Wasserfahrzeugs berechnet werden in Abhängigkeit von einem bisherigen Tankfüllstand und seitens der Besatzungsmitglieder eingestellten Steuerparametern. Der resultierende Zustandswert für den Tankfüllstand kann dann beispielsweise in einen geteilten Speicher (Shared Memory), welchen beispielsweise die Simulationsschnittstelle bereitstellt, geschrieben und beiden Simulationsumgebungen ausgelesen werden sowie angezeigt werden. Beispielsweise kann der Leitstand den entsprechenden Zustandswert aus dem geteilten Speicher auslesen und in einer Anzeigevorrichtung anzeigen. Beispielsweise können die technischen Mittel der zweiten Simulationsumgebung den entsprechenden Zustandswert aus dem geteilten Speicher auslesen und anzeigen.

Bei einem Ausfall aller Besatzungsmitglieder der ersten Gruppe in der ersten Simulationsumgebung infolge einer Abweichung von dem Normalbetrieb, beispielsweise durch Brandgase infolge eines Brands, kann ein Wechsel von der Erstpriorisierung zu der Zweitpriorisierung erfolgen. Infolge dieses Wechsels können nun Steuerparameter in der ersten Simulationsumgebung mittels der zumindest teilweise virtuellen Kopien der zweiten Steuerelemente der ersten Simulationsumgebung virtuell eingestellt und als Grundlage für die Simulation des Betriebs des militärischen Wasserfahrzeugs genutzt werden. Diese Möglichkeit ist im Falle der Erstpriorisierung beispielsweise gesperrt. Beispielsweise wird das Einstellen von Steuerparametern mittels der ersten physischen Steuerelemente in der ersten Simulationsumgebung gesperrt, d.h. die erste Simulationsumgebung wird beispielsweise von der Simulation des Betriebs des militärischen Wasserfahrzeugs abgetrennt. In diesem Fall werden die Einstellungen bzw. Schaltzustände in der ersten Simulationsumgebung irrelevant. Beispielsweise werden Rechte zum Einstellen von Steuerparametern von der ersten Simulationsumgebung auf die zweite Simulationsumgebung und damit vom realen Ram in den virtuellen transferiert.

Abweichungen von dem Normalbetrieb des militärischen Wasserfahrzeugs umfassen beispielsweise Fehlfunktionen des Wasserfahrzeugs. Beispielsweise umfassen Fehlfunktionen einen Brand, etwa in einer Kombüse des Wasserfahrzeugs, Fehler im EDV-System bzw. elektronischen Komponenten des Wasserfahrzeugs, oder einen Wassereinbruch in einem bestimmten Bereich des Wasserfahrzeugs. Eine Abweichung von dem Normalbetrieb, etwa bei einer Fehlfunktion, kann beispielsweise eine zu lösende Trainingsaufgabe darstellen, welche durch eine Simulationsvorgabe eines Trainers erzeugt wird. Beispielsweise kann sich eine Fehlfunktion aus der Simulation des Betriebs des Wasserfahrzeugs ergeben, etwa infolge eines Bedienungsfehlers oder negativen Auswirkungen eines Ereignisses eines Simulationsszenarios, wie etwa einem Beschuss des militärischen Wasserfahrzeugs.

Beispielsweise umfasst die Simulationsschnittstelle eine Liste von vordefinierten Abweichungen von dem Normalbetrieb, etwa in Form von vordefinierten Fehlfunktionen des Wasserfahrzeuges, für welche ein Wechsel von der Erstpriorisierungen zu Zweitpriorisierungen für ein oder mehrere der den entsprechenden Zweitpriorisierungen zugeordneten ersten Steuerelementen sowie ein oder mehreren den entsprechenden Zweitpriorisierungen zugeordneten Kopien der zweiten Steuerelemente stattfindet. Beispielsweise sind für die vordefinierten Abweichungen von dem Normalbetrieb jeweils ein oder mehrere Erstpriorisierungen festgelegt, für welche im Falle eines Auftretens der entsprechenden Abweichung ein Wechsel zu Zweitpriorisierungen erfolgt, welche der entsprechenden Abweichung zugeordnet sind. Tritt im Zuge der Simulation des Betriebs des Wasserfahrzeugs eine dieser Abweichungen von dem Normalbetrieb, so erfolgt für diese Abweichung der Wechsel von Erstpriorisierungen zu Zweitpriorisierungen, d.h. ein festgelter Wechsel von Erstpriorisierungen zu Zweitpriorisierungen, welche der entsprechenden Abweichung zugeordnet sind.

Nach Ausführungsformen ist in dem Speicher der Simulationsschnittstelle ferner aktuell für die Simulation des Wasserfahrzeugs gültige Steuerparameter gespeichert.

Ausführungsformen können den Vorteil haben, dass die Simulationsschnittstelle die für die Simulation des Wasserfahrzeugs gültigen Steuerparameter bereitstellt. Die entsprechenden Steuerparameter können dann ausgelesen werden und in der ersten sowie zweiten Simulationsumgebung für den simulierten Betrieb des Wasserfahrzeugs genutzt werden. Zusätzlich oder alternativ können die entsprechenden Steuerparameter für eine Simulation des Zustands des Wasserfahrzeugs, etwa durch ein Zustandssimulationsprogramm, verwendet werden. Die daraus resultierenden Zustandswerte können für eine Definition des Zustands des Wasserfahrzeugs und damit die Simulation des Wasserfahrzeugs in der ersten und zweiten Simulationsumgebung genutzt werden.

Nach Ausführungsformen definieren die Erstpriorisierungen und Zweitpriorisierungen jeweils Schreibrechte.

Nach Ausführungsformen legen die Erstpriorisierungen jeweils fest, dass der Leitstand der ersten Simulationsumgebung Schreibrechte zum Schreiben der mittels der ersten physischen Steuerelemente eingestellten und im simulierten Normalbetrieb des Wasserfahrzeugs gültigen Steuerparameter besitzt, während die technischen Mittel der zweiten Simulationsumgebung keine Schreibrechte zum Schreiben der aktuell für die Simulation des Wasserfahrzeugs gültigen Steuerparameter besitzen. Die Zweitpriorisierungen legen jeweils fest, dass die technischen Mittel der zweiten Simulationsumgebung Schreibrechte zum Schreiben der mittels der den Zweitpriorisierungen zugeordneten Kopien der zweiten Steuerelemente eingestellten und in der simulierten Abweichung von dem Normalbetrieb des Wasserfahrzeugs gültigen Steuerparameter besitzen, während der Leitstand keine Schreibrechte zum Schreiben der Steuerparameter, welche mittels der den Zweitpriorisierungen zugeordneten ersten physischen Steuerelemente eingestellt sind, als aktuell für die Simulation des Wasserfahrzeugs gültige Steuerparameter besitzt.

Ausführungsformen können den Vorteil haben, dass die Erstpriorisierungen und Zweitpriorisierungen jeweils über Definitionen von Schreibrechten implementiert werden können. Im Falle der Erstpriorisierungen wird beispielsweise jeweils festgelegt, dass der Leitstand der ersten Simulationsumgebung Schreibrechte zum Schreiben von Steuerparameter besitzt. In diesem Fall handelt es sich bei den entsprechenden Steuerparametern, die geschrieben werden, um die mittels der ersten physischen Steuerelemente eingestellten Steuerparameter. Somit handelt es sich im Normalbetrieb bei den mittels der ersten physischen Steuerelemente eingestellten Steuerparameter um die für den simulierten Normalbetrieb des Wasserfahrzeugs gültigen Steuerparameter, da nur diese entsprechend in der Simulationsschnittstelle als gültig gespeichert werden. Im Falle der Abweichung von dem Normalbetrieb können die Zweitpriorisierungen festlegen, dass die technischen Mittel der zweiten Simulationsumgebung Schreibrechte besitzen. In diesem Fall werden die mittels der virtuellen Kopien der zweiten Steuerelemente eingestellten Steuerparameter in die Simulationsschnittstelle geschrieben und besitzen damit Gültigkeit für die simulierte Abweichung von dem Normalbetrieb des Wasserfahrzeugs. Ein Wechsel zwischen der Erstpriorisierung und der Zweitpriorisierung, d.h. ein Wechsel der Zuordnung der Schreibrechte, kann beispielsweise durch ein Überschreiben der entsprechenden Zuordnungen von Schreibrechten erfolgen. Alternative können die Erstpriorisierungen und die Zweitpriorisierungen die entsprechenden Schreibrechte jeweils definieren, wobei ein Wechsel zwischen Erstpriorisierungen und Zweitpriorisierungen beispielsweise durch Setzen eines oder mehrerer Flags implementiert werden kann. Beispielsweise werden die entsprechenden Flags in der Simulationsschnittstelle der Datenbank mit den Definitionen der Steuerelemente sowie der Erstpriorisierungen und/oder Zweitpriorisierungen gespeichert.

Nach Ausführungsformen besitzt der Leitstand der ersten Simulationsumgebung Schreibrechte zum Schreiben der mittels der ersten physischen Steuerelemente eingestellten Steuerparameter, ebenso wie die technischen Mittel der zweiten Simulationsumgebung Schreibrechte zum Schreiben der mittels der Kopien der zweiten Steuerelemente eingestellten Steuerparameter besitzen.

Die Erstpriorisierungen legen jeweils fest, dass die mittels der ersten physischen Steuerelemente eingestellten und von dem Leitstand geschriebenen Steuerparameter als im simulierten Normalbetrieb des Wasserfahrzeugs gültige Steuerparameter gelesen werden, während die mittels der Kopien der zweiten Steuerelemente eingestellten und von den technischen Mitteln der zweiten Simulationsumgebung geschriebene Steuerparameter nicht gelesen werden.

Die Zweitpriorisierungen legen jeweils fest, dass die mittels der den Zweitpriorisierungen zugeordneten Kopien der zweiten Steuerelemente eingestellten und von den technischen Mitteln der zweiten Simulationsumgebung geschriebene Steuerparameter als für die simulierte Abweichung von dem Normalbetrieb des Wasserfahrzeugs gültige Steuerparameter gelesen werden, während die mittels der den Zweitpriorisierungen zugeordneten ersten physischen Steuerelemente eingestellten und von dem Leitstand geschriebenen Steuerparameter nicht gelesen werden.

Ausführungsformen können den Vorteil haben, dass Einstellungen der Steuerparameter stets geschrieben werden, unabhängig davon, ob die Einstellung mittels eines der ersten physischen Steuerelemente oder mittels einer zumindest teilweise virtuellen Kopie eines der zweiten Steuerelemente erfolgt. Die entsprechenden Informationen liegen stets vor. Priorisierungsabhängig wird lediglich entschieden, welche der eingestellten bzw. geschriebenen Steuerparameter für die Simulation des Wasserfahrzeugs als gültige Steuerparameter für die Simulation des Wasserfahrzeugs verwendet werden.

In diesem Fall werden beispielsweise sowohl mittels der ersten physischen Steuerelemente eingestellte Steuerparameter, d.h. erste Steuerparameter, als auch mittels der Kopien der zweiten Steuerelemente eingestellte Steuerparameter, d.h. zweite Steuerparameter. Beispielsweise sind den Simulationsumgebungen jeweils Schnittstellenparameter, in welche die entsprechenden Simulationsumgebungen jeweils per Schnittstellendefintion schreiben dürfen. In diese Schnittstellenparameter können die Simulationsumgebungen beispielsweise jederzeit die in ihnen eingestellten Steuerparameter schreiben. Ein Flag, welches zwischen Erstpriorisierung, z.B. Fernbedienung, und Zweitpriorisierung, z.B. lokale Bedienung unterscheidet, signalisiert dem Simulationsmodell, welchen der Schnittstellenwerte es als für die Simulation des Wasserfahrzeugs gültigen Steuerparameter übernehmen soll. Wenn beispielsweise das Flag auf Normalbetrieb steht und die zweite Simulationsumgebung beispielsweise einen Öffnungsgrad einer virtuellen Kopie eines Ventils in der virtuellen Umgebung in die Simulationsschnittelle schreibt, steht dieser Steuerparameter zwar als Wert in der Simulationsschnittstelle bzw. in einem der zweiten Simulationsumgebung zugeordneten Schnittstellenparameter, wird aber nicht als gültiger Steuerparameter für die Simulation übernommen bzw. verwendet.

Nach Ausführungsformen definiert die Erstpriorisierungen, dass die Erfassung der mittels der ersten physischen Steuerelemente eingestellten Steuerparameter durch den Leitstand der ersten Simulationsumgebung aktiviert ist, während die Erfassung der mittels der Kopien der zweiten Steuerelemente eingestellten Steuerparameter durch die technischen Mittel der zweiten Simulationsumgebung deaktiviert ist. Die Zweitpriorisierungen definiert, dass die Erfassung der mittels der Kopien der zweiten Steuerelemente eingestellten Steuerparameter durch die technischen Mittel der zweiten Simulationsumgebung aktiviert ist, während die Erfassung der mittels der ersten physischen Steuerelemente eingestellten Steuerparameter durch den Leitstand der ersten Simulationsumgebung deaktiviert ist.

Ausführungsformen können den Vorteil haben, dass ein Wechsel zwischen Erstpriorisierungen und Zweitpriorisierungen beispielsweise durch ein Aktivieren und Deaktivieren entsprechender Sensoren zum Erfassen von Einstellungen der ersten bzw. zweiten Steuerelemente implementiert werden kann. Beispielsweise kann die Erstpriorisierung definieren, dass ein Erfassen der mittels der ersten physischen Steuerelemente eingestellten Steuerparameter durch den Leitstand aktiviert ist, während eine Erfassung mittels der virtuellen Kopien der zweiten Steuerelemente der eingestellten Steuerparameter durch die technischen Mittel der zweiten Simulationsumgebung deaktiviert ist. In diesem Fall kann beispielsweise die Simulationsschnittstelle den Leitstand der ersten Simulationsumgebung bzw. den technischen Mitteln der zweiten Simulationsumgebung jeweils anzeigen, ob ein Normalbetrieb oder eine Abweichung von dem Normalbetrieb der Simulation vorliegt. Im Falle des Normalbetriebs ist die Erfassung der Einstellungen der ersten physischen Steuerelemente aktiviert, während eine entsprechende Erfassung der virtuellen Kopien der zweiten Steuerelemente deaktiviert ist. Tritt nun im Zuge der Simulation des Wasserfahrzeugs eine Abweichung von dem Normalbetrieb auf, welcher einen Wechsel von Erstpriorisierungen zu Zweitpriorisierungen erfordert, wird die Erfassung der virtuellen Kopien der zweiten Steuerelemente beispielsweise aktiviert, während die Erfassung der ersten physischen Steuerelemente im Gegenzug beispielsweise deaktiviert wird. Beispielsweise zeigt die Simulationsschnittstelle an, dass ein Wechsel vom Normalbetrieb zu einer Abweichung von dem Normalbetrieb erfolgt, woraufhin der Leitstand der ersten Simulationsumgebung die Erfassung der Einstellung der ersten physischen Steuerelemente deaktiviert, während die technischen Mittel der zweiten Simulationsumgebung die Erfassung der virtuellen Kopien der zweiten Steuerelemente aktivieren.

Nach Ausführungsformen handelt es sich bei den Kopien der zweiten Steuerelemente jeweils um ein vollständiges virtuelles 3D-Modell des entsprechenden zweiten Steuerelements. Die technischen Mittel der zweiten Simulationsumgebung zum Bereitstellen der Kopien der zweiten Steuerelemente umfassen ein oder mehrere Ausgabegeräte mit ein der mehreren Displays zur visuellen Ausgabe der virtuellen 3D-Modelle sowie ein oder mehrere Eingabegeräte zur virtuellen Simulation einer Bedingung der virtuellen 3D-Modelle.

Ausführungsformen können den Vorteil haben, dass es sich bei den virtuellen Kopien der zweiten Steuerelemente um vollständig virtuelle 3D-Modell handelt. In diesem Fall erfolgt eine Einstellung der entsprechenden virtuellen Kopien der zweiten Steuerelemente ausschließlich im virtuellen Raum unter Verwendung von technischen Mitteln. Bei den technischen Mitteln kann es sich beispielsweise um einen Desktop-PC mit entsprechenden Eingabe- und Ausgabemitteln handeln. Ein Nutzer kann an dem entsprechenden Desktop-PC beispielsweise mittels der Eingabemittel, etwa einer Tastatur, Joystick und/oder Controller, einen Avatar in Simulation steuern, welcher die vollständige virtuelle Umgebung des entsprechenden Steuerelements betätigt. Die virtuelle Umgebung, insbesondere das vollständige virtuelle 3D-Modell des entsprechenden Steuerelements, wird dem entsprechenden Besatzungsmitglied beispielsweise auf einem Bildschirm des Desktop-PCs angezeigt. Ferner kann es sich bei den technischen Mitteln beispielsweise um ein Tablet oder ein anderes mobiles tragbares Endgerät handeln, welches sowohl Eingabe- als auch Ausgabemittel umfasst. Mittels der entsprechenden Eingabe- und Ausgabemittel des mobilen tragbaren Endgeräts, etwa in Form eines Touchscreens, kann ein Besatzungsmitglied einen Avatar in der virtuellen Umgebung steuern, welcher das ersten physische Steuerelement betätigt. Beispielsweise umfassen die technischen Mittel eine Datenbrille, etwa eine VR-Brille, welche ein Ausgabegerät darstellt, mittels dessen ein Besatzungsmitglied die virtuelle Simulation mit dem vollständigen virtuellen 3D-Modell des entsprechenden Steuerelements angezeigt wird. Ein die Datenbrille nutzendes Besatzungsmitglied kann einen Avatar innerhalb der virtuellen Simulation durch Gesten und/oder zusätzliche Controller steuern. Die entsprechenden Gesten können beispielsweise mittels digitaler Kameras erfasst und als Eingaben interpretiert werden.

Nach Ausführungsformen umfassen die technischen Mittel der zweiten Simulationsumgebung zum Bereitstellen der Kopien der zweiten Steuerelemente ein oder mehrere taktile Elemente zum physischen Nachstellen haptischer Eigenschaften der ein oder mehreren zweiten Steuerelemente. Die technischen Mittel umfassen ferner ein oder mehrere Augmented-Reality-Geräte, welche dazu konfiguriert sind, zu den taktilen Elementen jeweils ergänzende Bestandteile der entsprechenden zweiten Steuerelemente in virtueller Form bereitzustellen. Die ein oder mehreren Augmented-Reality-Geräte umfassen jeweils ein oder mehrere Displays zur visuellen Ausgabe der ergänzenden virtuellen Bestandteile der Kopien der zweiten Steuerelemente sowie ein oder mehrere Sensoren zum Erfassen von Interaktionen der Besatzungsmitglieder der zweiten Gruppe von Besatzungsmitgliedern, welche die ein oder mehreren Augmented-Reality-Geräte nutzen, mit den taktilen Elementen und/oder den ergänzenden virtuellen Bestandteilen im Zuge einer Bedingung der Kopien der zweiten Steuerelemente.

Ausführungsformen können den Vorteil haben, dass es sich bei der virtuellen Kopie des zweiten Steuerelements nicht um eine rein virtuelle Kopie handelt. Vielmehr wird ein taktiles Element bereitgestellt, welches den Vorteil hat, dass physisch haptische Eigenschaften des entsprechenden zweiten Steuerelements nachgestellt werden. Somit kann ein Besatzungsmitglied, welches die teilweise virtuelle Kopie des zweiten Steuerelements betätigen möchte, nicht nur auf eine korrekte theoretische Betätigung des zweiten Steuerelements, sondern auch hinsichtlich der haptischen Eigenschaften auf eine entsprechende Betätigung trainiert werden.

Ein solches taktiles Element ermöglicht es einen händischen Umgang mit dem entsprechenden zweiten Steuerelement zu trainieren. Das taktile Element ist beispielsweise zu drehen, umzulegen und/oder umfasst zwei Teile, welche auseinander- und/oder zusammengeschraubt werden müssen. Hierbei geht es um das konkrete händische Training an dem taktilen Element, um die konkreten Handgriffe durch praktisches Tun einfach und effizient zu trainieren.

Bei einem taktilen Element kann es sich beispielsweise um eine mechanische Vorrichtung handeln, welche eine mechanische Komponente eines zweiten physischen Steuerelements nachbildet, beispielsweise einen Hebel, einen Schalter, ein Handrad oder dergleichen. Dieses taktile Element weist in der zweiten Simulationsumgebung beispielsweise keine Funktionalität auf. In der physischen Realität der zweiten Simulationsumgebung führt die Betätigung des taktilen Elements beispielsweise zu keiner Eingabe. Die Verwendung des taktilen Elements führt beispielsweise zu einer Eingabe in der virtuellen Realität. Beispielsweise verfügen militärische Wasserfahrzeuge regelmäßig Vorrichtungen zum händischen Bedienen mechanischer Komponenten des Wasserfahrzeugs, wie etwa Handräder. Ein solches Handrad kann beispielsweise als taktiles Element verwendet werden und führt in der virtuellen Realität dazu, dass das Verhalten des Wasserfahrzeugs entsprechend der Einstellung des Handrads simuliert wird. Gleichzeitig führt das Verwenden eines realen mechanischen Handrads dazu, dass das zu trainierende Besatzungsmitglied eine haptische Erfahrung während des Trainings macht, eine Vorstellung für die benötigte Kraft entwickelt und gegebenenfalls seine händischen Fähigkeiten zur schnellen Durchführung der Aufgabe optimieren kann. Vorteilhaft kann sein, wenn das taktile Element, beispielsweise ein Handrad, eine vergleichbare Form, Haptik und/oder Widerstand aufweist, den auch das reale zweite Steuerelement in dem realen Wasserfahrzeug aufweist. Hierbei kommt es nicht notwendiger auf Exaktheit an, sondern darauf, dass das Besatzungsmitglied ein intuitives Gefühl dafür entwickeln kann, wie sich das entsprechende zweite Steuerelement und dessen Betätigung anfühlt, etwa wie viel Kraft zur Betätigung aufzuwenden ist.

Dies kann insbesondere für das Training von Stresssituationen relevant sein, in welchen es nicht nur darum geht, zu wissen, wie ein entsprechendes zweites Steuerelement zu betätigen ist, sondern auch die tatsächliche physische Betätigung zu trainieren. Die entsprechende physische Betätigung sollte motorisch durch das Besatzungsmitglied abgespeichert werden, sodass bei einer tatsächlichen Abweichung von dem Normalbetrieb des Wasserfahrzeugs, etwa im Zuge einer Fehlfunktion des Wasserfahrzeugs, unter hohem Stress die abgespeicherten motorischen Erfahrungen lediglich abgerufen müssen und somit ohne Nachdenken die richtigen Handgriffe intuitiv anwendet werden.

Ein entsprechendes taktiles Element kann in die Simulation unter Verwendung von Augmented-Reality-Geräten eingebunden werden. Die entsprechenden Augmented-Reality-Geräte können beispielsweise von den technischen Mitteln der zweiten Simulationsumgebung bereitgestellt werden. Diese Geräte können dazu konfiguriert sein, die taktilen Elemente durch zusätzliche Bestandteile in virtueller Form zu ergänzen.

Beispielsweise kann virtuell der Hintergrund und/oder die Umgebung des entsprechenden zweiten Steuerelements ergänzt werden, sodass das entsprechende Besatzungsmitglied darauf trainiert wird, das zu betätigende zweite Steuerelement in einer komplexen technischen Umgebung mit einer Vielzahl von technischen Komponenten schnell zu erkennen. Die tatsächliche Betätigung des entsprechenden zweiten Steuerelements kann dann durch das taktile Element auch physisch trainiert werden. Ferner können die ergänzenden Bestandteile beispielsweise Hinweise anzeigen und/oder Komponenten des zu betätigenden zweiten Steuerelementes visuell ergänzen, welche das taktile Element nicht umfasst. Die ergänzenden virtuellen Bestandteile können auf Displays der Augmented-Reality-Geräte bereitgestellt und mit dem taktilen Element überlagert werden. Beispielsweise umfassen die Augmented-Reality-Geräte eine Datenbrille mit einem semitransparenten Display, wodurch ergänzende Bestandteile in virtueller Form angezeigt. Mit diesen ergänzenden virtuellen Bestandteilen kann das durch das semitransparente Display sichtbare taktile Element visuell überlagert und/oder ergänzt werden.

Unter einer Augmented Reality, d.h. einer erweiterten Realität, wird hier eine computergestützte Erweiterung der Realitätswahrnehmung verstanden. Die Erweiterung der Realitätswahrnehmung kann grundsätzlich alle menschlichen Sinnesmodalitäten ansprechen. Im vorliegenden Fall wird aber zumindest die visuelle Wahrnehmung angesprochen, etwa durch eine visuelle Darstellung von Informationen, etwa die Ergänzung der Wahrnehmung von realen Objekten oder von Bildern oder Videos der entsprechenden realen Objekte mit computergenerierten virtuellen Zusatzinformationen und/oder virtuellen Objekten mittels Einblendung/Überlagerung.

Beispielsweise betrifft die Erweiterung der Realitätswahrnehmung eine Erweiterung der Wahrnehmung der physischen Wirklichkeit/Umgebung ohne elektronische Signalverarbeitung auf natürliche Weise in der Analogwelt. Beispielsweise werden Sinneswahrnehmungen wie Bilder allenfalls durch klassische Hilfsmittel, wie eine Vergrößerungsoptik oder einen Spiegel, abgebildet. Virtuelle Informationen, wie Bilder/Objekte, können auf unterschiedliche Art eingeblendet, etwa durch eine optische Projektion auf eine durchsichtige Scheibe, durch welche auch die entsprechenden natürlichen physischen Objekte betrachtet werden. Virtuelle Informationen werden beispielsweise mittels einer auf einer Sichtfläche, etwa einem Glas einer Datenbrille, integrierte elektrooptische Anzeige mit durchsichtigen Bereichen und zusätzlich virtuell eingeblendeten Informations- und/oder Bildteilen dargestellt. Dies kann beispielsweise mit einer Flüssigkristallanzeige realisiert werden, welche im Grundzustand weitgehend durchsichtig ist und in aktivierten Bereichen die virtuellen Elemente einblendet.

Beispielsweise betrifft die Erweiterung der Realitätswahrnehmung eine Erweiterung der Wahrnehmung der physischen Wirklichkeit/Umgebung, welche einer photoelektrischen Umwandlung einer elektronischen Signalverarbeitung unterworfen ist, bevor sie über eine künstliche Wiedergabe wahrgenommen wird. In diesem Fall erfolgt eine Kombination/Überlagerung der Wiedergabe von Sinneswahrnehmungen mit virtuellen Elementen ausschließlich auf elektronische Weise. Dazu werden Sensordaten, etwa einer Digitalkamera mittels Signalverarbeitung durch softwaregesteuerte Prozessoren aufbereitet, um dann durch einen Ausgangswandler, etwa eine wie Anzeige/Bildschirm, kombiniert wiedergegeben zu werden.

Ein Augmented-Reality-Gerät ist somit ein Gerät, welches dazu konfiguriert ist, Objekte der realen Welt in Echtzeit mit Informationen und/oder Projektionen von digitalen Objekten zu versehen und/oder überlagern, während die entsprechenden Objekte der realen Welt von einem Nutzer des Augmented-Reality-Geräts wahrgenommen werden. Auf diese Weise wird die Wahrnehmung des Nutzers von Objekten der realen Welt durch Informationen und/oder Projektionen digitaler Objekte erweitert. So kann ein Augmented-Reality-Gerät dazu konfiguriert sein, Folgendes zu implementieren und/oder zu verwenden: eine Kombination von Objekten der realen Welt mit virtuellen Informationen und/oder virtuellen Objekten, eine Echtzeit-Interaktion in Form einer Echtzeit-Anpassung von Informationen und/oder digitalen Objekten an Veränderungen der Objekte der realen Welt und/oder an Veränderungen der Wahrnehmung von Objekten der realen Welt, und eine 3D-Registrierung von virtuellen Objekten mit Objekten der realen Welt. Die virtuellen Informationen und/oder virtuellen Objekte, mit denen die realen Objekte überlagert werden, können konstruktiv sein, zum Beispiel indem sie zu den realen Objekten hinzugefügt werden, oder destruktiv, zum Beispiel indem sie zumindest einen Teil der realen Objekte verdecken. Die virtuellen Informationen und/oder virtuellen Objekte können beispielsweise nahtlos mit der Rezeption der Objekte der realen Welt, d.h. der physischen Objekte der physischen Welt, verwoben werden, so dass sie von dem Nutzer als ein immersiver Aspekt der realen Welt wahrgenommen werden. Auf diese Weise kann ein Augmented-Reality-Gerät die laufende Wahrnehmung einer realen Umgebung durch den Nutzer verändern. Dabei wird die reale Umgebung des Nutzers nicht vollständig durch eine simulierte digitale Umgebung ersetzt, wie es bei einer virtuellen Realität der Fall ist. Die reale Umgebung, d.h. die Wahrnehmung der realen Umgebung durch den Nutzer, wird vielmehr mit virtuellen Informationen und/oder virtuellen Objekten angereichert.

Ein Augmented-Reality-Gerät ermöglicht es beispielsweise Komponenten der virtuellen Welt in die Wahrnehmung der realen Welt durch den Nutzer einzublenden. Dies kann eine Integration von immersiven Sinneseindrücken umfassen, die vom Nutzer als natürliche Teile der wahrgenommenen Umgebung wahrgenommen werden. Augmented-Reality-Technologie kann beispielsweise verwendet werden, um die Wahrnehmung der physischen Umgebung durch den Nutzer mit virtuellen Informationen und/oder virtuellen Objekten zu erweitern, die dem Nutzer eine verbesserte Wahrnehmung ermöglichen. Mit Hilfe von Augmented Reality-Technologien können Informationen über die reale Umgebung des Nutzers interaktiv und virtuell manipuliert werden. Virtuelle Informationen über die Umgebung und ihre Objekte können in die reale Welt eingeblendet werden. Erweiterungsverfahren können in Echtzeit und in semantischem Zusammenhang mit physischen Objekten in der Umgebung durchgeführt werden.

Ein Augmented-Reality-Gerät kann beispielsweise ein am Kopf montiertes Display, eine Datenbrille, ein Head-up-Display, eine Kontaktlinse, ein virtuelles Netzhautdisplay, ein Eye-Tap oder ähnliches umfassen. Ein Head-Mounted-Display (HMD) ist ein Anzeigegerät, das auf der Stirn getragen wird, etwa mittels eines Gurts oder eines Helms. Ein HMD ist so konfiguriert, dass es sowohl Bilder der physischen Welt als auch virtuelle Informationen und/oder virtueller Objekte im Sichtfeld des Nutzers anzeigt. Das HMD kann beispielsweise Sensoren zur Überwachung von sechs Freiheitsgraden verwenden, die es dem System ermöglichen, virtuelle Informationen mit der physischen Welt abzugleichen und entsprechend den Kopfbewegungen des Nutzers anzupassen.

Ein Augmented-Reality-Gerät kann zum Beispiel eine Datenbrille umfassen, wobei eine Augmented-Reality-Anzeigen auf der Brille dargestellt wird. Das Augmented-Reality-Gerät kann eine Datenbrille umfassen, die ein oder mehrere Digitalkameras einsetzt, um die reale Sicht des Nutzers abzufangen und eine erweiterte (augmented) Darstellung durch ein Okular wieder anzuzeigen. Das Augmented-Reality-Gerät kann zum Beispiel Augmented-Reality-Bilder durch ein Brillenglas projizieren oder von einer Oberfläche des Brillenglases reflektieren.

Beispielsweise und insbesondere wird als Augmented-Reality-Gerät eine Datenbrille verwendet, welche eine direkte Sicht auf die Umgebung ermöglicht und zusätzlich Elemente virtuell in die Umgebung einblendet. Beispielsweise werden dann virtuelle Teile der zweiten Steuerelemente in die reale Umgebung der zweiten Simulationsumgebung über die entsprechende Datenbrille projiziert. Ferner wird beispielsweise die Umgebung des militärischen Wasserfahrzeugs, in welcher das entsprechende zweite Steuerelement angeordnet ist, in die reale Umgebung der zweiten Simulationsumgebung projiziert. Beispielsweise können auch Avatare weiterer an dem Training teilnehmender Besatzungsmitglieder in die reale Umgebung der zweiten Simulationsumgebung projiziert werden. Beispielsweise ermöglicht ein halbdurchlässiger Spiegel als Brille die Sicht auf die Umgebung und auf ein Display, welches die zusätzlichen Elemente der virtuellen Realität darstellt. Alternativ kann die Datenbrille auch eine Digitalkamera aufweisen, welche die Umgebung erfasst, in die Aufnahmebilder dann diese zusätzlichen Elemente der virtuellen Realität hineinrechnet und das Gesamtbild dann dem die entsprechende Datenbrille nutzenden Besatzungsmitglied darstellt.

Ein Augmented-Reality-Gerät kann zum Beispiel ein Head-up-Display (HUD) umfassen. Ein **HUD** ist ein transparentes Display, das Daten anzeigt, ohne dass der Nutzer seinen Blick von seinem gewohnten Standpunkt abwenden muss.

Ein Augmented-Reality-Gerät kann zum Beispiel eine Kontaktlinse umfassen, die Augmented-Reality-Bilder anzeigt. Eine solche bionische Kontaktlinse kann ein in die Linse eingebettetes Anzeigeelement mit integrierten Schaltkreisen, LEDs und einer Antenne für eine drahtlose Kommunikation umfassen.

Ein Augmented-Reality-Gerät kann zum Beispiel eine virtuelle Netzhautanzeige (VRD) umfassen. Das Augmented-Reality-Gerät kann so konfiguriert sein, dass es eine Anzeige direkt auf die Netzhaut des Auges eines Nutzers scannt.

Ein Augmented-Reality-Gerät kann zum Beispiel ein monokelartiges, am Kopf befestigtes Display umfassen, das vor einem Auge getragen wird und die Funktionen einer Digitalkamera und eines Displays kombiniert. Lichtstrahlen, die andernfalls durch die Mitte der Linse des Auges des Nutzers fallen würden, können eingefangen und durch synthetisches, computergesteuertes Licht für jeden echten Lichtstrahl ersetzt werden.

Nach Ausführungsformen umfassen die ein oder mehreren ersten Steuerelemente ein oder mehrere Ventile, Schalter und/oder berührungssensitive Elemente des Wasserfahrzeugs. Nach Ausführungsformen umfassen die ein oder mehreren zweiten Steuerelemente ein oder mehrere Ventile, Schalter und/oder berührungssensitive Elemente des Wasserfahrzeugs.

Nach Ausführungsformen umfassen die ein oder mehreren ersten Steuerelemente jeweils eine mechanisch betätigbare Komponente. Nach Ausführungsformen umfassen die ein oder mehreren zweiten Steuerelemente jeweils eine mechanisch betätigbare Komponente.

Beispielsweise handelt es sich bei einem ersten und/oder zweiten Steuerelement um ein Ventil oder einen Schalter mit einem elektrischen Antrieb, der per Automationssystem über den Leitstand in der ersten Simulationsumgebung und/oder über eine virtuelle Simulation des Leitstands in der zweiten Simulationsumgebung bedient werden kann. Als Rückfallmöglichkeit bei einem Ausfall oder einer Funktionsstörung des elektrischen Antriebs umfasst das Ventil oder der Schalter eine Vorrichtung zur händischen Betätigung. Beispielsweise umfasst das Ventil ein Handrad, welches direkt auf das Getriebe des Ventils geht und eine Betätigung des Ventils per Hand ermöglicht. Beispielsweise lässt sich der Schalter mechanisch per Hand umlegen. Beispielsweise umfasst das entsprechende erste und/oder zweite Steuerelement einen Hebel, welcher sich mechanisch per Hand umlegen lässt.

Nach Ausführungsformen umfasst die erste Simulationsumgebung eine physische Operationszentrale des Wasserfahrzeugs. Nach Ausführungsformen umfasst die erste Simulationsumgebung eine physische Brücke des Wasserfahrzeugs.

Nach Ausführungsformen wird die Simulationsschnittstelle von einem Simulationscomputersystem bereitgestellt, welches einen Speicher mit ausführbaren Programminstruktionen eines Zustandssimulationsprogramms zum Simulieren eines Zustands des Wasserfahrzeugs und einem digitalen Modell des Wasserfahrzeugs umfasst sowie einen Prozessor. Ein Ausführen der Programminstruktionen durch den Prozessor veranlasst das Simulationscomputersystem dazu, einen aktuellen Zustand des Wasserfahrzeugs unter Verwendung des digitalen Modells des Wasserfahrzeugs sowie der für die Simulation des Wasserfahrzeugs gültigen Steuerparameter zu simulieren.

Ausführungsformen können den Vorteil haben, dass mittels des Simulationscomputersystems ein aktueller Zustand des Wasserfahrzeugs simuliert bzw. berechnet werden kann. Hierzu nutzt das Simulationscomputersystem ein Simulationsprogramm. Das Simulationsprogramm verwendet ein digitales Modell des Wasserfahrzeugs. Das entsprechende digitale Modell des Wasserfahrzeugs beschreibt das Wasserfahrzeug und es werden Zustandsparameter des Wasserfahrzeugs sowie deren Abhängigkeiten definiert. Das Zustandssimulationsprogramm greift beispielsweise auf die gültigen Steuerparameter des Wasserfahrzeugs zurück und berechnet in Abhängigkeit von diesen Steuerparametern die für die Zustandsparameter des Wasserfahrzeugs aktuell gültigen Zustandswerte. Die resultierenden Zustandswerte werden der ersten Simulationsumgebung bzw. dem Leitstand sowie der zweiten Simulationsumgebung bzw. den technischen Mitteln der zweiten Simulationsumgebung zur Verfügung gestellt, sodass diese der ersten und zweiten Gruppe von Besatzungsmitgliedern jeweils den aktuell simulierten Zustand des Wasserfahrzeugs anzeigen können.

Ferner erfolgt beispielsweise auch eine Bewegungssteuerung einer bewegbar gelagerten Plattform, auf welcher die erste Simulationsumgebung angeordnet sein kann, in Abhängigkeit von berechneten Zustandswerten des Wasserfahrzeugs, z.B. Neigungswinkeln des Wasserfahrzeugs.

Beispielsweise umfasst das digitale Modell des Wasserfahrzeugs ein hydrodynamisches Modell zur Berechnung der Bewegung des Wasserfahrzeugs. Beispielsweise werden Befehle des Steuerstands zum Steuern des Wasserfahrzeugs an das Simulationscomputersystem. Von dem Zustandssimulationsprogramm wird unter Verwendung des hydrodynamischen Modells beispielsweise eine Geschwindigkeit als Zustandswert des Wasserfahrzeugs berechnet. Diese Geschwindigkeit kann beispielsweise zur Bestimmung der Position des Wasserfahrzeugs verwendet werden. Beispielsweise kann diese Geschwindigkeit eine von einem Taktiksimulationsprogramm ausgelesen und zur Berechnung der Position des Wasserfahrzeugs in einer taktischen Lage verwendet werden.

Bei einem simulierten Waffenabschuss einer Bordwaffe mit Munition, deren Gewicht einen relevanten Einfluss auf das Gesamtgewicht des Wasserfahrzeugs, wie etwa ein Torpedo im Falle eines Unterseeboots, kann beispielsweise eine Verringerung des Gewichts des Wasserfahrzeugs als aktualisierter Zustandswert berechnet werden. Eine Verringerung des Gewichts kann beispielsweise Einfluss auf den Tiefgang bzw. die Tauchtiefe des Wasserfahrzeugs haben.

Nach Ausführungsformen erfolgt ein Wechsel von dem simulierten Normalbetrieb des Wasserfahrzeugs zu der simulierten Abweichung von dem Normalbetrieb des Wasserfahrzeugs auf einen Empfang eines externen Wechselbefehls durch die Simulationsschnittstelle hin.

Ausführungsformen können den Vorteil haben, dass ein Wechsel von dem simulierten Normalbetrieb des Wasserfahrzeugs zu der simulierten Abweichung von dem Normalbetrieb des Wasserfahrzeugs auf einen externen Wechselbefehl hin erfolgen kann. Der entsprechende externe Wechselbefehl kann beispielsweise durch ein an der Simulation beteiligtes Besatzungsmitglied, etwa den Kapitän des Wasserfahrzeugs, durch eine entsprechende Eingabe erfolgen. Beispielsweise wird der externe Wechselbefehl von einem Trainer eingegeben, welcher die Simulation leitet und nicht zu den Besatzungsmitgliedern gehört. Somit kann individuell jederzeit von dem Normalbetrieb zu einer Abweichung von dem Normalbetrieb, etwa auf einen Fehlbetrieb, gewechselt werden und eine schnelle Reaktionsfähigkeit der an dem Training teilnehmenden Besatzungsmitgliedern trainiert werden.

Beispielsweise umfasst das Simulationssystem einen Kontrollraum mit Eingabemitteln zur Steuerung des Ablaufs der Simulation in der ersten und zweiten Simulationsumgebung. Beispielsweise sind die Eingabemittel zum Eingriff in die Simulation des Betriebs des Wasserfahrzeugs ausgebildet sind. Beispielsweise können über die Eingabemittel der Ausfall einzelner Stationen, ein Wassereinbruch oder ein Feuerausbruch simuliert werden. Hierdurch können auch nicht übliche Betriebszustände, d.h. Abweichungen von dem Normalbetrieb, insbesondere Fehlfunktionen, leicht dargestellt werden. Ein Trainer, welcher die Simulation leitet und nicht zu den Besatzungsmitgliedern gehört, kann somit das Training beispielsweise von dem Kontrollraum aus überwachen und gegebenenfalls eine Fehlfunktion und/oder einen Wechsel von der Erstpriorisierung zu der Zweitpriorisierung initiieren. Beispielsweise gibt der Trainer hierzu unter Verwendung der Eingabemittel zur Steuerung des Ablaufs der Simulation einen entsprechenden Befehl ein.

Nach Ausführungsformen erfolgt ein Wechsel von dem simulierten Normalbetrieb des Wasserfahrzeugs zu der simulierten Abweichung von dem Normalbetrieb des Wasserfahrzeugs durch die Simulationsschnittstelle automatisch im Zuge des Ausführens des Zustandssimulationsprogramms, falls der simulierte Zustand des Wasserfahrzeugs die Abweichung von dem Normalbetrieb umfasst.

Ausführungsformen können den Vorteil haben, dass der Wechsel von dem simulierten Normalbetrieb des Wasserfahrzeugs zu der simulierten Abweichung von dem Normalbetrieb ein Ergebnis des simulierten Zustands des Wasserfahrzeugs sein kann. Umfasst der mittels des Zustandssimulationsprogramms simulierte Zustand des Wasserfahrzeugs die entsprechende Abweichung von dem Normalbetrieb, so kann ein entsprechender Wechselbefehl an die Simulationsschnittstelle durch das Computersystem gegeben werden.

Nach Ausführungsformen umfasst die simulierte Abweichung von dem Normalbetrieb des Wasserfahrzeugs einen Ausfall der ersten Gruppe von Besatzungsmitgliedern. Ausführungsformen können den Vorteil haben, dass das Simulationssystem es ermöglicht, einen vollständigen oder teilweisen Ausfall der ersten Gruppe von Besatzungsmitgliedern zu trainieren. Ein entsprechender Ausfall der ersten Gruppe von Besatzungsmitgliedern kann beispielsweise daraus resultieren, dass die entsprechenden Besatzungsmitglieder physisch nicht mehr in der Lage sind, ihre Aufgaben auszuführen und/oder gemäß der Simulation den von der ersten Simulationsumgebung umfassten Bereich des Wasserfahrzeugs räumen mussten. Entsprechende Szenarien können beispielsweise bei einem Brand auftreten.

Nach Ausführungsformen handelt es sich bei dem militärischen Wasserfahrzeug um eines der folgenden Wasserfahrzeuge: ein Unterseeboot, einen Flugzeugträger, einen Hubschrauberträger, einen Kreuzer, einen Zerstörer, eine Fregatte, eine Korvette, ein Landungsschiff, einen Minenleger, ein Minenräumfahrzeug, ein Minenjagdfahrzeug, ein Patrouillenboot, ein Schnellboot, ein Aufklärungsschiff.

Ausführungsformen umfassen ferner ein computerbasiertes Verfahren zum Betrieb eines Simulationssystems zum zeitgleichen Trainieren einer Mehrzahl von Besatzungsmitgliedern eines militärischen Wasserfahrzeugs. Das Simulationssystem umfasst eine erste Simulationsumgebung mit einem physischen Leitstand des Wasserfahrzeugs zum Trainieren einer ersten Gruppe von Besatzungsmitgliedern.

Die erste Simulationsumgebung umfasst ein oder mehrere erste physische Steuerelemente des Wasserfahrzeugs. Die ersten physischen Steuerelemente sind jeweils dazu konfiguriert, einen oder mehrere Steuerparameter für den Betrieb des Wasserfahrzeugs einzustellen. Der Leitstand ist dazu konfiguriert, mittels der ersten physischen Steuerelemente eingestellte Steuerparameter zu erfassen und an eine Simulationsschnittstelle des Simulationssystems zu kommunizieren.

Das Simulationssystem umfasst ferner eine von der ersten Simulationsumgebung räumlich getrennte zweite Simulationsumgebung zum Trainieren einer zweiten Gruppe von Besatzungsmitgliedern. Die zweite Simulationsumgebung umfasst technische Mittel, welche dazu konfiguriert sind, eine visuelle Simulation bereitzustellen, welche ein oder mehrere zumindest teilweise virtuelle Kopien ein oder mehrerer zweiter physischer Steuerelemente des Wasserfahrzeugs zum Einstellen der Steuerparameter umfasst. Die technischen Mittel sind ferner dazu konfiguriert, mittels der Kopien eingestellte Steuerparameter zu erfassen und an die Simulationsschnittstelle des Simulationssystems zu kommunizieren.

Die Simulationsschnittstelle des Simulationssystems umfasst einen Speicher. In dem Speicher ist eine Datenbank mit Definitionen der ein oder mehreren ersten Steuerelemente und der ein oder mehrere Kopien der ein oder mehreren zweiten Steuerelemente gespeichert. Die Definitionen für die definierten ersten Steuerelemente und Kopien der zweiten Steuerelemente legen jeweils eine Erstpriorisierung für einen simulierten Normalbetrieb des Wasserfahrzeugs fest, in welcher die Einstellungen der Steuerparameter gemäß den ersten physischen Steuerelementen gegenüber den Einstellungen gemäß den Kopien der zweiten Steuerelemente als für die Simulation des Wasserfahrzeugs ausschließlich gültige Einstellungen der Steuerparameter priorisiert werden.

Das Verfahren umfasst auf eine simulierte Abweichung von dem Normalbetrieb des Wasserfahrzeugs hin, wechseln von ein oder mehreren der Erstpriorisierungen zu ein oder mehrere Zweitpriorisierungen. Die ein oder mehreren Zweitpriorisierungen priorisieren für die simulierte Abweichung von dem Normalbetrieb Einstellungen ein oder mehrerer der Steuerparameter gemäß ein oder mehreren den Zweitpriorisierungen zugeordneten Kopien der zweiten Steuerelemente gegenüber Einstellungen gemäß ein oder mehreren den Zweitpriorisierungen zugeordneten ersten physischen Steuerelemente als für die Simulation des Wasserfahrzeugs ausschließlich gültige Einstellungen der entsprechenden Steuerparameter.

Ausführungsformen des Verfahrens können beispielsweise zum Betrieb jeder der vorgenannten beispielhaften Ausführungsformen des Simulationssystems zum zeitgleichen Trainieren einer Mehrzahl von Besatzungsmitgliedern eines militärischen Wasserfahrzeugs konfiguriert sein.

Im Weiteren werden Ausführungsformen der Erfindung mit Bezugnahme auf die Zeichnungen näher erläutert. Es zeigen:
- Figur 1: ein schematisches Blockdiagramm eines exemplarischen Simulationssystems,
- Figur 2: ein schematisches Diagramm einer ersten exemplarischen Simulationsumgebung,
- Figur 3: ein schematisches Diagramm einer zweiten exemplarischen Simulationsumgebung,
- Figuren 4: exemplarische Ausführungsformen von Steuerelementen,
- Figur 5: ein schematisches Blockdiagramm eines exemplarischen Leitstands,
- Figur 6: ein schematisches Blockdiagramm eines exemplarischen technischen Mittels,
- Figur 7: ein schematisches Blockdiagramm eines exemplarischen Simulationscomputersystems,
- Figur 8: ein schematisches Flussdiagramm einer exemplarischen Abweichung von dem Normalbetrieb,
- Figur 9: ein schematisches Flussdiagramm einer exemplarischen Abweichung von dem Normalbetrieb,
- Figur 10: ein schematisches Flussdiagramm einer exemplarischen Abweichung von dem Normalbetrieb,
- Figur 11: ein schematisches Flussdiagramm eines exemplarischen Verfahrens zum Simulieren des Zustands eines Wasserfahrzeugs,
- Figur 12: ein schematisches Blockdiagramm eines exemplarischen Simulationssystems,
- Figur 13: eine Darstellung eines exemplarischen Simulationssystems,
- Figur 14: eine Darstellung einer ersten exemplarischen Simulationsumgebung,
- Figur 15: eine Darstellung exemplarischer Konsolen eines Leitstands.

Elemente der nachfolgenden Ausführungsformen, die einander entsprechen, werden mit denselben Bezugszeichen gekennzeichnet.

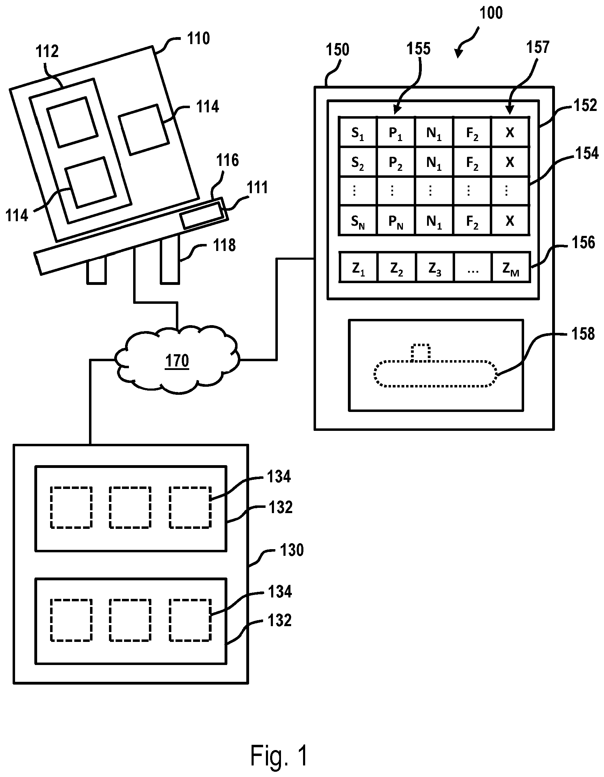

Figur 1 zeigt ein exemplarisches Simulationssystem 100. Das exemplarische Simulationssystem 100 umfasst eine erste Simulationsumgebung 110 sowie eine zweite Simulationsumgebung 130. Ferner umfasst das Simulationssystem 100 ein Simulationscomputersystem 150, welches eine Simulationsschnittstelle 152 bereitstellt. Die unterschiedlichen Komponenten des Simulationscomputersystems 100, d.h. die erste Simulationsumgebung 110, die zweite Simulationsumgebung 130 sowie das Simulationscomputersystem 150, sind mittels Kommunikationsverbindungen über ein Kommunikationsnetzwerk 170 kommunikativ miteinander verbunden. Die erste Simulationsumgebung 110 umfasst einen Leitstand 112, welcher beispielsweise erste physische Steuerelemente 114 bereitstellt, etwa in Form von Bedienelementen des Leitstands 112. Die erste Simulationsumgebung 110 kann ferner beispielsweise erste physische Steuerelemente 114 umfassen, welche nicht von dem Leitstand 112 umfasst sind. Die erste Simulationsumgebung 110 ist beispielsweise auf einer beweglichen Plattform 116 angeordnet. An der Plattform 116 sind Aktoren 118 angeordnet. Bei diesen Aktoren 118 kann es sich beispielsweise um hydraulische, pneumatische und/oder elektrische Aktoren handeln. Eine Bewegungssteuerung 111 der Plattform 116 steuert die Aktoren 118 an, um die Bewegung des Wasserfahrzeugs im Zuge des simulierten Betriebs nachzuahmen. Die Bewegungssteuerung 111 ist an der Plattform 116 angeordnet. Beispielsweise kann die Bewegungssteuerung 111 auch von der Plattform 116 entfernt angeordnet sein. Beispielsweise kann das Simulationscomputersystem 150 die Bewegungssteuerung 111 umfassen.

Die zweite Simulationsumgebung 130 umfasst technische Mittel 132, welche dazu konfiguriert sind, eine visuelle Simulation mit zumindest teilweisen virtuellen Kopien 134 zweiter physischen Steuerelemente bereitzustellen. Bei den entsprechenden technischen Mitteln 132 kann es sich beispielsweise um ein oder mehrere Desktop-PCs, mobile tragbare Endgeräte, wie etwa Tablets, oder Datenbrillen, handeln. Ein oder mehrere der entsprechenden zweiten physischen Steuerelemente können beispielsweise identisch zu ein oder mehreren ersten Steuerelementen 114 der ersten Simulationsumgebung 110 sein. Ein oder mehrere der entsprechenden zweiten physischen Steuerelemente können beispielsweise unterschiedlich zu ein oder mehreren ersten Steuerelementen 114 der ersten Simulationsumgebung 110 sein, aber jeweils dazu konfiguriert sein, denselben Steuerparameter einzustellen.

Die von dem Simulationscomputersystem 150 bereitgestellte Simulationsschnittstelle 152 umfasst beispielsweise eine Datenbank 154 mit Definitionen S₁, S₂, ... S_{N} der ersten Steuerelemente 114 und der zumindest teilweise virtuellen Kopien 134 der zweiten Steuerelemente. Beispielsweise umfasst die Datenbank 154 für jedes der Steuerelemente 114 und/oder jede Kopie 134 eines Steuerelements jeweils einen aktuell gültigen Steuerparameter 155, d.h. P₁, P₂, ... P_{N}. Beispielsweise sind diese in der Datenbank 154 eingetragenen Steuerparameter 155 die jeweils aktuell gültigen mittels Steuerelemente 114 oder den zumindest teilweise virtuellen Kopien 134 eingestellten Steuerparameter. Beispielsweise umfassen die in der Datenbank 154 eingetragenen Steuerparameter 155 alle mittels der ersten Steuerelemente 114 und der Kopien der zweiten Steuerelemente eingestellten Steuerparameter, aus welche jeweils die aktuell gültigen Steuerparameter basierend auf der jeweils geltenden Priorisierung ausgewählt werden. Ferner legt die Datenbank 154 für die Steuerelemente 114 und Kopien 134 von Steuerelementen beispielsweise jeweils Erstpriorisierungen N1, N₂, ... NN sowie Zweitpriorisierungen F₁, F₂, ... F_{N} fest. Die Erstpriorisierungen N₁, N₂, ... N_{N} definieren beispielsweise für einen Normalbetrieb des Wasserfahrzeugs die Einstellungen der ersten physischen Steuerelemente 114 als ausschließlich gültige Steuerparameter 155 zum Eintrag in die Datenbank 154. Die Zweitpriorisierungen F₁, F₂, ... F_{N} definieren beispielsweise jeweils die Einstellungen der den entsprechenden Zweitpriorisierungen F₁, F₂, ... F_{N} zugeordneten zumindest teilweise virtuellen Kopien 134 der zweiten physischen Steuerelemente als jeweils ausschließlich gültigen Steuerparameter 155 zum Eintrag in die Datenbank 154. Eine entsprechende Priorisierung können beispielsweise durch entsprechende Schreibrechte implementiert werden. Beispielsweise ordnen die Erstpriorisierungen N₁, N₂, ... N_{N} der ersten Simulationsumgebung 110 bzw. dem Leitstand 112 der ersten Simulationsumgebung 110 die alleinigen Schreibrechte zum Schreiben der gültigen Steuerparameter 155 in die Datenbank 154 zu. Beispielsweise ordnen die Zweitpriorisierungen F₁, F₂, ... F_{N} den technischen Mitteln 132 der zweiten Simulationsumgebung 130 die ausschließlichen Schreibrechte zum Schreiben der Steuerparameter 155 in die Datenbank 154 zu. Ein Wechsel zwischen den Betriebszuständen kann beispielsweise durch Setzen eines Flags 157 erfolgen. Ist ein entsprechendes Flag 157 für eines oder mehrere der Steuerelemente S₁, S₂, ... S_{N} gesetzt, so gelten beispielsweise die Zweitpriorisierungen F₁, F₂, ... F_{N} für die entsprechenden Steuerelemente S₁, S₂, ... S_{N}. Ist beispielsweise kein Flag 157 gesetzt, so gelten für die entsprechenden Steuerelemente S₁, S₂, ... S_{N} beispielsweise jeweils die Erstpriorisierung N₁, N₂, ... N_{N}. Alternativerweise kann beispielsweise ein Wechsel zwischen Betriebszuständen durch ein Überschreiben erfolgen. Beispielsweise umfasst die Datenbank 154 im Normalbetrieb nur die Erstpriorisierungen N₁, N₂, ... N_{N}. Beispielsweise werden im Falle einer simulierten Abweichung von dem Normalbetrieb des Wasserfahrzeugs die entsprechenden Erstpriorisierungen N₁, N₂, ... N_{N} jeweils durch entsprechende Zweitpriorisierungen F₁, F₂, ... F_{N} überschrieben.

Alternativerweise können die Erstpriorisierungen N1, N₂, ... N_{N} sowie die Zweitpriorisierungen F₁, F₂, ... F_{N} jeweils Aktivierungen der Erfassung der Einstellungen der ersten physischen Steuerelemente 114 bzw. der zumindest teilweise virtuellen Kopien 134 der zweiten physischen Steuerelemente definieren. Beispielsweise definieren die Erstpriorisierungen N₁, N₂, ... N_{N}, dass eine Erfassung der Einstellungen der ersten physischen Steuerelemente 114 durch die Simulationsumgebung 110 bzw. den Leitstand 112 aktiviert ist, während eine Erfassung der Einstellung der zumindest teilweise virtuellen Kopien 134 der zweiten physischen Steuerelemente deaktiviert ist. Demgegenüber definieren die Zweitpriorisierungen F₁, F₂, ... F_{N} beispielsweise eine Deaktivierung der Erfassung der Einstellung der ersten physischen Steuerelemente 114, während die Erfassung der Einstellungen der zumindest teilweise virtuellen Kopien 134 der zweiten physischen Steuerelemente aktiviert wird. Wiederum kann ein Wechsel zwischen Erstpriorisierungen N₁, N₂, ... N_{N} und Zweitpriorisierungen F₁, F₂, ... F_{N} mittels Flags oder eines entsprechenden Überschreibens implementiert werden.

Ferner umfasst die Schnittstelle 152 beispielsweise Zustandsdaten 156 mit Zustandswerten Z₁, Z₂, ... Z_{M}, welche das Simulationscomputersystem im Zuge des simulierten Betriebs des Wasserfahrzeugs berechnet. Beispielsweise führt das Simulationscomputersystem 150 ein Zustandssimulationsprogramm aus, welches unter Verwendung eines digitalen Modells 158 des Wasserfahrzeugs sowie der aktuellen Steuerparameter 155 die Zustände 156 des Wasserfahrzeugs berechnet. Für eine entsprechende Berechnung der aktuellen Zustände des Wasserfahrzeugs in Form der Zustandsdaten 156 verwendet das Simulationsprogram beispielsweise die zuletzt berechnete Zustandswerte als Ausgangswerte. Ergibt sich eine Änderung, werden die zuletzt berechneten Zustandswerte mit den entsprechenden aktualisierten Zustandswerten überschrieben. Die entsprechenden Zustandsdaten 156 können von der ersten Simulationsumgebung 110 bzw. dem Leitstand 112 sowie der zweiten Simulationsumgebung 130 bzw. den technischen Mitteln 132 über das Netzwerk 170 abgerufen werden, um den jeweiligen Besatzungsmitgliedern in der ersten Simulationsumgebung 110 und der zweiten Simulationsumgebung 130 den aktuellen Zustand des Wasserfahrzeugs anzuzeigen.

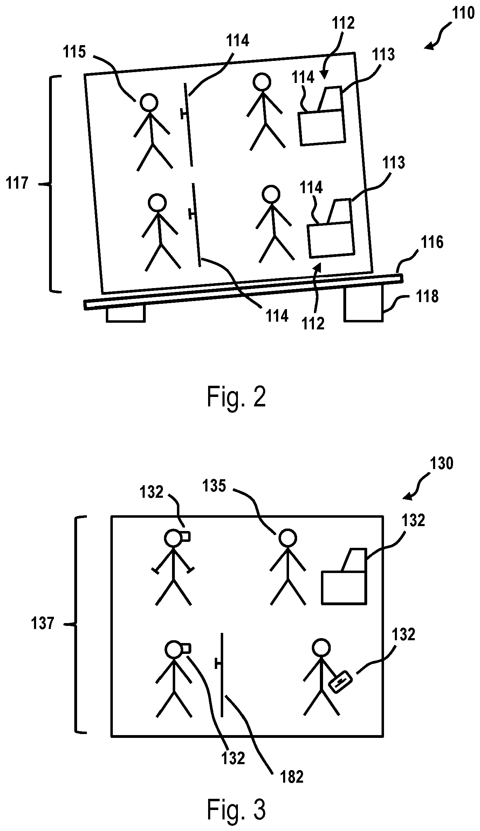

Figur 2 zeigt eine erste exemplarische Simulationsumgebung 110. Die Simulationsumgebung 110 ist beispielsweise auf einer beweglichen Plattform 116 angeordnet. An der Plattform 116 sind Aktoren 118, beispielsweise hydraulische, pneumatische und/oder elektrische Aktoren, angeordnet, welche dazu konfiguriert sind, Bewegungen des Wasserfahrzeugs im Zuge des simulierten Betriebs nachzuahmen. In der ersten Simulationsumgebung 110 befindet sich eine erste Gruppe 117 von Besatzungsmitgliedern 115, welche in der ersten Simulationsumgebung 110 trainiert werden. Zum Training der einzelnen Besatzungsmitglieder 115 der ersten Gruppe 117 von Besatzungsmitgliedern umfasst die erste Simulationsumgebung 110 einen Leitstand 112, beispielsweise mit ein oder mehreren Konsolen 113. Ferner umfassen die entsprechenden Konsolen beispielsweise ein oder mehrere erste physische Steuerelemente 114. Bei entsprechenden ersten physischen Steuerelementen handelt es sich beispielsweise um Bedienelemente der Konsole, wie etwa ein Touch-Display, einen Trackball und/oder ein oder mehrere Tasten. Zusätzlich oder alternativ umfasst die erste Simulationsumgebung 110 beispielsweise ein oder mehrere erste physische Steuerelemente 114 unabhängig von dem Leitstand 112. Bei den entsprechenden ersten physischen Steuerelemente 114 kann es sich beispielsweise um Schalter oder Ventile handeln. Im Zuge des simulierten Betriebs des Wasserfahrzeugs können die Besatzungsmitglieder 115 die ersten physischen Steuerelemente 114 dazu verwenden, Steuerparameter einzustellen, die entsprechend erfasst und an eine Simulationsschnittstelle kommuniziert werden. Basierend auf den Einstellungen der Steuerparameter mittels der ersten physischen Steuerelemente 114 werden gegebenenfalls Zustandsänderungen des Wasserfahrzeugs im Zuge der Simulation berechnet und entsprechend wiedergegeben. Die Wiedergabe der entsprechenden Zustände kann beispielsweise über Anzeigen der Konsolen 113 des Leitstands 112 und/oder über die Aktoren 118 erfolgen.

Figur 3 zeigt eine exemplarische zweite Simulationsumgebung 130 zum Trainieren einer zweiten Gruppe 137 von Besatzungsmitgliedern 135. Einzelne Besatzungsmitglieder 135 werden jeweils technische Mittel 132 bereitgestellt, welche dazu konfiguriert sind, eine visuelle Simulation bereitzustellen. Die entsprechende visuelle Simulation umfasst dabei zumindest teilweise virtuelle Kopien 134 zweiter Steuerelemente. Beispielsweise sind ein oder mehrere der zweiten Steuerelemente identisch zu ein oder mehreren der ersten Steuerelemente 114 der ersten Simulationsumgebung 110 und/oder beispielsweise sind ein oder mehrere der zweiten Steuerelemente unterschiedlich zu ein oder mehreren der ersten Steuerelemente 114 der ersten Simulationsumgebung 110, aber dazu konfiguriert, denselben Steuerparameter wie ein entsprechendes erstes Steuerelement 114 der ersten Simulationsumgebung 110einzustellen. Die visuelle Simulation kann beispielsweise den in der ersten Simulationsumgebung 110 simulierten Bereich des Wasserfahrzeugs umfassen. Alternativer Weise umfasst die visuelle Simulation den in der ersten Simulationsumgebung 110 simulierten Bereich des Wasserfahrzeugs beispielsweise nicht. Ferner kann die visuelle Simulation weitere Bereiche des Wasserfahrzeugs umfassen. Die technischen Mittel 132 können beispielsweise Datenbrillen umfassen, welche eine vollständige virtuelle Simulation ermöglichen, innerhalb derer ein Besatzungsmitglied 135 mittels Gestensteuerung und/oder ein oder mehreren Controllern mit den virtuellen Komponenten der Simulation interagieren kann. Beispielsweise umfassen die technischen Mittel 132 einen Bildschirm, welcher die vollständig virtuelle Simulation anzeigen kann, innerhalb derer ein Besatzungsmitglied 135 einen Avatar mittels entsprechender Eingabemittel steuern kann. Beispielsweise umfassen die technischen Mittel ein mobiles tragbares Endgerät in Form eines Tablets, welches eine vollständige virtuelle Simulation wiedergibt, in welcher ein Besatzungsmitglied 135 einen Avatar mittels des Tablets steuern kann. Beispielsweise umfassen die technischen Mittel 132 ein Augmented-Reality-Gerät, etwa in Form einer Datenbrille, welches dazu konfiguriert ist, ein von den technischen Mitteln 132 umfasstes taktiles Element 182 mit Bestandteilen des entsprechenden zweiten Steuerelements in virtueller Form zu ergänzen.

Dies hat den Vorteil, dass das entsprechende Besatzungsmitglied 135 die haptischen Eigenschaften des entsprechenden zweiten Steuerelements, welche durch das taktile Element 182 physisch nachgestellt werden, trainieren kann. Ergänzende Bestandteile des zweiten Steuerelements, welche nicht von dem taktilen Element 182 umfasst sind, werden beispielsweise in virtueller Form bereitgestellt. Ferner kann zudem die Umgebung, in welcher das entsprechende zweite Steuerelement angeordnet ist, in virtueller Form wiedergegeben werden.

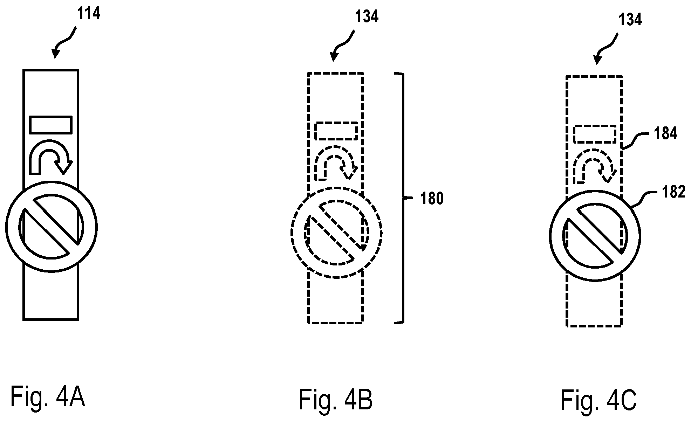

Figur 4a zeigt ein exemplarisches erstes Steuerelement 114 in physischer Form. Beispielhafter Weise ist ein erstes physisches Steuerelement 114 in Form eines Ventils mit einem Handrad zur händischen Betätigung gezeigt. Figur 4b zeigt eine virtuelle Kopie 134 eines zweiten physischen Steuerelements. Dieses zweite physische Steuerelement ist beispielsweise identisch mit dem ersten Steuerelement 114 aus Figur 4a. Bei der virtuellen Kopie handelt es sich u beispielsweise m ein vollständiges virtuelles 3D-Modelldes entsprechenden physischen Steuerelements 114 aus Figur 4a. Figur 4c zeigt schließlich eine teilweise virtuelle Kopie 134 eines zweiten Steuerelements, welches beispielsweise identisch ist mit dem ersten physischen Steuerelements 114 aus Figur 4a. Im Falle der teilweisen virtuellen Kopie 134 ist ein taktiles Element 182 in Form eines Handrads zum Schließen und Öffnen des entsprechenden Ventils vorgesehen. Ein Besatzungsmitglied, welches eine Betätigung des entsprechenden Steuerelements unter Verwendung der teilweisen virtuellen Kopie 134 trainiert, kann das taktile Element 182 fassen und physisch drehen, wodurch beispielsweise physisch die haptischen Eigenschaften des physischen Steuerelements 114 aus Figur 4a nachgestellt werden. Das entsprechende taktile Element 182 wird durch zusätzliche Bestandteile 182 in virtueller Form ergänzt, sodass sich für das entsprechende Besatzungsmitglied, welches die teilweise virtuelle Kopie 134 des zweiten physischen Steuerelements betätigt, ein visueller Gesamteindruck ergibt, der beispielsweise identisch mit dem visuellen Eindruck des physischen Steuerelements 114 aus Figur 4a ist. Zudem werden durch das taktile Element 182 auch die haptischen Eigenschaften bei der Betätigung des zugrundeliegenden zweiten physischen Steuerelements durch die die teilweise virtuelle Kopie 134 nachgeahmt.

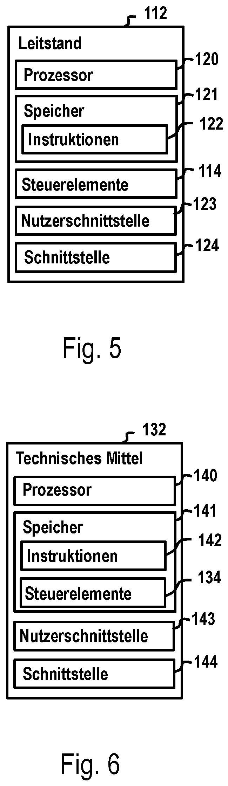

Figur 5 zeigt den Leitstand 112 in schematischer Form. Der Leitstand 112 umfasst einen Prozessor 120 sowie einen Speicher 121 mit Programminstruktionen 122. Durch ein Ausführen der Programminstruktionen 122 durch den Prozessor 120 des Leitstands 112 wird der Prozessor dazu gesteuert, Funktionen des Leitstands bereitzustellen und auszuführen. Hierzu umfasst der Leitstand eine Nutzerschnittstelle 123, welche Eingabe- und Ausgabemittel umfasst, sodass ein Besatzungsmitglied den Leitstand unter Verwendung der Nutzerschnittstelle 123 zur Steuerung des Wasserfahrzeugs nutzen kann. Ferner umfasst der Leitstand 112 eine Schnittstelle zur Ausgabe und Eingabe von Kommunikationssignalen. Beispielsweise kann der Leitstand 112 Steuersignale an Komponenten des Wasserfahrzeugs senden und Rückmeldungen über den Zustand der entsprechenden Komponenten des Wasserfahrzeugs erhalten. Im Zuge des Simulationssystems dient die Schnittstelle 124 zur Kommunikation über das Netzwerk 170, beispielsweise technischen Mitteln 132 der zweiten Simulationsumgebung 130 und/oder mit einem Simulationscomputersystem 150. Ferner umfasst der Leitstand 112 beispielsweise ein oder mehrere erste physische Steuerelemente 114.

Figur 6 zeigt eine schematische Darstellung eines exemplarischen technischen Mittels 132. Das technische Mittel 132 umfasst einen Prozessor 140 sowie einen Speicher 141 mit Programminstruktionen 142. Eine ausführende Programminstruktionen 142 durch den Prozessor 141 veranlasst den Prozessor 141 dazu, das technische Mittel 132 Funktionen für ein Besatzungsmitglied bereitzustellen. Hierzu umfasst das technische Mittel 132 beispielsweise eine Nutzerschnittstelle 143 mit Ausgabemitteln. Die Nutzerschnittstelle 143 ermöglicht es dem Besatzungsmitglied mit dem technischen Mittel 132 zu interagieren. In dem Speicher 141 des technischen Mittels 132 ist beispielsweise ein vollständiges oder teilweises virtuelles Modell zum Beistellen von zumindest teilweise virtuellen Kopien 134 von ein oder mehreren zweiten Steuerelemente gespeichert. Hierbei handelt es sich beispielsweise um ein vollständiges virtuelles 3D-Modell, des entsprechenden zweiten Steuerelements oder um ergänzende Bestandteile des entsprechenden zweiten Steuerelements in virtueller Form. Das technische Mittel 132 ist dazu konfiguriert unter Verwendung der Nutzerschnittstelle 134 einem das technische Mittel 132 nutzenden Besatzungsmitglied eine visuelle Simulation bereitzustellen. Diese visuelle Simulation umfasst die jeweiligen zumindest teilweise virtuellen Kopien 134 der zweiten Steuerelemente. Die Nutzerschnittstelle 134 ermöglicht es dem Besatzungsmitglied beispielsweise ferner mit der bereitgestellten zumindest teilweise virtuellen Kopie 134 zu interagieren. Ferner umfassen die technischen Mittel 132 beispielsweise Kommunikationsschnittstellen 144 zur Kommunikation mit externen Komponenten, beispielsweise mit anderen technischen Mitteln 132, über das Netzwerk 170 mit der ersten Simulationsumgebung 110 und/oder über das Netzwerk 170 mit einem Simulationscomputersystem 150.

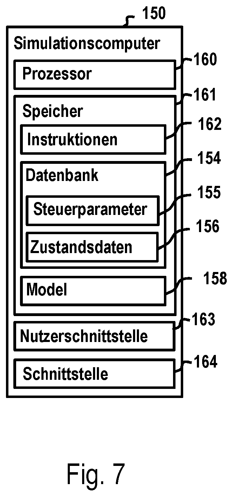

Figur 7 zeigt das exemplarische Simulationscomputersystem 150. Das Simulationscomputersystem 150 umfasst einen Prozessor 160 sowie einen Speicher 161 mit Programminstruktionen 162. Die Programminstruktionen 162 sind dazu konfiguriert durch den Prozessor 160 das Simulationscomputersystem 150 zu steuern. Beispielsweise umfassen die Programminstruktionen 162 ein Zustandssimulationsprogramm. Das Simulationscomputersystem kann beispielsweise eine Nutzerschnittstelle 136 umfassen, welche es einem Nutzer ermöglicht, mit dem Simulationscomputersystem 150 zu interagieren. Ferner umfasst das Simulationscomputersystem 150 eine Kommunikationsschnittstelle 164, welche eine Kommunikation des Simulationscomputersystems 150 mit anderen Komponenten des Simulationssystems, wie etwa dem Leitstand 112 der ersten Simulationsumgebung 110 oder den technischen Mitteln 132 der zweiten Simulationsumgebung 132, etwa über ein Kommunikationsnetzwerk 178, ermöglicht. Ferner umfasst der Speicher des Simulationscomputersystems 150 beispielsweise eine Datenbank 154, in welcher die aktuellen Steuerparameter 155 gespeichert sind, welche mittels der ersten physischen Steuerelemente 114 und der zumindest teilweise virtuellen Kopien 134 der zweiten Steuerelemente eingestellt sind. Ferner umfasst die Datenbank 154 beispielsweise Zustandsdaten 156 des Wasserfahrzeugs, welche für den simulierten Betrieb des Wasserfahrzeugs unter Verwendung der aktuellen Steuerparameter 155, beispielsweise durch ein Zustandssimulationsprogramm, berechnet wurden. Die entsprechenden aktuellen Steuerparameter 155 sowie die Zustandsdaten 156 stellt das Simulationscomputersystem 150 beispielsweise zum Abruf durch externe Komponenten, wie etwa den Leitstand 112 der ersten Simulationsumgebung 110 und/oder die technischen Mittel 132 der zweiten Simulationsumgebung 130 bereit.

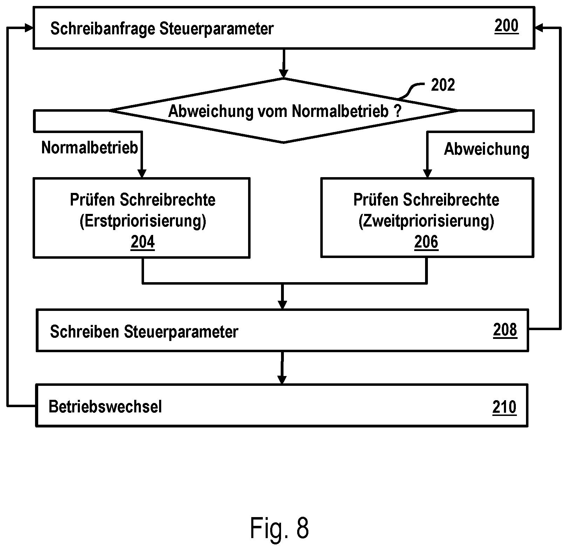

Figur 8 zeigt ein Verfahren zum Schreiben aktueller Steuerparameter in die Simulationsschnittstelle. In Block 200 empfängt die Simulationsschnittstelle eine Schreibanfrage zum Schreiben eines Steuerparameters. Die entsprechende Schreibanfrage kann beispielsweise für einen Steuerparameter gelten, welcher mittels eines ersten physischen Steuerelements eingestellt wurde, oder für einen Steuerparameter, welcher mittels einer zumindest teilweise virtuellen Kopie eines zweiten physischen Steuerelements eingestellt wurde. In Block 202 wird beispielsweise bestimmt, ob ein Normalbetrieb oder eine Abweichung von dem Normalbetrieb vorliegt. Diese Prüfung kann beispielsweise auf einem Flag basieren. Ist ein entsprechender Flag nicht gesetzt, kann es sich beispielsweise um den Normalbetrieb handeln. Ist ein entsprechender Flag gesetzt, kann es sich beispielsweise um eine Abweichung von dem Normalbetrieb handeln. Wird in Block 202 festgestellt, dass es sich bei dem simulierten Betrieb des Wasserfahrzeugs um einen Normalbetrieb handelt, wird das Verfahren in Block 204 fortgesetzt. In diesem Fall wird ein Schreibrecht basierend auf der Erstpriorisierung zum Schreiben des angefragten Steuerparameters geprüft. Fällt die Prüfung positiv aus, wird der entsprechende Steuerparameter in Block 208 in die Simulationsschnittstelle geschrieben. Fällt die Prüfung negativ aus, wird das Schreiben des Steuerparameters verweigert und die Schreibanfrage aus Block 200 abgelehnt. Wird in Block 202 festgestellt, dass es sich bei dem simulierten Betrieb des Wasserfahrzeugs um eine Abweichung von dem Normalbetrieb handelt, d.h. um eine simulierte Abweichung von dem Normalbetrieb, wird das Verfahren in Block 206 fortgesetzt. In Block 206 werden Schreibrechte für die Schreibanfrage basierend auf der Zweitpriorisierungen geprüft. Fällt die Prüfung positiv aus, wird das Verfahren in Block 208 fortgesetzt und der entsprechende Steuerparameter in die Simulationsschnittstelle geschrieben. Fällt die Prüfung negativ aus, wird das Schreiben des Steuerparameters verweigert und die Schreibanfrage aus Block 200 abgelehnt. Dieses Verfahren wird für Schreibanfragen im Zuge des simulierten Betriebs des Wasserfahrzeugs beispielsweise wiederholt ausgeführt. Beispielsweise wird jedes Mal eine entsprechende Schreibanfrage gestellt, wenn im Zuge des Trainings eine Einstellung eines Steuerparameters mittels eines ersten Steuerelements oder einer zumindest teilweise virtuellen Kopie eines zweiten Steuerelements geändert wird. Im Zuge des simulierten Betriebs kann es zu einem Betriebswechsel in Block 210 von dem Normalbetrieb zu einer Abweichung von dem Normalbetrieb oder umgekehrt kommen. Nachfolgende Schreibanfragen in Block 200 werden dann jeweils unter Berücksichtigung des entsprechenden Betriebswechsels geprüft.

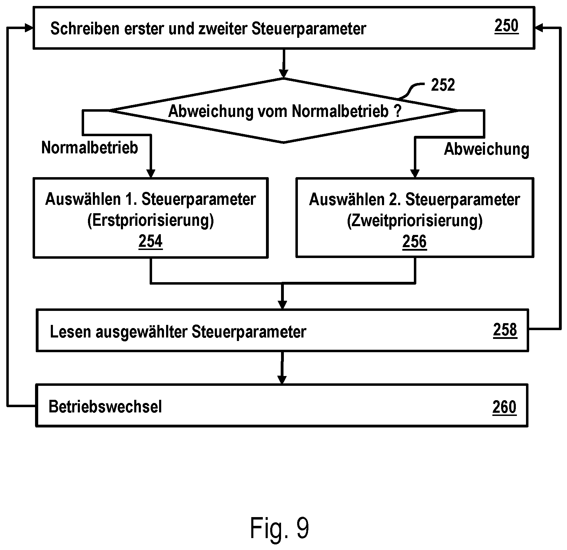

Figur 9 zeigt ein Verfahren zum Auswählen aktueller Steuerparameter in der Simulationsschnittstelle aus geschriebenen Steuerparameter. In diesem Fall werden beispielsweise sowohl mittels der ersten physischen Steuerelemente eingestellte Steuerparameter, d.h. erste Steuerparameter, als auch mittels der Kopien der zweiten Steuerelemente eingestellte Steuerparameter, d.h. zweite Steuerparameter. Beispielsweise sind den Simulationsumgebungen jeweils Schnittstellenparameter, in welche die entsprechenden Simulationsumgebungen jeweils per Schnittstellendefintion schreiben dürfen. In diese Schnittstellenparameter können die Simulationsumgebungen beispielsweise jederzeit die in ihnen eingestellten Steuerparameter schreiben. Ein Flag, welches zwischen Erstpriorisierung, z.B. Fernbedienung, und Zweitpriorisierung, z.B. lokale Bedienung unterscheidet, signalisiert dem Simulationsmodell, welchen der Schnittstellenwerte es als für die Simulation des Wasserfahrzeugs gültigen Steuerparameter übernehmen soll. Wenn beispielsweise das Flag auf Normalbetrieb steht und die zweite Simulationsumgebung beispielsweise einen Öffnungsgrad einer virtuellen Kopie eines Ventils in der virtuellen Umgebung in die Simulationsschnittelle schreibt, steht dieser Steuerparameter zwar als Wert in der Simulationsschnittstelle bzw. in einem der zweiten Simulationsumgebung zugeordneten Schnittstellenparameter, wird aber nicht als gültiger Steuerparameter für die Simulation übernommen bzw. verwendet.

In Block 250 werden sowohl die ersten als auch die zweiten Steuerparameter in die Simulationsschnittstelle geschrieben. In Block 252 wird beispielsweise bestimmt, ob ein Normalbetrieb oder eine Abweichung von dem Normalbetrieb vorliegt. Eine solche Prüfung erfolgt beispielsweise auf eine Leseanfrage zum Lesen der aktuell für die Simulation des Wasserfahrzeugs gültige Steuerparameter hin. Diese Prüfung kann beispielsweise auf einem Flag basieren. Ist ein entsprechender Flag nicht gesetzt, kann es sich beispielsweise um den Normalbetrieb handeln. Ist ein entsprechender Flag gesetzt, kann es sich beispielsweise um eine Abweichung von dem Normalbetrieb handeln. Wird in Block 252 festgestellt, dass es sich bei dem simulierten Betrieb des Wasserfahrzeugs um einen Normalbetrieb handelt, wird das Verfahren in Block 254 fortgesetzt. In diesem Fall werden beispielsweise die ersten Steuerparameter ausgewählt basierend auf der Erstpriorisierung. Wird in Block 202 für ein oder mehrere der Steuerelemente bzw. zugehörigen Steuerparameter festgestellt, dass es sich bei dem simulierten Betrieb des Wasserfahrzeugs um eine Abweichung von dem Normalbetrieb handelt, d.h. um eine simulierte Abweichung von dem Normalbetrieb, wird das Verfahren in Block 256 fortgesetzt. In Block 256 werden beispielsweise die zweiten Steuerparameter ausgewählt, welche mittels der den Zweitpriorisierungen der entsprechenden Abweichung vom Normalbetrieb zugeordneten Kopien der zweiten Steuerelemente eingestellt wurden. In Block 258 werden die ausgewählten ersten und/oder zweiten Steuerparameter gelesen und als aktuell für die Simulation des Wasserfahrzeugs gültige Steuerparameter verwendet. Im Zuge des simulierten Betriebs kann es zu einem Betriebswechsel in Block 260 von dem Normalbetrieb zu einer Abweichung von dem Normalbetrieb oder umgekehrt kommen. Nachfolgende Leseanfragen beim Initiieren des Blocks 252 werden dann jeweils unter Berücksichtigung des entsprechenden Betriebswechsels geprüft.

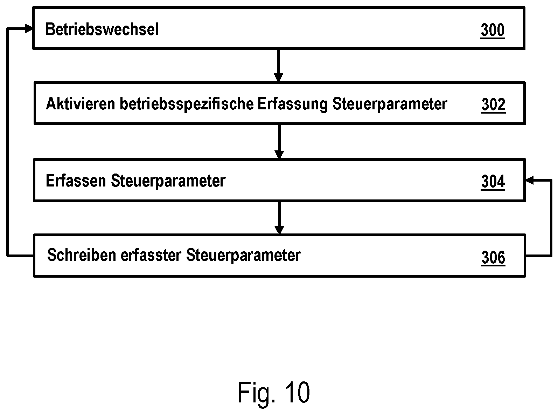

Figur 10 zeigt ein Verfahren zum Betriebswechsel basierend auf einer Aktivierung und Deaktivierung der Erfassung von Einstellungen der ersten physischen Steuerparameter sowie der zumindest teilweise virtuellen Kopien. Ist die Erfassung mittels eines ersten physischen Steuerparameter deaktiviert, kann beispielsweise keine Einstellung eines zugeordneten Steuerparameters mittels des entsprechenden ersten Steuerelements vorgenommen werden. Ist die Erfassung mittels einer Kopie eines zweiten physischen Steuerparameters deaktiviert, kann beispielsweise keine Einstellung eines zugeordneten Steuerparameters mittels der entsprechenden Kopie vorgenommen werden. Beispielsweise kann die entsprechende Kopie gar nicht betätigt werden, solange für sie die Erstpriorisierung en gelten. In Block 300 kommt es zu einem Betriebswechsel von dem Normalbetrieb zu einer Abweichung von dem Normalbetrieb oder umgekehrt. Daraufhin erfolgt eine Aktivierung der betriebsspezifischen Erfassung der Einstellungen von Steuerparametern. Im Normalbetrieb wird eine Erfassung der Einstellungen der physischen Steuerparameter aktiviert, während eine Erfassung der Einstellungen der zumindest teilweise virtuellen Kopien der physischen Steuerparameter deaktiviert wird. Im Zuge einer simulierten Abweichung von dem Normalbetrieb wird die Erfassung der Einstellungen der ersten physischen Steuerelemente deaktiviert, während die Erfassung der Einstellungen der zumindest teilweise virtuellen Kopien zweiter physischen Steuerelemente aktiviert wird. In Block 304 erfolgt ein Erfassen der Steuerparameter derjenigen Steuerelemente, deren Einstellungserfassung aktiviert wurde. Im Falle eines Normalbetriebs erfolgt die Erfassung der Einstellung der physischen Steuerparameter, im Falle einer Abweichung von dem Normalbetrieb ist dies die Erfassung der Einstellungen der zumindest teilweise virtuellen Kopien der zweiten physischen Steuerelemente. In Block 306 werden die erfassten Steuerparameter in die Simulationsschnittstelle geschrieben. Das Verfahren wird in Block 304 fortgesetzt. Änderungen der Einstellungen von Steuerelementen, für welche die Erfassung aktiviert ist, werden in Block 304 erfasst und in Block 306 in die Simulationsschnittstelle geschrieben. Kommt es zu einem erneuten Betriebswechsel von der Abweichung von dem Normalbetrieb zu dem Normalbetrieb oder umgekehrt, so wird das Verfahren mit Block 300 fortgesetzt.

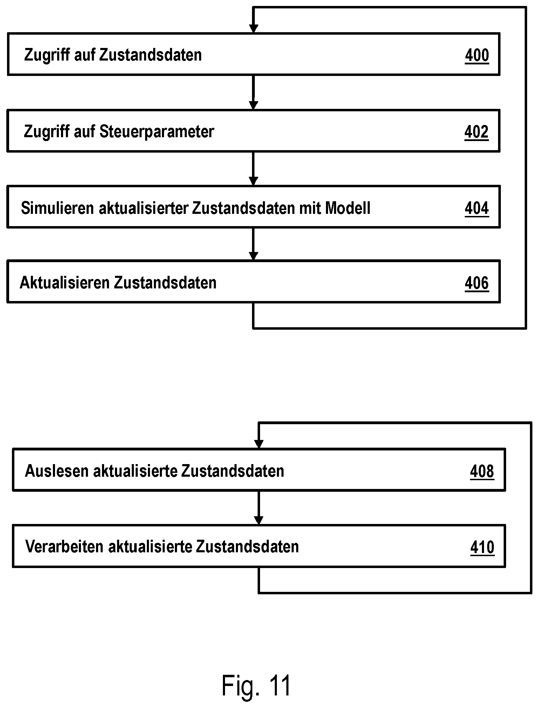

Figur 11 zeigt ein exemplarisches Verfahren zur Simulation von Zuständen eines Wasserfahrzeugs. In Block 400 erfolgt ein Zugriff auf aktuelle Zustandsdaten für das Wasserfahrzeug. Die entsprechenden aktuellen Zustandsdaten können das Ergebnis eines vorangegangenen Simulationsschritts sein. In Block 402 erfolgt ein Zugriff auf aktuelle Steuerparameter für das Wasserfahrzeug. Diese Steuerparameter werden beispielsweise mittels erster physischer Steuerelemente oder zumindest teilweise virtueller Kopien zweiter physischer Steuerelemente eingestellt. In Block 404 wird ein aktueller Zustand des Wasserfahrzeugs unter Verwendung der Zustandsdaten aus Block 400 sowie der Steuerparameter aus Block 402 unter Verwendung eines digitalen Modells des Wasserfahrzeugs simuliert. Dies wird beispielsweise durch ein Zustandssimulationsprogramm ausgeführt. Die Ergebnisse der entsprechenden Simulation werden in Block 406 zum Aktualisieren der Zustandsdaten verwendet. Das Verfahren wird beispielsweise wiederholt zyklisch fortgesetzt mit Block 400. Beispielsweise wird das Verfahren jedes Mal wiederholt, wenn sich ein Steuerparameter ändert.

Unabhängig von der Aktualisierung der Zustandsdaten, d.h. asynchron zu den Blöcken 400 bis 406, können die aktualisierten Zustandsdaten in Block 408 von weiteren Komponenten des Simulationssystems ausgelesen werden. Beispielsweise werden die aktualisierten Zustandsdaten von einer ersten Simulationsumgebung bzw. dem Leitstand in der ersten Simulationsumgebung und der zweiten Simulationsumgebung bzw. den technischen Mitteln der zweiten Simulationsumgebung aus der Simulationsschnittstelle ausgelesen. In Block 410 werden die ausgelesenen Zustandsdaten verarbeitet, beispielsweise werden die ausgelesenen Zustandsdaten den Besatzungsmitgliedern im Zuge des Trainings angezeigt. Das Verfahren wird beispielsweise bei Bedarf oder zyklisch mit Block 408 fortgesetzt.

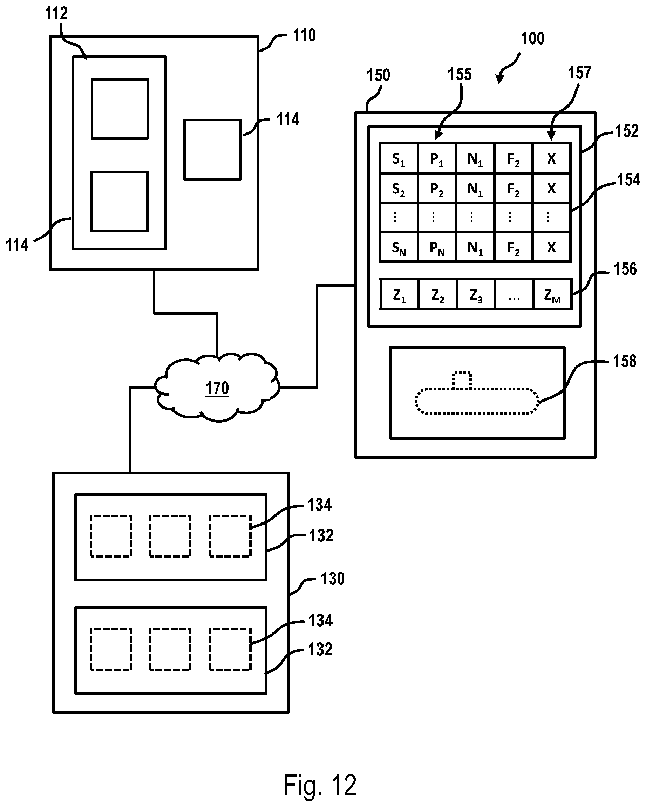

Figur 12 zeigt ein exemplarisches Simulationssystem 100, welches dem Simulationssystem 100 aus Figur 1 entspricht. Das exemplarische Simulationssystem 100 umfasst eine erste Simulationsumgebung 110 sowie eine zweite Simulationsumgebung 130. Ferner umfasst das Simulationssystem 100 ein Simulationscomputersystem 150, welches eine Simulationsschnittstelle 152 bereitstellt. Die unterschiedlichen Komponenten des Simulationscomputersystems 100, d.h. die erste Simulationsumgebung 110, die zweite Simulationsumgebung 130 sowie das Simulationscomputersystem 150, sind mittels Kommunikationsverbindungen über ein Kommunikationsnetzwerk 170 kommunikativ miteinander verbunden. Der Unterschied gegenüber dem Simulationssystem 100 aus Figur 1 besteht darin, dass die erste Simulationsumgebung 110 aus Figur 12 nicht auf einer beweglichen Plattform angeordnet ist. Es handelt sich somit um eine unbewegte, d.h. statische, Simulationsumgebung 110.

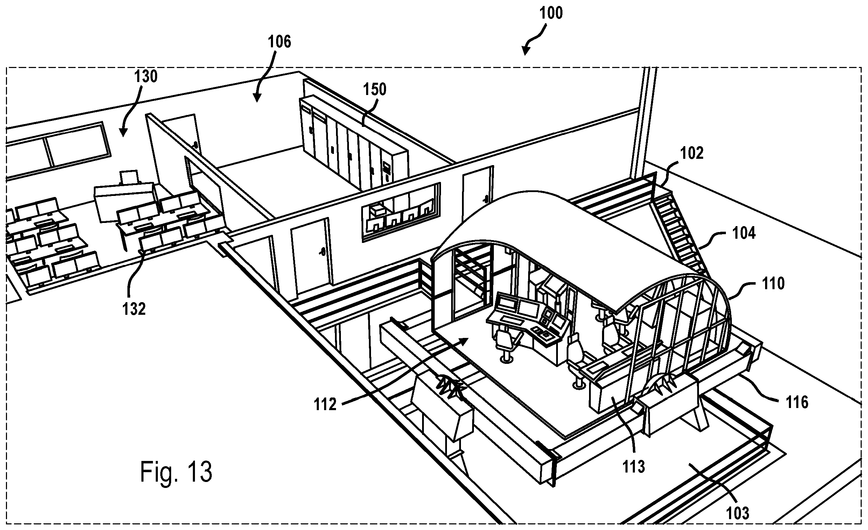

Figur 13 zeigt ein exemplarisches Simulationssystem 100, welches eine erste Simulationsumgebung 110 sowie eine zweite Simulationsumgebung 130 umfasst. Die erste Simulationsumgebung 110 mit einem Leitstand 112, welcher beispielsweise eine Mehrzahl von Konsolen 113 umfasst, ist auf einer beweglichen Plattform 116 angeordnet. Die Plattform 116 wird mittels einer Mehrzahl von Aktoren bewegt. Bei diesen Aktoren handelt es sich beispielsweise um hydraulische, pneumatische und/oder elektrische Aktoren. Die Plattform 116 ist beispielsweise erhöht angeordnet, sodass sie ausreichenden Bewegungsfreiheit relative zu dem Boden 103 unterhalb der Plattform 116 aufweist, um etwa Neigungsbewegungen ausführen zu können. Die auf der erhöhten Plattform 116 angeordnete erste Simulationsumgebung 110 ist beispielsweise über eine Leiter 104 und/oder eine statische Plattform bzw. einen Laufsteg 102 erreichbar. Beispielsweise ist die erste Simulationsumgebung 110 in einer Halle angeordnet.

Die zweite Simulationsumgebung 130 ist beispielsweise in einem Nebenraum angeordnet und umfasst technische Mittel 132, welche dazu konfiguriert sind, eine visuelle Simulation mit zumindest teilweisen virtuellen Kopien erster physischer Steuerelemente bereitzustellen. Bei den entsprechenden technischen Mitteln 132 kann es sich beispielsweise um ein oder mehrere Desktop-PCs, mobile tragbare Endgeräte, wie etwa Tablets, oder Datenbrillen, handeln. In Figur 13 sind die technischen Mittel 132 in Form einer Mehrzahl von Desktop-PCs bereitgestellt.

Schließlich umfasst das Simulationssystem 100 ferner einen Serverraum 106 mit dem Simulationscomputersystem 150, welches beispielsweise einen oder mehrerer Server umfasst und eine Simulationsschnittstelle bereitstellt. In einem Speicher der Simulationsschnittstelle bzw. des Simulationscomputersystem 150 ist eine Datenbank mit Definitionen der ein oder mehreren ersten Steuerelemente sowie der ein oder mehreren Kopien der zweiten Steuerelemente gespeichert ist, wobei die Definitionen für die definierten Steuerelemente und Kopien jeweils eine Erstpriorisierung für einen simulierten Normalbetrieb des Wasserfahrzeugs festlegen. Ferner ist die Simulationsschnittstelle des Simulationscomputersystems 150 dazu konfiguriert, auf eine simulierte Fehlfunktion des Wasserfahrzeugs hin, von den Erstpriorisierungen der ein oder mehreren ersten Steuerelemente und der ein oder mehreren Kopien der zweiten Steuerparameter zu ein oder mehrere Zweitpriorisierungen zu wechseln.

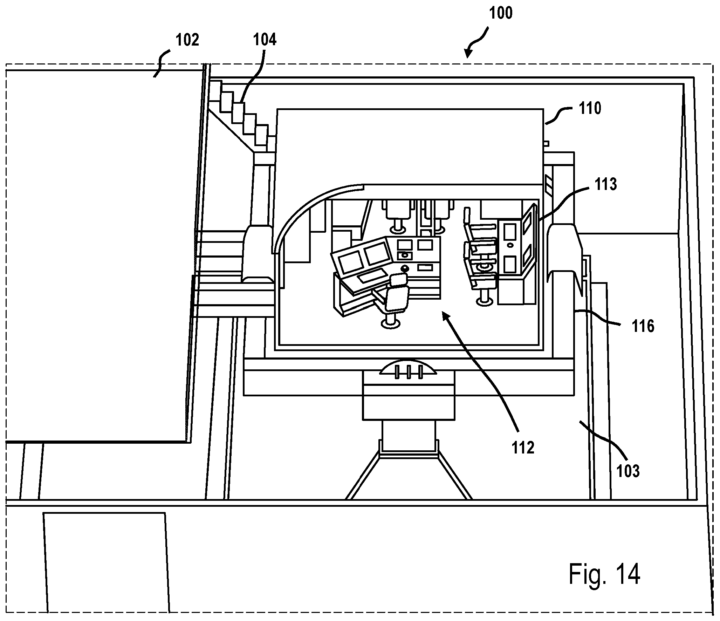

Figur 14 zeigt eine Detailansicht der exemplarischen ersten Simulationsumgebung 110 aus Figur 13 mit einem Leitstand 112, welcher beispielsweise eine Mehrzahl von Konsolen 113 umfasst. Die erste Simulationsumgebung 110 ist auf einer beweglichen Plattform 116 angeordnet. Die Plattform 116 wird beispielsweise mittels einer Mehrzahl von Aktoren bewegt. Bei diesen Aktoren handelt es sich beispielsweise um hydraulische, pneumatische und/oder elektrische Aktoren. Die Plattform 116 ist beispielsweise erhöht angeordnet, sodass sie ausreichenden Bewegungsfreiheit relative zu dem Boden 103 unterhalb der Plattform 116 aufweist, um etwa Neigungsbewegungen ausführen zu können. Die auf der erhöhten Plattform 116 angeordnete erste Simulationsumgebung 110 ist beispielsweise über eine Leiter 104 und/oder eine statische Plattform bzw. einen Laufsteg 102 erreichbar.

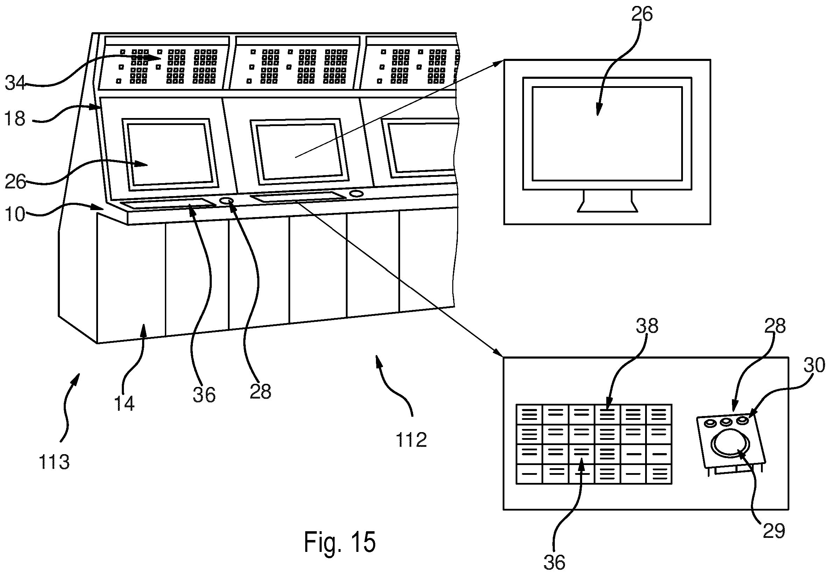

Figur 15 zeigt exemplarische Konsolen 113 einer ersten Simulationsumgebung. Diese Konsolen 113 sind beispielsweise Bestandteile eines in der ersten Simulationsumgebung angeordneten Leitstands 112. Figur 15 zeigt beispielsweise eine Gruppe von drei Konsolen 113. Jede der Konsolen 113 trägt beispielsweise jeweils eine Rechnereinheit 14, eine Anzeige- und Bedieneinheit 18, einen Darstellungs-Bildschirm 26 und einen berührungssensitiven Bildschirm 36. Die Konsolen 113 umfassen beispielsweise ein vorstehendes Bord 10, welches auf einer dem Nutzer zugewandte Vorderseite der entsprechenden Konsole 113 vorsteht. Das Bord ist beispielsweise zwischen zwei Einschüben eingeordnet, d.h. unterhalb eines Einschubs der Konsole 113 für die Anzeige- und Bedieneinheit 18 und oberhalb eines Einschubs für die Rechnereinheit 14. Beispielsweise trägt das Bord den berührungssensitiven Bildschirm 36 sowie ferner ein Auswahlgerät 28. Unterhalb des Bords 10 ist die Rechnereinheit 14, beispielsweise in einem Einschub der Konsole 113, angeordnet. Die Rechnereinheit 14 steuert beispielsweise die die Anzeige- und Bedieneinheit 18 an und verarbeitet von der Anzeige- und Bedieneinheit 18 erfasste Nutzereingaben.

Die Anzeige- und Bedieneinheit 18 umfasst beispielsweise einen Bildschirm 26 für eine Darstellung von Zuständen und/oder Funktionen des Wasserfahrzeugs. Beispielsweise werden auf dem Bildschirm 26 zumindest Teile eines digitalen Modells des Wasserfahrzeugs dargestellt. Die Anzeige- und Bedieneinheit 18 umfasst ferner beispielsweise einen berührungssensitiv Bildschirm 36 etwa für eine Darstellung von durchführbaren Aktionen bzw. initiierbaren Funktionen des Wasserfahrzeugs. Der berührungssensitiv Bildschirm 36 ist beispielsweise in berührungssensitive Bereiche 38 unterteilt, welche jeweils eine auswählbare Aktion anzeigen. Ein Nutzer kann einen berührungssensitiven Bereich 38 auswählen, beispielsweise indem der Nutzer den entsprechenden Bereich 38 berührt. Beispielsweise haben die Bereiche 38 jeweils die Form eines Rechtecks hat. Beispielsweise sind die Bereiche 38 nebeneinander und untereinander sowie nicht überlappend in Zeilen und Spalten auf dem Bildschirm 36 angeordnet. Ferner kann der Bildschirm 36 auf dem Bord 10 beispielsweise zusätzlich einen oder mehrere nicht berührungssensitive Bereiche aufweisen, z.B. um Meldungen an den Nutzer auszugeben.

Ferner umfasst die Anzeige- und Bedieneinheit 18 ein oder mehrere Eingabegeräte, wie etwa das Auswahlgerät 28, zum Erfassen von Nutzereingaben. Das Auswahlgerät 28 ist beispielsweise in dem Bord 10 montiert. Ferner umfasst das Auswahlgerät 28 beispielsweise einen mit einem Trackball 29 sowie ein oder mehrere Tasten 30.

Ferner umfassen die Konsolen 113 beispielsweise Instrumententafel 34 mit Meldeleuchten, welche bestimmte Betriebszustände von Bestandteilen des Wasserfahrzeugs anzeigen. Diese Instrumententafeln 34 sind beispielsweise in Einschüben der Konsolen 113, etwa oberhalb der Anzeige- und Bedieneinheit 18, angeordnet.

Die Anzeige- und Bedieneinheit 18 erfasst beispielsweise Nutzereingaben, etwa eine Auswahl eines auf dem Bildschirm 26 dargestellten Objekts des Wasserfahrzeugs. Nutzereingaben können beispielsweise unter Verwendung des Auswahlgeräts 28 und/oder des berührungssensitiven Bildschirms 36 erfasst werden. Die Anzeige- und Bedieneinheit 18 übermittelt basierend auf den erfassten Nutzereingaben an die Rechnereinheit 14, dass und welchen Bestandteil der Nutzer ausgewählt hat. Beispielsweise gibt die Anzeige- und Bedieneinheit 18 ein Bestätigungssignal aus, nachdem der Nutzer eine Auswahl getroffen hat. Das Bestätigungssignal kann zum Beispiel das Aufleuchten einer Meldeleuchte an der Instrumententafel 34 oder ein sonstiges visuell oder akustisch oder taktil erfassbares Signal sein, zum Beispiel eine Hervorhebung des ausgewählten Bestandteils in der Darstellung auf dem Bildschirm 26 oder eine Vibration, etwa des Auswahlgeräts 28, beispielsweise des Trackballs 29. Das Bestätigungssignal zeigt dem Benutzer, dass seine Auswahl erfasst worden ist.

Als Reaktion auf die Auswahl eines Objekts auf dem Bildschirm 26 und damit des zugehörigen Bestandteils des Wasserfahrzeugs ermittelt die Rechnereinheit 14, welche Aktionen an demjenigen Bestandteil, das durch das ausgewählte Objekt repräsentiert wird, durchgeführt werden können. Bei dem entsprechenden Bestandteil handelt es sich beispielsweise um ein Ventil, des auf dem Bildschirm 26 dargestellten Teilsystems des Wasserfahrzeugs, beispielsweise eines Kühlungssystems. Beispielsweise greift die Rechnereinheit 14 lesend auf eine rechnerverfügbare Tabelle zu, in welcher die möglichen Aktionen für diesen ausgewählten Bestandteil abgespeichert sind. Anschließend veranlasst die Rechnereinheit 14 die Anzeige und Bedieneinheit 18 dazu, eine Aktionen-Darstellung zu generieren und auf dem berührungssensitiven Bildschirm 36 anzuzeigen.

Diese Aktionen-Darstellung zeigt die ermittelten Aktionen, die an demjenigen Bestandteil durchführbar sind, den das ausgewählte Objekt in der Darstellung auf dem Bildschirm 26 repräsentiert. Die Aktionen-Darstellung der möglichen Aktionen ist also kontextabhängig, denn die Aktionen-Darstellung hängt davon ab, welches Objekt der Darstellung auf dem Bildschirm 26 und damit welcher Bestandteil zuvor ausgewählt wurde.

### Bezugszeichenliste

- 10: Bord
- 14: Rechnereinheit
- 18: Anzeige- und Bedieneinheit
- 26: Bildschirm
- 28: Auswahlgerät
- 29: Track-Ball
- 30: Tasten
- 34: Instrumententafel
- 36: berührungssensitiver Bildschirm
- 38: berührungssensitiver Bildschirmbereich
- 100: Simulationssystem
- 102: statische Plattform
- 103: Boden
- 104: Leiter
- 106: Serverraum
- 110: erste Simulationsumgebung
- 111: Bewegungssteuerung
- 112: Leitstand
- 113: Konsole
- 114: physisches Steuerelement
- 115: Besatzungsmitglied
- 116: beweglich gelagerte Plattform
- 117: erste Gruppe Besatzungsmitglieder
- 118: Aktoren
- 120: Prozessor
- 121: Speicher
- 122: Instruktionen
- 123: Nutzerschnittstelle
- 124: Kommunikationsschnittstelle
- 130: zweite Simulationsumgebung
- 132: technisches Mittel
- 134: Kopie eines Steuerelements
- 135: Besatzungsmitglied
- 137: zweite Gruppe Besatzungsmitglieder
- 140: Prozessor
- 141: Speicher
- 142: Instruktionen
- 143: Nutzerschnittstelle
- 144: Kommunikationsschnittstelle
- 150: Simulationscomputersystem
- 152: Simulationsschnittstelle
- 154: Datenbank
- 155: Steuerparameter
- 156: Zustandsdaten
- 157: Flag
- 158: digitales Modell des Wasserfahrzeugs
- 160: Prozessor
- 161: Speicher
- 162: Instruktionen
- 163: Nutzerschnittstelle
- 164: Kommunikationsschnittstelle
- 170: Netzwerk
- 180: virtuelles 3D-Modell eines Steuerelements
- 182: taktiles Element
- 184: virtuelle Bestandteile der Kopie des Steuerelements

## Patentansprüche

1. Simulationssystem (100) zum zeitgleichen Trainieren einer Mehrzahl von Besatzungsmitgliedern (115, 135) eines militärischen Wasserfahrzeugs, wobei das Simulationssystem (100) eine erste Simulationsumgebung (110) mit einem physischen Leitstand (112) des Wasserfahrzeugs zum Trainieren einer ersten Gruppe (117) von Besatzungsmitgliedern (115) umfasst,
wobei die erste Simulationsumgebung (110) ein oder mehrere erste physische Steuerelemente (114) des Wasserfahrzeugs umfasst, wobei die ersten physischen Steuerelemente (114) jeweils dazu konfiguriert sind, einen oder mehrere Steuerparameter (155) für den Betrieb des Wasserfahrzeugs einzustellen,
wobei der Leitstand (112) dazu konfiguriert ist, mittels der ersten physischen Steuerelemente (114) eingestellte Steuerparameter (155) zu erfassen und an eine Simulationsschnittstelle (152) des Simulationssystems (100) zu kommunizieren,
wobei das Simulationssystem (100) ferner eine von der ersten Simulationsumgebung (110) räumlich getrennte zweite Simulationsumgebung (130) zum Trainieren einer zweiten Gruppe (137) von Besatzungsmitgliedern (135) umfasst, wobei die zweite Simulationsumgebung (130) technische Mittel (132) umfasst, welche dazu konfiguriert sind, eine visuelle Simulation bereitzustellen, welche ein oder mehrere zumindest teilweise virtuelle Kopien (134) ein oder mehrerer zweiter physischer Steuerelemente (114) des Wasserfahrzeugs zum Einstellen der Steuerparameter (155) umfasst,
wobei die technischen Mittel (132) ferner dazu konfiguriert sind, mittels der Kopien (134) eingestellte Steuerparameter (155) zu erfassen und an die Simulationsschnittstelle (152) des Simulationssystems (100) zu kommunizieren,
wobei die Simulationsschnittstelle (152) des Simulationssystems (100) einen Speicher umfasst, wobei in dem Speicher eine Datenbank (154) mit Definitionen der ein oder mehreren ersten physischen Steuerelemente (114) und der ein oder mehrere Kopien (134) der ein oder mehreren zweiten Steuerelemente gespeichert ist, wobei die Definitionen für die definierten ersten Steuerelemente (114) und Kopien (134) der zweiten Steuerelemente jeweils eine Erstpriorisierung für einen simulierten Normalbetrieb des Wasserfahrzeugs festlegen, in welcher die Einstellungen der Steuerparameter (155) gemäß den ersten physischen Steuerelementen (114) gegenüber den Einstellungen gemäß den Kopien (134) der zweiten Steuerelemente als für die Simulation des Wasserfahrzeugs ausschließlich gültige Einstellungen der Steuerparameter (155) priorisiert werden,
wobei die Simulationsschnittstelle (152) des Simulationssystems (100) ferner dazu konfiguriert ist, auf eine simulierte Abweichung von dem Normalbetrieb des Wasserfahrzeugs hin, von ein oder mehreren der Erstpriorisierungen zu ein oder mehreren Zweitpriorisierungen zu wechseln, wobei die ein oder mehreren Zweitpriorisierungen für die simulierte Abweichung von dem Normalbetrieb Einstellungen ein oder mehrerer der Steuerparameter (155) gemäß ein oder mehreren den Zweitpriorisierungen zugeordneten Kopien (134) der zweiten Steuerelemente gegenüber Einstellungen gemäß ein oder mehreren den Zweitpriorisierungen zugeordneten ersten physischen Steuerelemente (114) als für die Simulation des Wasserfahrzeugs ausschließlich gültige Einstellungen der entsprechenden Steuerparameter (155) priorisieren.

2. Simulationssystem (100) nach Anspruch 1, wobei die erste Simulationsumgebung (110) auf einer beweglich gelagerten Plattform (116) angeordnet ist, wobei an der Plattform (116) eine Mehrzahl von hydraulischen, pneumatischen und/oder elektrischen Aktoren (118) angeordnet ist, welche von einer Bewegungssteuerung (111) der Plattform (116) angesteuert werden, um Bewegungen des Wasserfahrzeugs im Zuge des simulierten Betriebs nachzuahmen.

3. Simulationssystem (100) nach einem der Ansprüche 1 bis 2,wobei in dem Speicher der Simulationsschnittstelle (152) ferner aktuell für die Simulation des Wasserfahrzeugs gültige Steuerparameter (155) gespeichert sind.

4. Simulationssystem (100) nach Anspruch 3, wobei die Erstpriorisierungen und Zweitpriorisierungen jeweils Schreibrechte zum Schreiben von Steuerparameter (155) in den Speicher der Simulationsschnittstelle (152) definieren.

5. Simulationssystem (100) nach Anspruch 4, wobei die Erstpriorisierungen jeweils festlegen, dass der Leitstand (112) der ersten Simulationsumgebung (110) Schreibrechte zum Schreiben der mittels der ersten physischen Steuerelemente (114) eingestellten und im simulierten Normalbetrieb des Wasserfahrzeugs gültigen Steuerparameter (155) besitzt, während die technischen Mittel (132) der zweiten Simulationsumgebung (130) keine Schreibrechte zum Schreiben der aktuell für die Simulation des Wasserfahrzeugs gültigen Steuerparameter (155) besitzen,
wobei die Zweitpriorisierungen jeweils festlegen, dass die technischen Mittel (132) der zweiten Simulationsumgebung (130) Schreibrechte zum Schreiben der mittels der den Zweitpriorisierungen zugeordneten Kopien (134) der zweiten Steuerelemente eingestellten und in der simulierten Abweichung von dem Normalbetrieb des Wasserfahrzeugs gültigen Steuerparameter (155) besitzen, während der Leitstand (112) keine Schreibrechte zum Schreiben der Steuerparameter (155), welche mittels der den Zweitpriorisierungen zugeordneten ersten physischen Steuerelemente (114) eingestellt sind, als aktuell für die Simulation des Wasserfahrzeugs gültige Steuerparameter (155) besitzt, oder
wobei sowohl der Leitstand (112) der ersten Simulationsumgebung (110) Schreibrechte zum Schreiben der mittels der ersten physischen Steuerelemente (114) eingestellten Steuerparameter (155) besitzt, als auch die technischen Mittel (132) der zweiten Simulationsumgebung (130) Schreibrechte zum Schreiben der mittels der Kopien (134) der zweiten Steuerelemente eingestellten Steuerparameter (155) besitzen,
wobei die Erstpriorisierungen jeweils festlegen, dass die mittels der ersten physischen Steuerelemente (114) eingestellten und von dem Leitstand (112) geschriebenen Steuerparameter (155) als im simulierten Normalbetrieb des Wasserfahrzeugs gültige Steuerparameter (155) gelesen werden, während die mittels der Kopien (134) der zweiten Steuerelemente eingestellten und von den technischen Mitteln (132) der zweiten Simulationsumgebung (130) geschriebene Steuerparameter (155) nicht gelesen werden,
wobei die Zweitpriorisierungen jeweils festlegen, dass die mittels der den Zweitpriorisierungen zugeordneten Kopien (134) der zweiten Steuerelemente eingestellten und von den technischen Mitteln (132) der zweiten Simulationsumgebung (130) geschriebene Steuerparameter (155) als für die simulierte Abweichung von dem Normalbetrieb des Wasserfahrzeugs gültige Steuerparameter (155) gelesen werden, während die mittels der den Zweitpriorisierungen zugeordneten ersten physischen Steuerelemente (114) eingestellten und von dem Leitstand (112) geschriebenen Steuerparameter (155) nicht gelesen werden.

6. Simulationssystem (100) nach einem der Ansprüche 1 bis 3, wobei die Erstpriorisierungen definiert, dass die Erfassung der mittels der ersten physischen Steuerelemente (114) eingestellten Steuerparameter (155) durch den Leitstand (112) der ersten Simulationsumgebung (110) aktiviert ist, während die Erfassung der mittels der Kopien (134) der zweiten Steuerelemente eingestellten Steuerparameter (155) durch die technischen Mittel (132) der zweiten Simulationsumgebung (130) deaktiviert ist,
wobei die Zweitpriorisierungen definiert, dass die Erfassung der mittels der Kopien (134) der zweiten Steuerelemente eingestellten Steuerparameter (155) durch die technischen Mittel (132) der zweiten Simulationsumgebung (130) aktiviert ist, während die Erfassung der mittels der ersten physischen Steuerelemente (114) eingestellten Steuerparameter (155) durch den Leitstand (112) der ersten Simulationsumgebung (110) deaktiviert ist.

7. Simulationssystem (100) nach einem der vorangehenden Ansprüche, wobei es sich bei den Kopien (134) der zweiten Steuerelemente jeweils um ein vollständiges virtuelles 3D-Modell (180) des entsprechenden zweiten Steuerelements handelt, wobei die technischen Mittel (132) der zweiten Simulationsumgebung (130) zum Bereitstellen der Kopien (134) der zweiten Steuerelemente ein oder mehrere Ausgabegeräte mit ein der mehreren Displays zur visuellen Ausgabe der virtuellen 3D-Modelle (180) sowie ein oder mehrere Eingabegeräte zur virtuellen Simulation einer Bedingung der virtuellen 3D-Modelle (180) umfassen, oder
wobei die technischen Mittel (132) der zweiten Simulationsumgebung (130) zum Bereitstellen der Kopien (134) der zweiten Steuerelemente ein oder mehrere taktile Elemente (182) zum physischen Nachstellen haptischer Eigenschaften der ein oder mehreren zweiten Steuerelemente umfassen, wobei die technischen Mittel (132) ferner ein oder mehrere Augmented-Reality-Geräte umfassen, welche dazu konfiguriert sind, zu den taktilen Elementen (182) jeweils ergänzende Bestandteile (184) der entsprechenden zweiten Steuerelemente in virtueller Form bereitzustellen, wobei die ein oder mehreren Augmented-Reality-Geräte jeweils ein oder mehrere Displays zur visuellen Ausgabe der ergänzenden virtuellen Bestandteile (184) der Kopien (134) der zweiten Steuerelemente umfassen sowie ein oder mehrere Sensoren zum Erfassen von Interaktionen der Besatzungsmitglieder (135) der zweiten Gruppe (137) von Besatzungsmitgliedern (135), welche die ein oder mehreren Augmented-Reality-Geräte nutzen, mit den taktilen Elementen (182) und/oder den ergänzenden virtuellen Bestandteilen (184) im Zuge einer Bedingung der Kopien (134) der zweiten Steuerelemente.

8. Simulationssystem (100) nach einem der vorangehenden Ansprüche, wobei die ein oder mehreren ersten Steuerelemente (114) ein oder mehrere Ventile, Schalter und/oder berührungssensitive Elemente des Wasserfahrzeugs umfassen und/oder
wobei die zweiten Steuerelemente ein oder mehrere Ventile, Schalter und/oder berührungssensitive Elemente des Wasserfahrzeugs umfassen.

9. Simulationssystem (100) nach Anspruch 10, wobei die ein oder mehreren ersten Steuerelemente (114) jeweils eine mechanisch betätigbare Komponente umfassen und/oder
wobei die ein oder mehreren zweiten Steuerelemente jeweils eine mechanisch betätigbare Komponente umfassen.

10. Simulationssystem (100) nach einem der vorangehenden Ansprüche, wobei die erste Simulationsumgebung (110) eine physische Operationszentrale des Wasserfahrzeugs umfasst, wobei die erste Simulationsumgebung (110) beispielsweise eine physische Brücke des Wasserfahrzeugs umfasst.

11. Simulationssystem (100) nach einem der vorangehenden Ansprüche, wobei die Simulationsschnittstelle (152) von einem Simulationscomputersystem (150) bereitgestellt wird, welches einen Speicher (161) mit ausführbaren Programminstruktionen (162) eines Zustandssimulationsprogramms zum Simulieren eines Zustands des Wasserfahrzeugs und einem digitalen Modell (158) des Wasserfahrzeugs umfasst sowie einen Prozessor (160), wobei ein Ausführen der Programminstruktionen (162) durch den Prozessor (160) das Simulationscomputersystem (150) dazu veranlasst, einen aktuellen Zustand des Wasserfahrzeugs unter Verwendung des digitalen Modells (158) des Wasserfahrzeugs sowie der für die Simulation des Wasserfahrzeugs gültigen Steuerparameter (155) zu simulieren.

12. Simulationssystem (100) nach einem der vorangehenden Ansprüche, wobei ein Wechsel von dem simulierten Normalbetrieb des Wasserfahrzeugs zu der simulierten Abweichung von dem Normalbetrieb des Wasserfahrzeugs auf einen Empfang eines externen Wechselbefehls durch die Simulationsschnittstelle (152) hin erfolgt, oder
wobei ein Wechsel von dem simulierten Normalbetrieb des Wasserfahrzeugs zu der simulierten Abweichung von dem Normalbetrieb des Wasserfahrzeugs durch die Simulationsschnittstelle (152) automatisch im Zuge des Ausführens des Zustandssimulationsprogramms erfolgt, falls der simulierte Zustand des Wasserfahrzeugs die Fehlfunktion umfasst.

13. Simulationssystem (100) nach einem der vorangehenden Ansprüche, wobei die simulierte Abweichung von dem Normalbetrieb des Wasserfahrzeugs einen Ausfall der ersten Gruppe (117) von Besatzungsmitgliedern (115) umfasst.

14. Simulationssystem (100) nach einem der vorangehenden Ansprüche, wobei es sich bei dem militärischen Wasserfahrzeug um eines der folgenden Wasserfahrzeuge handelt: ein Unterseeboot, einen Flugzeugträger, einen Hubschrauberträger, einen Kreuzer, einen Zerstörer, eine Fregatte, eine Korvette, ein Landungsschiff, einen Minenleger, ein Minenräumfahrzeug, ein Minenjagdfahrzeug, ein Patrouillenboot, ein Schnellboot, ein Aufklärungsschiff.

15. Computerbasiertes Verfahren zum Betrieb eines Simulationssystems (100) zum zeitgleichen Trainieren einer Mehrzahl von Besatzungsmitgliedern (115, 135) eines militärischen Wasserfahrzeugs, wobei das Simulationssystem (100) eine erste Simulationsumgebung (110) mit einem physischen Leitstand (112) des Wasserfahrzeugs zum Trainieren einer ersten Gruppe (117) von Besatzungsmitgliedern (115) umfasst,
wobei die erste Simulationsumgebung (110) ein oder mehrere erste physische Steuerelemente (114) des Wasserfahrzeugs umfasst, wobei die ersten physischen Steuerelemente (114) jeweils dazu konfiguriert sind, einen oder mehrere Steuerparameter (155) für den Betrieb des Wasserfahrzeugs einzustellen,
wobei der Leitstand (112) dazu konfiguriert ist, mittels der ersten physischen Steuerelemente (114) eingestellte Steuerparameter (155) zu erfassen und an eine Simulationsschnittstelle (152) des Simulationssystems (100) zu kommunizieren,
wobei das Simulationssystem (100) ferner eine von der ersten Simulationsumgebung (110) räumlich getrennte zweite Simulationsumgebung (130) zum Trainieren einer zweiten Gruppe (137) von Besatzungsmitgliedern (135) umfasst, wobei die zweite Simulationsumgebung (130) technische Mittel (132) umfasst, welche dazu konfiguriert sind, eine visuelle Simulation bereitzustellen, welche ein oder mehrere zumindest teilweise virtuelle Kopien (134) ein oder mehrerer zweiter physischer Steuerelemente zum Einstellen der Steuerparameter (155) umfasst,
wobei die technischen Mittel (132) ferner dazu konfiguriert sind, mittels der Kopien (134) eingestellte Steuerparameter (155) zu erfassen und an die Simulationsschnittstelle (152) des Simulationssystems (100) zu kommunizieren,
wobei die Simulationsschnittstelle (152) des Simulationssystems (100) einen Speicher umfasst, wobei in dem Speicher eine Datenbank (154) mit Definitionen der ein oder mehreren ersten Steuerelemente (114) ) und der ein oder mehrere Kopien (134) der ein oder mehreren zweiten Steuerelemente gespeichert ist, wobei die Definitionen für die definierten ersten Steuerelemente (114) und Kopien (134) der zweiten Steuerelemente jeweils eine Erstpriorisierung für einen simulierten Normalbetrieb des Wasserfahrzeugs festlegen, in welcher die Einstellungen der Steuerparameter (155) gemäß den ersten physischen Steuerelementen (114) gegenüber den Einstellungen gemäß den Kopien (134) der zweiten Steuerelemente als für die Simulation des Wasserfahrzeugs ausschließlich gültige Einstellungen der Steuerparameter (155) priorisiert werden,
wobei das Verfahren umfasst:
auf eine simulierte Abweichung von dem Normalbetrieb des Wasserfahrzeugs hin, wechseln von ein oder mehreren der Erstpriorisierungen zu ein oder mehreren Zweitpriorisierungen, wobei die ein oder mehreren Zweitpriorisierungen für die Abweichung von dem Normalbetrieb Einstellungen ein oder mehrerer der Steuerparameter (155) gemäß ein oder mehreren den Zweitpriorisierungen zugeordneten Kopien (134) der zweiten Steuerelemente gegenüber Einstellungen gemäß ein oder mehreren den Zweitpriorisierungen zugeordneten ersten physischen Steuerelemente (114) als für die Simulation des Wasserfahrzeugs ausschließlich gültige Einstellungen der entsprechenden Steuerparameter (155) priorisieren.

## Claims

1. A simulation system (100) for simultaneously training a plurality of crew members (115, 135) of a military watercraft, wherein the simulation system (100) comprises a first simulation environment (110) with a physical control room (112) of the watercraft for training a first group (117) of crew members (115),
wherein the first simulation environment (110) comprises one or more first physical control elements (114) of the watercraft, wherein the first physical control elements (114) are each configured to set one or more control parameters (155) for operating the watercraft,
wherein the control room (112) is configured to record the control parameters (155) set by means of the first physical control elements (114) and to communicate them to a simulation interface (152) of the simulation system (100),
wherein the simulation system (100) further comprises a second simulation environment (130), spatially separate from the first simulation environment (110), for training a second group (137) of crew members (135), wherein the second simulation environment (130) comprises technical means (132) configured to provide a visual simulation that comprises one or more at least partially virtual copies (134) of one or more second physical control elements (114) of the watercraft for setting the control parameters (155),
wherein the technical means (132) are also configured to record the control parameters (155) set by means of the copies (134) and to communicate them to the simulation interface (152) of the simulation system (100),
wherein the simulation interface (152) of the simulation system (100) comprises a memory, wherein a database (154) containing definitions of one or more first physical control elements (114) and one or more copies (134) of one or more second control elements is stored, wherein the definitions for the defined first control elements (114) and copies (134) of the second control elements each establish a first prioritization for simulated normal operation of the watercraft, in which the settings of the control parameters (155) according to the first physical control elements (114) are prioritized as the exclusively valid control parameter (155) settings for the simulation of the watercraft over the settings according to the copies (134) of the second control elements,
wherein the simulation interface (152) of the simulation system (100) is further configured to switch from one or more first prioritizations to one or more second prioritizations in response to a simulated deviation from the normal operation of the watercraft, wherein the one or more second prioritizations prioritize, for the simulated deviation from normal operation, the settings of one or more control parameters (155) according to one or more copies (134) of the second control elements associated with the second prioritizations over the settings according to one or more first physical control elements (114) associated with the second prioritizations as the exclusively valid settings of the corresponding control parameters (155) for the simulation of the watercraft.

2. The simulation system (100) as claimed in claim 1, wherein the first simulation environment (110) is arranged on a movably mounted platform (116), wherein a plurality of hydraulic, pneumatic, and/or electric actuators (118) is arranged on the platform (116), which are controlled by a motion control system (111) of the platform (116) to simulate the movements of the watercraft during the simulated operation.

3. The simulation system (100) as claimed in any one of claims 1 to 2, wherein the memory of the simulation interface (152) further stores the control parameters (155) currently valid for the simulation of the watercraft.

4. The simulation system (100) as claimed in claim 3, wherein the first prioritizations and the second prioritizations each define write permissions for writing control parameters (155) into the memory of the simulation interface (152).

5. The simulation system (100) as claimed in claim 4, wherein the first prioritizations each specify that the control room (112) of the first simulation environment (110) has write permissions for writing the control parameters (155) set by means of the first physical control elements (114) which are valid in the simulated normal operation of the watercraft, while the technical means (132) of the second simulation environment (130) do not have write permissions for writing the control parameters (155) currently valid for the simulation of the watercraft,
wherein the second prioritizations specify that the technical means (132) of the second simulation environment (130) have write permissions to write the control parameters (155) set by means of the copies (134) of the second control elements associated with the second prioritizations and valid in the simulated deviation from normal operation of the watercraft, while the control room (112) does not have write permissions to write the control parameters (155) that are set by means of the first physical control elements (114) associated with the second prioritizations as the control parameters (155) currently valid for the simulation of the watercraft, or wherein both the control room (112) of the first simulation environment (110) has write permissions to write the control parameters (155) set by means of the first physical control elements (114), and the technical means (132) of the second simulation environment (130) have write permissions to write the control parameters (155) set by means of the copies (134) of the second control elements,
wherein the first prioritizations specify that the control parameters (155) set by means of the first physical control elements (114) and written by the control room (112) are read as the control parameters (155) valid in the simulated normal operation of the watercraft, while the control parameters (155) set by means of the copies (134) of the second control elements and written by the technical means (132) of the second simulation environment (130) are not read,
wherein the second prioritizations specify that the control parameters (155) set by means of the copies (134) of the second control elements associated with the second prioritizations and written by the technical means (132) of the second simulation environment (130) are read as the control parameters (155) valid for the simulated deviation from normal operation of the watercraft, while the control parameters (155) set by means of the first physical control elements (114) associated with the second prioritizations and written by the control room (112) are not read.

6. The simulation system (100) as claimed in any one of claims 1 to 3, wherein the first prioritizations specify that the capture of control parameters (155) set by means of the first physical control elements (114) by the control room (112) in the first simulation environment (110) is enabled, while the capture of control parameters (155) set by means of the copies (134) of the second control elements by the technical means (132) of the second simulation environment (130) is disabled,
wherein the second prioritizations specify that the capture of control parameters (155) set by means of the copies (134) of the second control elements is enabled by the technical means (132) of the second simulation environment (130), while the capture of the control parameters (155) set by means of the first physical control elements (114) by the control room (112) in the first simulation environment (110) is disabled.

7. The simulation system (100) as claimed in any one of the preceding claims, wherein the copies (134) of the second control elements are each a complete virtual 3D model (180) of the respective second control element, wherein the technical means (132) in the second simulation environment (130) comprise one or more output devices with one or more displays for visual output of the virtual 3D models (180), as well as one or more input means for the virtual simulation of operating the virtual 3D models (180) for providing copies (134) of the second control elements or wherein the technical means (132) in the second simulation environment (130) for providing copies (134) of the second control elements comprise one or more tactile elements (182) to physically reproduce the haptic characteristics of one or more second control elements, and wherein the technical means (132) also comprise one or more augmented reality devices which are configured to provide complementary components (184) of the corresponding second control elements in virtual form to the tactile elements (182), wherein the one or more augmented reality devices each comprise one or more displays for visual output of the complementary virtual components (184) of the copies (134) of the second control elements and one or more sensors to capture interactions by the crew members (135) of the second group (137) of crew members (135) using the one or more augmented reality devices with the tactile elements (182) and/or the complementary virtual components (184) when operating the copies (134) of the second control elements.

8. The simulation system (100) as claimed in any one of the preceding claims, wherein the one or more first control elements (114) comprise one or more valves, switches, and/or touch-sensitive elements of the watercraft, and/or
wherein the second control elements comprise one or more valves, switches, and/or touch-sensitive elements of the watercraft.

9. The simulation system (100) as claimed in claim 10, wherein the one or more first control elements (114) each comprise a mechanically operable component, and/or
wherein the one or more second control elements comprise a mechanically operable component.

10. The simulation system (100) as claimed in any one of the preceding claims, wherein the first simulation environment (110) comprises a physical operations center of the watercraft, wherein the first simulation environment (110) comprises, for example, a physical bridge of the watercraft.

11. The simulation system (100) as claimed in any one of the preceding claims, wherein the simulation interface (152) is provided by a simulation computer system (150) that comprises a memory (161) with executable program instructions (162) of a state simulation program for simulating a state of the watercraft and a digital model (158) of the watercraft, as well as a processor (160), wherein execution of the program instructions (162) by the processor (160) causes the simulation computer system (150) to simulate a current state of the watercraft using the digital model (158) of the watercraft and the control parameters (155) valid for the watercraft simulation.

12. The simulation system (100) as claimed in any one of the preceding claims, wherein a switch from the simulated normal operation of the watercraft to the simulated deviation from normal operation of the watercraft occurs when an external command to switch is received via the simulation interface (152) or wherein a switch from the simulated normal operation of the watercraft to the simulated deviation from normal operation of the watercraft occurs automatically via the simulation interface (152) as part of the execution of the state simulation program, if the simulated state of the watercraft involves a malfunction.

13. The simulation system (100) as claimed in any one of the preceding claims, wherein the simulated deviation from normal operation of the watercraft includes a failure of the first group (117) of crew members (115).

14. The simulation system (100) as claimed in any one of the preceding claims, wherein the military watercraft is one of the following: a submarine, an aircraft carrier, a helicopter carrier, a cruiser, a destroyer, a frigate, a corvette, a landing ship, a mine-layer, a mine clearance vessel, a mine hunter, a patrol boat, a fast attack craft, or a reconnaissance ship.

15. A computer-based method for operating a simulation system (100) for simultaneously training a plurality of crew members (115, 135) of a military watercraft, wherein the simulation system (100) comprises a first simulation environment (110) with a physical control room (112) of the watercraft for training a first group (117) of crew members (115),
wherein the first simulation environment (110) comprises one or more first physical control elements (114) of the watercraft, each first physical control element (114) configured to set one or more control parameters (155) for the operation of the watercraft,
wherein the control room (112) is configured to detect the control parameters (155) set by means of the first physical control elements (114) and to communicate them to a simulation interface (152) of the simulation system (100),
wherein the simulation system (100) also comprises a second simulation environment (130), spatially separate from the first simulation environment (110), for training a second group (137) of crew members (135), wherein the second simulation environment (130) comprises technical means (132) which are configured to provide a visual simulation that comprises one or more at least partially virtual copies (134) of one or more second physical control elements of the watercraft for setting control parameters (155),
wherein the technical means (132) are also configured to record the control parameters (155) set by means of the copies (134) and to communicate them to the simulation interface (152) of the simulation system (100),
wherein the simulation interface (152) of the simulation system (100) comprises a memory, in which a database (154) containing definitions of one or more first control elements (114) and one or more copies (134) of one or more second control elements is stored, wherein the definitions for the defined first control elements (114) and copies (134) of the second control elements each establish a first prioritization for simulated normal operation of the watercraft, in which the settings of the control parameters (155) according to the first physical control elements (114) are prioritized as the exclusively valid settings of the control parameters (155) for the simulation of the watercraft over the settings according to the copies (134) of the second control elements,
wherein the method involves:
switching from one or more first prioritizations to one or more second prioritizations in response to a simulated deviation from the normal operation of the watercraft, wherein the one or more second prioritizations prioritize, for the deviation from normal operation, the settings of one or more control parameters (155) according to one or more copies (134) of the second control elements associated with the second prioritizations over the settings according to one or more first physical control elements (114) associated with the second prioritizations as the only valid settings of the corresponding control parameters (155) for the simulation of the watercraft.

## Revendications

1. Système de simulation (100) destiné à former simultanément plusieurs membres d'équipage (115, 135) d'un navire militaire, dans lequel le système de simulation (100) comprend un premier environnement de simulation (110) avec une salle de contrôle physique (112) du navire pour former un premier groupe (117) de membres d'équipage (115),
dans lequel le premier environnement de simulation (110) comprend un ou plusieurs premiers éléments de commande physiques (114) du navire, lesdits premiers éléments de commande physiques (114) étant chacun configurés pour définir un ou plusieurs paramètres de commande (155) destinés au fonctionnement du navire,
dans lequel la salle de commande (112) est configurée pour enregistrer les paramètres de commande (155) réglés au moyen des premiers éléments de commande physiques (114) et pour les transmettre à une interface de simulation (152) du système de simulation (100),
dans lequel le système de simulation (100) comprend en outre un deuxième environnement de simulation (130), spatialement distinct du premier environnement de simulation (110), destiné à la formation d'un deuxième groupe (137) de membres d'équipage (135), dans lequel le deuxième environnement de simulation (130) comprend des moyens techniques (132) configurés pour fournir une simulation visuelle comprenant une ou plusieurs copies au moins partiellement virtuelles (134) d'un ou de plusieurs deuxièmes éléments de commande physiques (114) de l'embarcation, destinées à régler les paramètres de commande (155),
dans lequel les moyens techniques (132) sont également configurés pour enregistrer les paramètres de commande (155) réglés au moyen des copies (134) et pour les communiquer à l'interface de simulation (152) du système de simulation (100),
dans laquelle l'interface de simulation (152) du système de simulation (100) comprend une mémoire, dans laquelle est stockée une base de données (154) contenant les définitions d'un ou plusieurs premiers éléments de commande physiques (114) et d'une ou plusieurs copies (134) d'un ou plusieurs seconds éléments de commande, les définitions des premiers éléments de commande définis (114) et des copies (134) des seconds éléments de commande établissent chacune une première hiérarchie de priorité pour le fonctionnement normal simulé de l'embarcation, dans laquelle les réglages des paramètres de commande (155) selon les premiers éléments de commande physiques (114) sont prioritaires en tant que réglages des paramètres de commande (155) exclusivement valides pour la simulation de l'embarcation par rapport aux réglages correspondant aux copies (134) des seconds éléments de commande,
l'interface de simulation (152) du système de simulation (100) étant en outre configurée pour passer d'une ou plusieurs premières hiérarchies à une ou plusieurs deuxièmes hiérarchies en réponse à un écart simulé par rapport au fonctionnement normal de l'embarcation, lesdites une ou plusieurs deuxièmes hiérarchies donnant la priorité, pour l'écart simulé par rapport au fonctionnement normal, les réglages d'un ou plusieurs paramètres de commande (155) selon une ou plusieurs copies (134) des seconds éléments de commande associés aux secondes priorités, par rapport aux réglages selon un ou plusieurs premiers éléments de commande physiques (114) associés aux secondes priorités, en tant que réglages valides exclusivement pour la simulation de l'embarcation.

2. Le système de simulation (100) selon la revendication 1, dans lequel le premier environnement de simulation (110) est disposé sur une plate-forme (116) montée de manière mobile, dans lequel une pluralité d'actionneurs hydrauliques, pneumatiques et/ou électriques (118) sont disposés sur la plate-forme (116), lesquels sont commandés par un système de commande de mouvement (111) de la plate-forme (116) afin de simuler les mouvements de l'embarcation pendant l'opération simulée.

3. Système de simulation (100) selon l'une quelconque des revendications 1 à 2, dans lequel la mémoire de l'interface de simulation (152) stocke en outre les paramètres de commande (155) actuellement valables pour la simulation de l'embarcation.

4. Système de simulation (100) selon la revendication 3, dans lequel les premières priorités et les deuxièmes priorités définissent chacune des autorisations d'écriture pour l'écriture de paramètres de commande (155) dans la mémoire de l'interface de simulation (152).

5. Système de simulation (100) selon la revendication 4, dans lequel les premières hiérarchisations spécifient chacune que la salle de contrôle (112) du premier environnement de simulation (110) dispose de droits d'écriture pour écrire les paramètres de commande (155) définis au moyen des premiers éléments de commande physiques (114) qui sont valides dans le fonctionnement normal simulé de l'embarcation, tandis que les moyens techniques (132) du deuxième environnement de simulation (130) ne disposent pas de droits d'écriture pour écrire les paramètres de commande (155) actuellement valides pour la simulation de l'embarcation,
les deuxièmes hiérarchisations précisant que les moyens techniques (132) du deuxième environnement de simulation (130) disposent de droits d'écriture pour écrire les paramètres de commande (155) définis au moyen des copies (134) des deuxièmes éléments de commande associés aux deuxièmes hiérarchisations et valables dans le cadre de la simulation d'un écart par rapport au fonctionnement normal de l'embarcation, tandis que la salle de contrôle (112) ne dispose pas des droits d'écriture pour modifier les paramètres de commande (155) définis au moyen des premiers éléments de commande physiques (114) associés aux deuxièmes priorités en tant que paramètres de commande (155) actuellement valables pour la simulation de l'embarcation, ou dans lequel à la fois la salle de contrôle (112) du premier environnement de simulation (110) dispose de droits d'écriture pour enregistrer les paramètres de commande (155) définis au moyen des premiers éléments de commande physiques (114), et les moyens techniques (132) du deuxième environnement de simulation (130) disposent de droits d'écriture pour enregistrer les paramètres de commande (155) définis au moyen des copies (134) des seconds éléments de commande,
les premières priorités spécifiant que les paramètres de commande (155) réglés au moyen des premiers éléments de commande physiques (114) et enregistrés par la salle de contrôle (112) sont considérés comme les paramètres de commande (155) valides dans le cadre du fonctionnement normal simulé de l'embarcation, tandis que les paramètres de commande (155) définis au moyen des copies (134) des seconds éléments de commande et enregistrés par les moyens techniques (132) du second environnement de simulation (130) ne sont pas pris en compte,
les deuxièmes priorités spécifiant que les paramètres de commande (155) définis au moyen des copies (134) des deuxièmes éléments de commande associés aux deuxièmes priorités et enregistrés par les moyens techniques (132) du deuxième environnement de simulation (130) sont pris en compte comme paramètres de commande (155) valables pour l'écart simulé par rapport au fonctionnement normal de l'embarcation, tandis que les paramètres de commande (155) définis au moyen des premiers éléments de commande physiques (114) associés aux deuxièmes priorités et enregistrés par la salle de contrôle (112) ne sont pas pris en compte.

6. Le système de simulation (100) selon l'une quelconque des revendications 1 à 3, dans lequel les premières priorités spécifient que la capture des paramètres de commande (155) définis au moyen des premiers éléments de commande physiques (114) par la salle de contrôle (112) dans le premier environnement de simulation (110) est activée, tandis que la capture des paramètres de commande (155) définis au moyen des copies (134) des seconds éléments de commande par les moyens techniques (132) du second environnement de simulation (130) est désactivée,
les deuxièmes priorités spécifiant que la saisie des paramètres de commande (155) définis au moyen des copies (134) des deuxièmes éléments de commande est activée par les moyens techniques (132) du deuxième environnement de simulation (130), tandis que la capture des paramètres de commande (155) définis au moyen des premiers éléments de commande physiques (114) par la salle de contrôle (112) dans le premier environnement de simulation (110) est désactivée.

7. Système de simulation (100) selon l'une quelconque des revendications précédentes, dans lequel les copies (134) des seconds éléments de commande constituent chacune un modèle virtuel 3D complet (180) du second élément de commande respectif, dans lequel les moyens techniques (132) dans le second environnement de simulation (130) comprennent un ou plusieurs dispositifs de sortie dotés d'un ou plusieurs écrans pour l'affichage visuel des modèles virtuels en 3D (180), ainsi qu'un ou plusieurs moyens d'entrée pour la simulation virtuelle de l'utilisation des modèles virtuels en 3D (180) afin de fournir des copies (134) des seconds éléments de commande, ou dans lequel les moyens techniques (132) dans le second environnement de simulation (130) destinés à fournir des copies (134) des seconds éléments de commande comprennent un ou plusieurs éléments tactiles (182) pour reproduire physiquement les caractéristiques haptiques d'un ou plusieurs seconds éléments de commande, et dans lequel les moyens techniques (132) comprennent également un ou plusieurs dispositifs de réalité augmentée qui sont configurés pour fournir des composants complémentaires (184) des seconds éléments de commande correspondants sous forme virtuelle aux éléments tactiles (182), lesdits un ou plusieurs dispositifs de réalité augmentée comprenant chacun un ou plusieurs écrans pour l'affichage visuel des composants virtuels complémentaires (184) des copies (134) des seconds éléments de commande, ainsi qu'un ou plusieurs capteurs destinés à détecter les interactions des membres d'équipage (135) du second groupe (137) de membres d'équipage (135) utilisant le ou les dispositifs de réalité augmentée avec les éléments tactiles (182) et/ou les composants virtuels complémentaires (184) de l' , lors de l'actionnement des copies (134) des seconds éléments de commande.

8. Système de simulation (100) selon l'une quelconque des revendications précédentes, dans lequel le ou les premiers éléments de commande (114) comprennent une ou plusieurs vannes, commutateurs et/ou éléments tactiles de l'embarcation, et/ou
dans lequel les seconds éléments de commande comprennent une ou plusieurs vannes, commutateurs et/ou éléments tactiles de l'embarcation.

9. Système de simulation (100) selon la revendication 10, dans lequel le ou les premiers éléments de commande (114) comprennent chacun un composant actionnable mécaniquement, et/ou
dans lequel le ou les seconds éléments de commande comprennent un composant actionnable mécaniquement.

10. Système de simulation (100) selon l'une quelconque des revendications précédentes, dans lequel le premier environnement de simulation (110) comprend un centre de commande physique de l'embarcation, dans lequel le premier environnement de simulation (110) comprend, par exemple, une passerelle physique de l'embarcation.

11. Système de simulation (100) selon l'une quelconque des revendications précédentes, dans lequel l'interface de simulation (152) est fournie par un système informatique de simulation (150) qui comprend une mémoire (161) contenant des instructions de programme exécutables (162) d'un programme de simulation d'état destiné à simuler un état de l'embarcation et un modèle numérique (158) de l'embarcation, ainsi qu'un processeur (160), dans lequel l'exécution des instructions de programme (162) par le processeur (160) amène le système informatique de simulation (150) à simuler un état actuel de l'embarcation à l'aide du modèle numérique (158) de l'embarcation et des paramètres de contrôle (155) valables pour la simulation de l'embarcation.

12. Système de simulation (100) selon l'une quelconque des revendications précédentes, dans lequel un passage du fonctionnement normal simulé de l'embarcation à l'écart simulé par rapport au fonctionnement normal de l'embarcation se produit lorsqu'une commande externe de commutation est reçue via l'interface de simulation (152) ou dans lequel un passage du fonctionnement normal simulé de l'embarcation à l'écart simulé par rapport au fonctionnement normal de l'embarcation se produit automatiquement via l'interface de simulation (152) dans le cadre de l'exécution du programme de simulation d'état, si l'état simulé de l'embarcation implique un dysfonctionnement.

13. Système de simulation (100) selon l'une quelconque des revendications précédentes, dans lequel l'écart simulé par rapport au fonctionnement normal de l'embarcation comprend une défaillance du premier groupe (117) de membres d'équipage (115).

14. Système de simulation (100) selon l'une quelconque des revendications précédentes, dans lequel l'embarcation militaire est l'une des suivantes : un sous-marin, un porte-avions, un porte-hélicoptères, un croiseur, un destroyer, une frégate, une corvette, une navire de débarquement, un poseur de mines, un navire de déminage, un chasseur de mines, un patrouilleur, une embarcation d'attaque rapide ou un navire de reconnaissance.

15. Procédé informatique destiné à faire fonctionner un système de simulation (100) pour former simultanément une pluralité de membres d'équipage (115, 135) d'un navire militaire, dans lequel le système de simulation (100) comprend un premier environnement de simulation (110) avec une salle de contrôle physique (112) du navire pour former un premier groupe (117) de membres d'équipage (115),
dans lequel le premier environnement de simulation (110) comprend un ou plusieurs premiers éléments de commande physiques (114) du navire, chaque premier élément de commande physique (114) étant configuré pour définir un ou plusieurs paramètres de commande (155) pour le fonctionnement du navire,
dans lequel la salle de commande (112) est configurée pour détecter les paramètres de commande (155) réglés au moyen des premiers éléments de commande physiques (114) et pour les transmettre à une interface de simulation (152) du système de simulation (100),
dans lequel le système de simulation (100) comprend également un deuxième environnement de simulation (130), spatialement distinct du premier environnement de simulation (110), destiné à la formation d'un deuxième groupe (137) de membres d'équipage (135), dans lequel le deuxième environnement de simulation (130) comprend des moyens techniques (132) qui sont configurés pour fournir une simulation visuelle comprenant une ou plusieurs copies au moins partiellement virtuelles (134) d'un ou de plusieurs deuxièmes éléments de commande physiques de l'embarcation pour régler les paramètres de commande (155),
dans lequel les moyens techniques (132) sont également configurés pour enregistrer les paramètres de commande (155) réglés au moyen des copies (134) et pour les transmettre à l'interface de simulation (152) du système de simulation (100),
dans lequel l'interface de simulation (152) du système de simulation (100) comprend une mémoire, dans laquelle est stockée une base de données (154) contenant des définitions d'un ou plusieurs premiers éléments de commande (114) et d'une ou plusieurs copies (134) d'un ou plusieurs seconds éléments de commande, les définitions des premiers éléments de commande définis (114) et des copies (134) des seconds éléments de commande établissent chacune une première hiérarchie de priorité pour le fonctionnement normal simulé de l'embarcation, dans laquelle les réglages des paramètres de commande (155) selon les premiers éléments de commande physiques (114) sont prioritaires en tant que réglages exclusivement valides des paramètres de commande (155) pour la simulation de l'embarcation par rapport aux réglages correspondant aux copies (134) des seconds éléments de commande,
le procédé comprenant :
le passage d'une ou plusieurs premières hiérarchies à une ou plusieurs deuxièmes hiérarchies en réponse à un écart simulé par rapport au fonctionnement normal de l'embarcation, lesdites une ou plusieurs deuxièmes hiérarchies accordant la priorité, pour l'écart par rapport au fonctionnement normal d' , les réglages d'un ou plusieurs paramètres de commande (155) selon une ou plusieurs copies (134) des seconds éléments de commande associés aux secondes priorités, par rapport aux réglages selon un ou plusieurs premiers éléments de commande physiques (114) associés aux secondes priorités, en tant que seuls réglages valides des paramètres de commande correspondants (155) pour la simulation de l'embarcation.
